(19)

Europäisches
Patentamt
European
Patent Office
Office européen
des brevets

(11) **EP 4 268 614 A1**

(12) **EUROPEAN PATENT APPLICATION**
published in accordance with Art. 153(4) EPC

(43) Date of publication:
**01.11.2023 Bulletin 2023/44**

(21) Application number: **21915342.6**

(22) Date of filing: **28.12.2021**

(51) International Patent Classification (IPC):
*A23L 27/00* $^{(2016.01)}$   *A61K 47/02* $^{(2006.01)}$
*A61K 47/24* $^{(2006.01)}$   *A61K 47/26* $^{(2006.01)}$
*A61K 47/28* $^{(2006.01)}$   *A61K 47/46* $^{(2006.01)}$
*A23L 2/60* $^{(2006.01)}$

(52) Cooperative Patent Classification (CPC):
**A23L 2/60; A23L 27/00; A61K 47/02; A61K 47/24;
A61K 47/26; A61K 47/28; A61K 47/46**

(86) International application number:
**PCT/JP2021/048994**

(87) International publication number:
**WO 2022/145484 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2020 JP 2020218723
03.09.2021 JP 2021144320**

(71) Applicant: **Suntory Holdings Limited
Osaka 530-8203 (JP)**

(72) Inventors:
• **YOSHIDA Junki
Kawasaki-shi, Kanagawa 211-0067 (JP)**

• **TERAMOTO Yuki
Kawasaki-shi, Kanagawa 211-0067 (JP)**
• **OHKURI Tadahiro
Kawasaki-shi, Kanagawa 211-0067 (JP)**
• **YAMASHITA Jumpei
Kawasaki-shi, Kanagawa 211-0067 (JP)**
• **NAGAO Koji
Kawasaki-shi, Kanagawa 211-0067 (JP)**
• **YOKOO Yoshiaki
Kawasaki-shi, Kanagawa 211-0067 (JP)**

(74) Representative: **Mewburn Ellis LLP
Aurora Building
Counterslip
Bristol BS1 6BX (GB)**

(54) **ORAL COMPOSITION WITH INCREASED SWEETNESS**

(57)    Provided is an oral composition comprising (a) a high-intensity sweetener in an amount corresponding to a sweetness intensity X1, (b) an intrinsic phospholipid, (c) 60 mg/100 mL or less of sodium, and (d) a foreign phospholipid in an amount less than a taste recognition threshold, wherein the oral composition has a sweetness of a sweetness intensity X2 exhibited by the components (a) and (b), and a sweetness of a sweetness intensity X3 exhibited by the components (a) to (d), respectively, and 0.1 < X2 < X3 is satisfied.

EP 4 268 614 A1

**Description**

TECHNICAL FIELD

The present invention relates to an oral composition with an enhanced sweetness, a method for producing such an oral composition, a method for enhancing the sweetness of an oral composition, a concentrate for providing an oral composition, etc.

BACKGROUND ART

Humans have five sensory systems, and the sense of taste is one of the sensory systems of humans. The taste receptor organ to receive tastes is called taste buds, which exist on the fungiform papillae existing over a wide area, mainly on the tip of the tongue, on the vallate papillae existing on a limited area of the back of the tongue, and on the foliate papillae. The taste buds are a cell assembly composed of elongate cells, called taste cells, and basal cells. The taste cells protrude microvilli toward the tongue surface, and form synapses at bottom of the cells with taste nerve fibers entering the taste buds. Tastes we usually sense are transmitted as taste information via the taste nerves to the brain, where the tastes are perceived. Known taste receptors of sweetness include T1R2 and T1R3. T1R2 and T1R3 are reported to form heterodimers (Non-patent Literatures 1 to 3).

Although various studies have been made on the sense of taste, little has been revealed yet in this field. We usually experience various tastes of foods. Foods that seem to be tasty have appropriately mixed and well-harmonized tastes. The taste of foods may be tasted as a single taste in some cases, but is often tasted as a mixed taste of various tastes, which are associated with one another.

Meanwhile, foods have been required to have lower calories in addition to a good taste in recent years. This relates to a fact that lifestyle-related diseases such as obesity and diabetes are regarded as a problem. However, to produce lower-calorie foods, their sugar concentration has to be maintained low. This is an obstruction in the case of providing foods that exhibit low calories and a good taste. In order to overcome such a problem, attempts have been made to increase a sweetness provided by a sweetener (Patent Literatures 1 to 11).

CITATION LIST

PATENT LITERATURE

Patent Literature 1: WO 2018/225817
Patent Literature 2: WO 2020/116624
Patent Literature 3: WO 2020/116626
Patent Literature 4: WO 2020/116627
Patent Literature 5: WO 2020/116628
Patent Literature 6: WO 2020/116633
Patent Literature 7: WO 2020/116634
Patent Literature 8: WO 2020/116637
Patent Literature 9: WO 2020/116638
Patent Literature 10: WO 2020/116639
Patent Literature 11: WO 2020/116641

NON-PATENT LITERATURE

Non-Patent Literature 1: Zhao G. Q., Zhang Y., Hoon M. A., Chandrashekar J., Erlenbach I., Ryba N. J. P., and Zuker1 C. S., Cell, 2003, Vol. 115, 255-266
Non-Patent Literature 2: Li X, Staszewski L, Xu H, Durick K, Zoller M, Adler E., Proc Natl Acad Sci USA. 2002,99(7), 4692-4696.
Non-Patent Literature 3: Fernstrom J. D., Munger S. D., Sclafani A., de Araujo I. E., Roberts A., and Molinary S., J. Nutr. 2012. Vol. 142: 11345-11415

SUMMARY OF INVENTION

TECHNICAL PROBLEM

Under the above circumstances, the development of a further method capable of enhancing a sweetness of a sweetener has been much awaited.

MEANS FOR SOLVING THE PROBLEMS

The present inventors succeeded for the first time in enhancing a sweetness of a high-intensity sweetener by containing sodium and a foreign phospholipid in a concentration so low as to not be detectable by the human.
That is, the present invention comprises inventions of the following embodiments.

[1] An oral composition comprising:

(a) a high-intensity sweetener in an amount corresponding to a sweetness intensity X1,
(b) an intrinsic phospholipid,
(c) 60 mg/100 mL or less of sodium, and
(d) a foreign phospholipid in an amount less than a taste recognition threshold,

wherein the oral composition has a sweetness of a sweetness intensity X2 exhibited by the components (a) and (b), and a sweetness of a sweetness intensity X3 exhibited by the components (a) to (d), and 0.1 < X2 < X3 is satisfied.
[2] The oral composition according to [1], wherein the phospholipid has a fatty acid having 14 or more carbon atoms.
[3] The oral composition according to [1] or [2], having a sweetness of a sweetness intensity X4 exhibited by the components (a) to (c), wherein 0.1 < X2 < X4 < X3 is satisfied.
[4] The oral composition according to any one of [1] to [3], further comprising a low-intensity sweetener.
[5] The oral composition according to any one of [1] to [4], wherein the high-intensity sweetener comprises a high-intensity sweetener selected from a stevia extract, a Luo han guo extract, a steviol glycoside, a mogroside, and a combination thereof.
[6] The oral composition according to [4] or [5], wherein the low-intensity sweetener comprises a low-intensity sweetener selected from glucose, sucrose, fructose, maltose, a high-fructose corn syrup, lactose, psicose, allose, tagatose, xylose, ribose, and a combination thereof.
[7] The oral composition according to any one of [1] to [6], which is a beverage.
[8] The oral composition according to [7], wherein the beverage is selected from a coffee beverage, a milk beverage, a milk-based beverage, and a soymilk beverage.
[9] The oral composition according to any one of [1] to [8], wherein the intrinsic phospholipid is a phospholipid from coffee bean, and the foreign phospholipid is a phospholipid from a material selected from soybean, rapeseed, sunflower, oil palm, sesame, corn, peanut, olive, cotton, linum, egg yolk, and milk.
[10] A method for producing the oral composition according to any one of [1] to [9] comprising, to a raw material of the oral composition comprising the intrinsic phospholipid:

(a) adding the high-intensity sweetener in an amount corresponding to a sweetness intensity X1,
(b) adding the sodium to obtain a sodium content in the composition of 60 mg/100 mL or less, and
(c) adding the foreign phospholipid in an amount less than a taste recognition threshold.

[11] A method for enhancing a sweetness of an oral composition provided by a high-intensity sweetener, the method comprising, in a production of an oral composition comprising an intrinsic phospholipid:

(a) adding a high-intensity sweetener in an amount of a taste recognition threshold or more,
(b) adding sodium to obtain a sodium content in the composition of 60 mg/100 mL or less, and
(c) adding a foreign phospholipid in an amount less than a taste recognition threshold.

[12] An oral composition comprising:

(a) about 20 to about 600 ppm of a high-intensity sweetener,
(b) an intrinsic phospholipid,
(c) 60 mg/100 mL or less of sodium, and
(d) less than about 250 μg/mL of a phospholipid.

ADVANTAGEOUS EFFECTS OF INVENTION

The present invention provides an oral composition having, not a plain sweetness obtained by an additional amount of a high-intensity sweetener used, but an enhanced sweetness and texture.

BRIEF DESCRIPTION OF DRAWINGS

FIG. 1 illustrates graphs of the concentration of free fatty acid in respective lipid samples.
FIG. 2 illustrates graphs of normalized peak area values of LPC in the respective lipid samples.
FIG. 3 illustrates graphs of normalized peak area values of PC in the respective lipid samples.
FIG. 4 is a diagram illustrating increase of texture of sweet beverages containing rebaudioside D caused by phospholipids respectively from soybean (A), oil palm (B), rapeseed (C), and sunflower (D), and sodium.
FIG. 5 is a diagram illustrating increase of texture of sweet beverages containing mogroside V caused by phospholipids from soybean and sodium.
FIG. 6 is a diagram illustrating increase of texture of sweet beverages containing rebaudioside D caused by phospholipids from soybean.

DESCRIPTION OF EMBODIMENTS

Hereinafter, the present invention will be described in detail. The following embodiments are examples to describe the present invention and do not intend to limit the present invention only to these embodiments. The present invention can be carried out in various embodiments without departing from the spirit of the present invention.

Note that all of the literatures, laid-open publications, patent publications, and other patent literatures cited herein are deemed to be incorporated by reference into the present description. The present specification incorporates the contents of the specifications and the drawings of Japanese Patent Applications No. 2020-218723 filed on December 28, 2020, and Japanese Patent Applications No. 2021-144320, filed on September 3, 2021, from which the present application claims priority.

As used herein, for example, the designation "content of a component A is X mg/100 mL" regarding a beverage means that "X mg of a component A is contained in 100 mL of a beverage". A specific gravity of a beverage is approximately 1, and thus "mg/100 g" in a beverage is considered to be the same as "mg/100 mL". When it is not suitable to use the volume as the denominator of the unit, such as in case of a solid composition, the denominator shall be replaced by the mass (for example, "mg/100 mL" shall be replaced by "mg/100 g"). For example, the designation "content of a component B is Y ppm" regarding a beverage means that "Y ppm of a component B is contained with respect to the total amount (100 mass%) of a beverage".

1. Oral composition in which sweetness exhibited by high-intensity sweetener is increased

The present invention provides the following oral composition (hereinafter referred to as "the oral composition of the present invention") as the first embodiment.
An oral composition comprising:

(a) a high-intensity sweetener in an amount corresponding to a sweetness intensity X1,
(b) an intrinsic phospholipid,
(c) 60 mg/100 mL or less of sodium, and
(d) a foreign phospholipid in an amount less than a taste recognition threshold,

wherein the oral composition has a sweetness of a sweetness intensity X2 exhibited by the components (a) and (b), and a sweetness of a sweetness intensity X3 exhibited by the components (a) to (d), respectively, and $0.1 < X2 < X3$ is satisfied.

In other words, in the oral composition of the present invention, the sweetness of the sweetness intensity X2 obtained by the combination of the component (a): a high-intensity sweetener in an amount corresponding to a sweetness intensity X1, and the component (b): an intrinsic phospholipid is enhanced to a sweetness intensity X3 owing to the presence of the components (c): 60 mg/100 mL or less of sodium and (d): a foreign phospholipid in an amount less than a taste recognition threshold ($0.1 < X2 < X3$ is satisfied herein). The present invention can comprise, in addition to these components (a) to (d), additional components such as a sweetener other than the component (a), an acidulant, a flavor, a vitamin, pigments, an antioxidant, a preservative, a seasoning, an extract, a pH adjuster, and a quality stabilizer. The oral composition of an embodiment of the present invention does not contain a sweet component as a sweetener in addition to (a) a high-intensity sweetener in an amount corresponding to a sweetness intensity X1. The oral composition of another embodiment of the present invention may contain a sweet component as a sweetener in addition to (a) a high-intensity sweetener in an amount corresponding to a sweetness intensity X1.

[Oral composition]

As used herein, the "oral composition" is a solid, a semisolid, a semifluid, a liquid, or a mixture of these, and a general term for any orally eatable compositions. The oral composition of the present invention encompasses foods and the foods encompass beverages. Examples of the oral composition of the present invention include general foods, nutritionally supplementary foods, health foods, functional foods, foods for toddler, and foods for the aged.

The nutritionally supplementary foods refer to foods with a fortified specific nutritional component. The health foods refer to foods considered to be healthy or beneficial to health and include nutritionally supplementary foods, natural foods, and diet foods. The functional foods refer to foods to supply nutritional components serving regulatory functions of the body and have the same definition as food for specified health use. The foods for toddler refer to foods to feed children aged up to about 6 years old. The foods for the aged refer to foods treated for easier digestion and absorption when compared with untreated foods.

The form of the oral composition is not particularly limited and can be in various forms. Examples of the form include beverages, snacks, and supplements. The beverage can be an alcoholic beverage or non-alcoholic beverage. Examples of the non-alcoholic beverage include non-alcoholic beers, malt beverages, probiotic beverages, cocoas, isotonic beverages, nutrient beverages, tea-based beverages, coffee beverages, carbonated beverages, functional beverages, fruit- and vegetable-based beverages, milk-based beverages, milk beverages, flavored waters, and soymilk beverages, but not limited thereto.

A coffee beverage refers to a beverage product that is produced using a coffee content as a raw material. The type of the product includes, but are not particularly limited to, for instance, a "coffee", a "coffee beverage", a "coffee-containing soft drink", a "coffee-containing carbonated drink", a "decaffeinated coffee" defined in the "Fair Competition Code for Coffee Beverage Labeling" of Japan. A beverage produced using a coffee content as a raw material, if having a milk solid content of 3.0 mass% or more, may be treated as a "milk beverage" under the application of the "Fair Competition Code for Drinking Milk Labeling" of Japan.

The coffee content (hereinafter, sometimes referred to as an extract of roasted coffee beans) here refers to a solution containing a component from coffee beans. Examples thereof include a coffee liquid extract, that is, a solution extracted from roasted and ground coffee beans using water, hot water or the like. Further examples of the coffee content include a solution in an appropriate amount adjusted with water or hot water from a coffee extract obtained by concentrating a coffee liquid extract or instant coffee obtained by drying a coffee liquid extract.

The type of the coffee beans for use in the coffee beverage is not particularly limited. Examples of the cultivated tree species include Arabica species, Robusta species and Liberica species. Examples of the coffee cultivar include Mocha, Brazil, Columbia, Guatemala, Blue Mountain, Kona, Mandheling and Kilimanjaro. One type of coffee bean can be used or plural types of coffee beans can be blended for use. A roasting method for roasted coffee beans is not particularly limited, and a roasting temperature or a roasting environment is not limited by any means. Although a usual method can be adopted, the roasting degree, L-value, of the coffee beans is preferably 18 to 24. An extraction method from the roasted coffee beans is not limited by any means, and examples thereof include a method of performing extraction for 10 seconds to 30 minutes using water or hot water (0 to 100°C) from a coarsely, medium or finely ground product of roasted coffee beans. The extraction method can be a drip method, a siphon method, a boiling method, a jet method, a continuous method or the like.

A milk content (component from milk) such as milk, bovine milk or a dairy product can be added to the coffee beverage. The coffee beverage of the present invention can be a decaf beverage or can contain caffeine. In the case of containing caffeine, its concentration is not particularly limited, but is preferably on the order of 40 mg/100 mL to 100 mg/100 mL. The concentration of chlorogenic acid in the coffee beverage of the present invention is not particularly limited, but is preferably on the order of 15 to 85 mg/100 mL. The form of the coffee beverage is not limited and can be, for example, a concentrated coffee extract or a beverage form where instant coffee is dissolved, or can be a coffee beverage form packed in a container, which is contained and packed in a container such as a can or a PET bottle.

The non-alcoholic beers as used herein mean carbonated beverages having a beer-like flavor and are non-fermented non-alcoholic type substantially free of alcohols. The non-alcoholic beers herein do not exclude beverages containing alcohol in a so extremely small amount that cannot be detected.

When the composition of the present invention is a tea-based beverage, it is preferable to be an English tea-based beverage or a sugar-free tea beverage. Examples of the sugar-free tea beverage include green tea beverages, oolong tea beverages, roasted barley tea beverages, roasted brown rice tea beverages, tear grass tea beverages, and sugar-free English tea beverages. Examples of the English tea-based beverage include a tea with milk.

It is preferable for the form of carbonated beverages to be cola-flavored beverages, clear carbonated beverages, ginger ales, fruit juice-based carbonated beverages, or carbonated beverages containing milk or sugar-free carbonated beverage. The functional beverages include isotonic beverages, energy beverages, health support dinks and jelly beverages in pouch.

Examples of the fruit- and vegetable-based beverage include 100% fruit juice beverages, beverages containing fruits, soft beverages containing a low concentration of a fruit juice, fruit grains-containing fruit beverages, and beverages with flesh of fruits. The milk beverages include coffee milk, fruit milk, and the like, the milk-based beverages include probiotic beverages, soft beverages containing milk, and the like. A milk beverage contains a component having a milk solid of 3.0% or more in a weight percentage according to "Fair Competition Code for Labeling Drinking Milk" of Japan.

The alcoholic beverages refer to beverages containing an alcohol raw material. Examples of the alcohol raw material include brewed liquors, distilled liquors, and mixed liquors. Examples of the brewed liquor include wines and beers. The alcoholic beverages herein can be any beverages containing detectable alcohol and, for examples, contain alcohol of 1 vol% or more, 2 vol% or more, 3 vol% or more, 4 vol% or more, and 5 vol% or more.

Examples of the processed food include processed foods of grains, seafoods and meats (breads, noodles, tortillas, pastas, hams, bacons, sausages, kamaboko, ageten, and hanpen).

Examples of the snack include candies, jams, chewing gums, ice creams, snack confectionary, cookies, biscuits, cakes, wafers, sweet breads, chocolates, Japanese sweets, but not limited thereto.

The oral composition of the present invention can be in a form of a pharmaceutical product or a quasi-drug such as fine granules, tablets, granules, powders, capsules (including soft capsules and hard capsules), chewable tablets, syrups, mouthwashes, tooth pastes, oral ointments, gurgles, or sprays for throat, or in a processed form such as natural liquid meals, semiliquid meals, semisolid meals, polymeric formulae, or component nutritional meals, health tonics, enteral nutrients in which the composition of the present invention is contained in proteins, saccharides, fats, trace elements, vitamins, emulsifiers, and flavors. Thus, the present invention also provides oral products such as pharmaceutical products, quasi-drugs, natural liquid meals, semi-liquid meals, semi-solid meals, polymeric formulae, component nutritional meals, health tonics, and enteral nutrients comprising the components (a) to (d) wherein an amount of the component (c) is 60 mg/100 mL or less and an amount of the component (d) is less than a taste recognition threshold. Note that the oral product is a general term for any products introduced into the mouth whether or not ingested.

Further, the oral composition of the present invention can be sterilized while packed in a container.

[Sweetness intensity]

As used herein, the "sweetness intensity" means an intensity of sweetness of a substance. For example, when the sweetness intensity of sucrose per unit concentration Brix 1 is defined as a degree of sweetness of 1, a degree of sweetness of glucose is 0.6 to 0.7 (median value 0.65). A numerical value obtained by multiplying this degree of sweetness by a concentration Brix value of glucose is the sweetness intensity of glucose. Thus, when a concentration of glucose is Brix 1.5, the sweetness intensity of glucose is 0.65 × 1.5 = 0.975.

Table 1

| Sugar (D-form) | Degree of sweetness |
|---|---|
| Sucrose | 1 |
| Glucose | 0.6 to 0.7 |
| Fructose | 1.3 to 1.7 |
| Maltose | 0.4 |
| Fructooligosaccharide | 0.6 |
| Maltooligosaccharide | 0.3 |
| Isomaltooligosaccharide | 0.4 to 0.5 |
| Galactooligosaccharide | 0.7 |
| High-fructose corn syrup | 0.8 to 0.9 |
| Lactose | 0.2 to 0.3 |
| Psicose | 0.7 |
| Allose | 0.8 |

(continued)

| Sugar (D-form) | Degree of sweetness |
|---|---|
| Tagatose | 0.9 |

The oral composition of the present invention contains, as described above, a high-intensity sweetener having a good taste quality in an amount corresponding to a sweetness intensity X1 and has a sweetness having a sweetness intensity X2 exhibited by the components (a) to (c), and a sweetness intensity X3 exhibited by the components (a) to (d), and 0.1 < X2 < X3 is satisfied. When the high-intensity sweetener of the component (a) comprises a combination of a plurality of sweet substances, the amount of the high-intensity sweetener in the component (a) corresponds to the combined amount of all these sweet substances.

X1 in the "sweetness intensity X1" may be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0. 1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, or 4.0 to 11.5.

X1 may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1. 0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11. 0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3. 5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4. 0 to 15.0, 4.0 to 16.0, 4.0 to 17.0, or 4.0 to 18.0.

The amount corresponding to a sweetness intensity X1 of a high-intensity sweetener refers to an amount which provides a sweetness of a sweetness intensity X1 under the conditions when the high-intensity sweetener is dissolved in water having the same volume as the oral composition of the present invention at 20°C.

Further, the amount of a high-intensity sweetener may be Pa ppm and Pa ppm herein refers to an amount corresponding to a sweetness intensity X1. The Pa herein can be a value of about 1 to about 800, about 5 to about 800, about 10 to about 800, about 15 to about 800, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, or about 55 to about 490.

The Pa may also be a value of 1 to 1500, 1 to 1200, 5 to 1200, 1 to 1000, 5 to 1000, 10 to 1000, 1 to 900, 5 to 900, 10 to 900, 15 to 900, 20 to 900, 25 to 900, 30 to 900, 35 to 900, 40 to 900, 45 to 900, 50 to 900, 55 to 900, 1 to 800, 5 to 800, 10 to 800, 15 to 800, 20 to 800, 25 to 800, 30 to 800, 35 to 800, 40 to 800, 45 to 800, 50 to 800, 55 to 800, 1 to 700, 5 to 700, 10 to 700, 15 to 700, 20 to 700, 25 to 700, 30 to 700, 35 to 700, 40 to 700, 45 to 700, 50 to 700, 55 to 700, 1 to 600, 5 to 600, 10 to 600, 15 to 600, 20 to 600, 25 to 600, 30 to 600, 35 to 600, 40 to 600, 45 to 600, 50 to 600, 55 to 600, 1 to 550, 1 to 540, 1 to 530, 1 to 520, 1 to 510, 1 to 505, 1 to 500, 1 to 495, 1 to 490, 5 to 550, 5 to 540, 5 to 530, 5 to 520, 5 to 510, 5 to 505, 5 to 500, 5 to 495, 5 to 490, 10 to 550, 10 to 540, 10 to 530, 10 to 520, 10 to 510, 10 to 505, 10 to 500, 10 to 495, 10 to 490, 15 to 550, 15 to 550, 15 to 530, 15 to 520, 15 to 510, 15 to 505, 15 to 500, 15 to 495, or 15 to 490.

The Pa may also be a value of about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 200 to about 500, about 200 to about 450, about 200 to about 400, about 200 to about 350, about 200 to about 300, or about 200 to about 250.

X2 may be more than 0.1 and 0.5 or less, more than 0.1 and 1.0 or less, more than 0.1 and 1.5 or less, more than 0.1 and 2.0 or less, more than 0.1 and 2.5 or less, more than 0.1 and 3.0 or less, more than 0.1 and 3.5 or less, more than 0.1 and 4.0 or less, more than 0.1 and 4.5 or less, more than 0.1 and 5.0 or less, more than 0.1 and 5.5 or less, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 2.5, 2.0 to 3.0, 2.0 to 3.5, 2.0 to 4.0, 2.0 to 4.5, 2.0 to 5.0, 2.0 to 5.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, 3.0 to 5.5, 2.0 to 6.5, 2.0 to 7.0, 2.0 to 7.5, 2.0 to 6.0, 2.5 to 7.0, 2.5 to 7.5, 2.5 to 6.0, 2.5 to 6.5, 3.0 to 6.0, 3.0 to 6.5, 3.0 to 7.0, 3.0 to 7.5, 3.0 to 8.0, 3.0 to 8.5, 3.0 to 9.0, 3.0 to 9.5, 3.5 to 7.0, 3.5 to 7.5, 3.5 to 8.0, 4.5 to 8.5, 3.5 to 9.0, 3.5 to 9.5, 4.0 to 7.5, 4.0 to 8.0, 4.0 to 8.5, 4.0 to 9.0, 4.0 to 9.5, 3.5 to 8.5, 3.5 to 10.0, 3.5 to 10.5, 3.5 to 11.0, 3.5 to 11.5, or 4.0 to 11.

X2 may also be more than 0.1 and 6.0 or less, more than 0.1 and 6.5 or less, more than 0.1 and 7.0 or less, more than 0.1 and 7.5 or less, more than 0.1 and 8.0 or less, more than 0.1 and 8.5 or less, more than 0.1 and 9.0 or less, more than 0.1 and 9.5 or less, more than 0.1 and 10.0 or less, more than 0.1 and 10.5 or less, more than 0.1 and 11.0 or less, more than 0.1 and 11.5 or less, more than 0.1 and 12.0 or less, more than 0.1 and 13.0 or less, more than 0.1 and 14.0 or less, more than 0.1 and 15.0 or less, more than 0.1 and 16.0 or less, more than 0.1 and 17.0 or less, more than 0.1 and 18.0 or less, 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 4.5, 4.0 to 5.0, 4.0 to 5.5, 4.0 to 6.0, 4.0 to 6.5, 4.0 to 7.0, 4.0 to 10.0, 4.0 to 10.5, 4.0 to 11.0, 4.0 to 12.0, 4.0 to 13.0, 4.0 to 14.0, 4.0 to 15.0, 4.0 to 16.0, 4.0 to 17.0, or 4.0 to 18.0. X2 may be equal to or greater than X1.

X3 is not particularly limited as long as it is greater than X2, and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 10.0, 3.0 to 10.5, 3.0 to 11.0, 3.0 to 11.5, 3.0 to 12.0, 3.0 to 13.0, 3.0 to 14.0, 3.0 to 15.0, 3.0 to 16.0, 3.0 to 17.0, 3.0 to 18.0, 3.5 to 4.0, 3.5 to 4.5, 3.5 to 5.0, 3.5 to 5.5, 3.5 to 6.0, 3.5 to 6.5, 3.5 to 12.0, 3.5 to 13.0, 3.5 to 14.0, 3.5 to 15.0, 3.5 to 16.0, 3.5 to 17.0, 3.5 to 18.0, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5.

X3 may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

Further, the oral composition in an embodiment of the present invention has a sweetness of a sweetness intensity X4 exhibited by the components (a) to (c) and $0.1 < X2 < X4 < X3$ is satisfied. That is, a sweetness is more enhanced by the addition of the component (d): a foreign phospholipid, to the component (a): a high-intensity sweetener, the component (b): an intrinsic phospholipid and the component (c): sodium than the combination of the components (a) to (c).

X4 is not particularly limited as long as it is greater than X2 and smaller than X3, and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 19, 3.0 to 14, 3.0 to 11.5, 3.0 to 9, 3.5 to 19, 3.5 to 14, 3.5 to 11.5, 3.5 to 9, 4.0 to 19, 4.0 to 14, 4.0 to 11.5, 4.0 to 9, 4.5 to 19, 4.5 to 14, 4.5 to 11.5, 4.5 to 9, 5.0 to 19, 5.0 to 14, 5.0 to 11.5, 5.0 to 9, 6.5 to 20, 5.5 to 14, 5.5 to 11.5, 5.5 to 9, 6.019, 6.0 to 14, 6.0 to 11.5, 6.0 to 9, 6.5 to 19, 6.5 to 14, 6.5 to 11.5, 6.5 to 9, 6.5 to 8, 6.5 to 7, 7.0 to 19, 7.0 to 19, 7.0 to 14, 7.0 to 11.5, 7.0 to 9, 7.5 to 19, 7.5 to 14, 7.5 to 11.5, 7.5 to 9, 8.0 to 19, 8.0 to 14, 8.0 to 11.5, 8.0 to 9, 8.5 to 19, 98.5 to 14, 8.5 to 11.5, 8.5 to 9, 9.0 to 19, 9.0 to 14, 9.0 to 11.5, 9.5 to 19, 9.5 to 14 or 9.5 to 11.5.

X4 may also be 3.0 to 17, 3.0 to 15, 3.0 to 14.5, 3.0 to 13, 3.5 to 17, 3.5 to 15, 3.5 to 14.5, 3.5 to 13, 4.0 to 17, 4.0 to 15, 4.0 to 14.5, 4.0 to 13, 4.5 to 17, 4.5 to 15, 4.5 to 14.5, 4.5 to 13, 5.0 to 17, 5.0 to 15, 5.0 to 14.5, 5.0 to 13, 5.5 to 17, 5.5 to 15, 5.5 to 14.5, 5.5 to 13, 6.0 to 17, 6.0 to 15, 6.0 to 14.5, 6.0 to 13, 6.5 to 17, 6.5 to 15, 6.5 to 14.5, 6.5 to 13, 6.5 to 8, 6.5 to 7, 7.0 to 17, 7.0 to 16, 7.0 to 15, 7.0 to 14.5, 7.0 to 13, 7.5 to 17, 7.5 to 15, 7.5 to 14.5, 7.5 to 13, 8.0 to 17, 8.0 to 15, 8.0 to 14.5, 8.0 to 13, 8.5 to 17, 8.5 to 15, 8.5 to 14.5, 8.5 to 13, 9.0 to 17, 9.0 to 15, 90 to 14.5, 9.5 to 17, 9.5 to 15 or 9.5 to 14.5.

Further, the oral composition in an embodiment of the present invention has a sweetness of a sweetness intensity X5 exhibited by the components (a), (b) and (d) and $0.1 < X2 < X5 < X3$ is satisfied. That is, a sweetness is more enhanced by the addition of the component (c): sodium, to the component (a): a high-intensity sweetener, the component (b): an intrinsic phospholipid and the component (d): a foreign phospholipid than the combination of the components (a) to (c).

X5 is not particularly limited as long as it is greater than X2 and smaller than X3, and may be 0.5 to 6.0, 0.5 to 6.5, 0.5 to 7.0, 0.5 to 7.5, 0.5 to 8.0, 0.5 to 8.5, 0.5 to 9.0, 0.5 to 9.5, 0.5 to 10.0, 0.5 to 10.5, 0.5 to 11.0, 0.5 to 11.5, 0.5 to 12.0, 0.5 to 13.0, 0.5 to 14.0, 0.5 to 15.0, 0.5 to 16.0, 0.5 to 17.0, 0.5 to 18.0, 1.0 to 6.0, 1.0 to 6.5, 1.0 to 7.0, 1.0 to 7.5, 1.0 to 8.0, 1.0 to 8.5, 1.0 to 9.0, 1.0 to 9.5, 1.0 to 10.0, 1.0 to 10.5, 1.0 to 11.0, 1.0 to 11.5, 1.0 to 12.0, 1.0 to 13.0, 1.0 to 14.0, 1.0 to 15.0, 1.0 to 16.0, 1.0 to 17.0, 1.0 to 18.0, 1.5 to 6.0, 1.5 to 6.5, 1.5 to 7.0, 1.5 to 7.5, 1.5 to 8.0, 1.5 to 8.5, 1.5 to 9.0, 1.5 to 9.5, 1.5 to 10.0, 1.5 to 10.5, 1.5 to 11.0, 1.5 to 11.5, 1.5 to 12.0, 1.5 to 13.0, 1.5 to 14.0, 1.5 to 15.0, 1.5 to 16.0, 1.5 to 17.0, 1.5 to 18.0, 2.0 to 8.0, 2.0 to 8.5, 2.0 to 9.0, 2.0 to 9.5, 2.0 to 10.0, 2.0 to 10.5, 2.0 to 11.0, 2.0 to 11.5, 2.0 to 12.0, 2.0 to 13.0, 2.0 to 14.0, 2.0 to 15.0, 2.0 to 16.0, 2.0 to 17.0, 2.0 to 18.0, 2.5 to 8.0, 2.5 to 8.5, 2.5 to 9.0, 2.5 to 9.5, 2.5 to 10.0, 2.5 to 10.5, 2.5 to 11.0, 2.5 to 11.5, 2.5 to 12.0, 2.5 to 13.0, 2.5 to 14.0, 2.5 to 15.0, 2.5 to 16.0, 2.5 to 17.0, 2.5 to 18.0, 3.0 to 19, 3.0 to 14, 3.0 to 11.5, 3.0 to 9, 3.5 to 19, 3.5 to 14, 3.5 to 11.5, 3.5 to 9, 4.0 to 19, 4.0 to 14, 4.0 to 11.5, 4.0 to 9, 4.5 to 19, 4.5 to 14, 4.5 to 11.5, 4.5 to 9, 5.0 to 19, 5.0 to 14, 5.0 to 11.5, 5.0 to 9, 6.5 to 20, 5.5 to 14, 5.5 to 11.5, 5.5 to 9, 6.019, 6.0 to 14, 6.0 to 11.5, 6.0 to 9, 6.5 to 19, 6.5 to 14, 6.5 to 11.5, 6.5 to 9, 6.5 to 8, 6.5 to 7, 7.0 to 19, 7.0 to 19, 7.0 to 14, 7.0 to 11.5, 7.0 to 9, 7.5 to 19, 7.5 to 14, 7.5 to 11.5, 7.5 to 9, 8.0 to 19, 8.0 to 14, 8.0 to 11.5, 8.0 to 9, 8.5 to 19, 98.5 to 14, 8.5 to 11.5, 8.5 to 9, 9.0 to 19, 9.0 to 14, 9.0 to 11.5, 9.5 to 19, 9.5 to 14 or 9.5 to 11.5.

X5 may also be 3.0 to 17, 3.0 to 15, 3.0 to 14.5, 3.0 to 13, 3.5 to 17, 3.5 to 15, 3.5 to 14.5, 3.5 to 13, 4.0 to 17, 4.0 to 15, 4.0 to 14.5, 4.0 to 13, 4.5 to 17, 4.5 to 15, 4.5 to 14.5, 4.5 to 13, 5.0 to 17, 5.0 to 15, 5.0 to 14.5, 5.0 to 13, 5.5 to 17, 5.5 to 15, 5.5 to 14.5, 5.5 to 13, 6.0 to 17, 6.0 to 15, 6.0 to 14.5, 6.0 to 13, 6.5 to 17, 6.5 to 15, 6.5 to 14.5, 6.5 to 13, 6.5 to 8, 6.5 to 7, 7.0 to 17, 7.0 to 16, 7.0 to 15, 7.0 to 14.5, 7.0 to 13, 7.5 to 17, 7.5 to 15, 7.5 to 14.5, 7.5 to 13, 8.0 to 17, 8.0 to 15, 8.0 to 14.5, 8.0 to 13, 8.5 to 17, 8.5 to 15, 8.5 to 14.5, 8.5 to 13, 9.0 to 17, 9.0 to 15, 90 to 14.5, 9.5 to 17, 9.5 to 15 or 9.5 to 14.5.

The oral composition of the present invention has an enhanced sweetness as having been already mentioned. Whether or not the sweetness of the oral composition of the present invention is enhanced can be evaluated by panelists who received sensory trainings. Further, for the sweetness intensity of the oral composition of the present invention, standard oral compositions (for example, beverages) to be the sweetness standards are prepared with sucrose concentrations assigned as sweetness intensities 1, 2, 3, 4, 5, 6, 7, 8, 9, 10, 11, 12, 13, 14, and 15 and panelists compare the sweetness of the oral composition of the present invention with the sweetness of these standard oral compositions thereby to measure the sweetness of the oral composition of the present invention. Note that the standard oral compositions (for example, beverages) having a sweetness intensity of 1, 2, ... 15 are prepared by adding sucrose in such a way that a sucrose content is 1 g/100 g, 2 g/100 g, ... 15 g/100 g to the oral composition to which sucrose is not added.

Furthermore, of the standard oral compositions having a lower sweetness than the oral composition of the present invention in the above measurement, the standard oral composition having the closest sweetness to that of the oral composition of the present invention is selected and adjusted in such a way as to have the same sweetness as that of the oral composition of the present invention by adding sucrose to the selected standard oral composition, during which a sweetness intensity of the oral composition of the present invention can also be measured from a sucrose content in the adjusted standard oral composition.

Other examples of the method for measuring a sweetness of the oral composition of the present invention include a sweetness intensity rating using Visual Analogue Scale (VAS method). For the VAS method, literatures such as "The journal of Japanese Society of Stomatognathic Function (2014) 20 pp. 115-129 ("Construction of a Screening Test for Gustatory Function in Four Basic Tastes" by Toyota et al.)" can be referred. Specifically, in the measurement of sweetness intensity by the VAS method, for example, evaluators define sweetness intensities as "not sweet at all" at the lower end and "nothing is sweeter than this" at the upper end and, using a piece of paper on which a straight line indicating the intensities of sweetness on the straight line, assess a sweetness intensity sensed at that time by showing a position on the straight line.

Besides, whether a sweetness intensity is higher or lower can be determined, without quantitating the sweetness intensity of a test oral composition, by a three-alternative forced choice method (3-AFC) in which whether it is sweeter than, not sweeter than, or sweet equivalently to a reference oral composition is chosen by a sensory evaluation, by a two-alternative forced choice method (2-AFC) in which whether it is sweeter than, or not sweeter than a reference oral composition is chosen by a sensory evaluation, or the like. The sensory evaluation may be carried out by a plurality of panelists who have received sensory trainings, and when at least one panelist evaluates it as "sweet", the test oral composition can be evaluated to have a higher sweetness intensity than the reference oral composition. For example, when about 10% or more, about 20% or more, about 25% or more, about 30% or more, about 33% or more, about 40% or more, about 50% or more, about 60% or more, about 67% or more, about 70% or more, about 75% or more, about 80% or more, or about 90% or more of panelists evaluate the test oral composition as "sweeter" than the reference oral composition, the test oral composition can be evaluated to have a higher sweetness intensity than the reference oral composition. It is preferable that more panelists evaluate it as "sweeter". In a preferable embodiment, about 25% or more, about 33% or more, about 50% or more, about 67% or more, about 75% or more, about 80% or more, or about 90% or more of panelists evaluate the test oral composition as "sweeter" than the reference oral composition. In a particularly preferable embodiment, about 50% or more, about 67% or more, about 75% or more, about 80% or more, or about 90% or more of panelists evaluate the test oral composition as "sweeter" than the reference oral composition.

The sweetness intensity of the oral composition of the present invention is not particularly limited as long as it is acceptable as a food and can be, in terms of the degree of sweetness, for example, 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, 10.5 to 12.5. The sweetness intensity of the oral composition is provided by the above components (a) to (d) and optional additional components.

An energy (total energy) of the oral composition of the present invention can be, depending on an embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, 24 to 30 Kcal/100 ml.

Further, an energy (total energy, TE) of the oral composition of the present invention can be, depending on an embodiment (for example, an embodiment containing a caloric sweetener), $0 < TE \leq 50$ Kcal/100 ml, $0 < TE \leq 45$ Kcal/100 ml, $0 < TE \leq 40$ Kcal/100 ml, $0 < TE \leq 35$ Kcal/100 ml, $0 < TE \leq 30$ Kcal/100 ml, $0 < TE \leq 24$ Kcal/100 ml, $0 < TE \leq 22$ Kcal/100 ml, $0 < TE \leq 20$ Kcal/100 ml, $0 < TE \leq 15$ Kcal/100 ml, $0 < TE \leq 10$ Kcal/100 ml, $0 < TE \leq 5$ Kcal/100 ml (that is, it never is completely 0).

The components (a) to (d) can be in any combinations. As shown in examples to be described later, the addition of the component (c) and the component (d) to the components (a) + (b) enables to provide a sweetness intensity X3, which is higher than the sweetness intensity X2 of the components (a) + (b) alone. That is, the sweetness of the components (a) +(b) can be enhanced by the components (c) and (d). For this reason, oral compositions such as foods can be produced without using or with a reduced amount of highly caloric sucrose while maintaining the sweetness equal to an oral composition containing sucrose. Thus, the design of new low-caloric sweet foods is enabled. In the case of designing a zero-calorie sweet food, a high-intensity sweetener having particularly good-taste quality such as rebaudioside D and rebaudioside M is used for the component (a) and D-allulose or erythritol is used as an additional sweet substance thereby to improve a sweetness with a low-concentration phospholipid and a low-concentration sodium. In the case of adjusting a food to be not zero calorie but low calorie, a caloric sweetener such as sucrose, glucose, fructose, or sorbitol can be contained as an additional sweet substance.

[Texture]

In an embodiment, texture is increased in the oral composition of the present invention owing to the components (c) and (d). The texture of the oral composition is a factor related to physical properties of good taste of the oral composition such as mouthfeel, thickness, body, mildness, feeling on the tongue, smoothness, smooth feeling going down, chewiness, crispness, and sensation when eating. The texture can be evaluated by a sensory test or with a texture measuring device (Tensipresser). A liquid oral composition such as a beverage is evaluated preferably by a sensory test. Whether or not the texture is increased by the components (c) and (d) can be evaluated, for example, by comparing, in an item related to the texture, the oral composition of the present invention with an oral composition having the same composition as the oral composition of the present invention except that the components (c) and (d) are not contained (hereinafter, also referred to as the "control composition") by panelists who received sensory trainings.

An example of a comparing method in a sensory test includes one employing a VAS method. Specifically, in the comparison of the texture by the VAS method, for example, an evaluator uses a sheet of paper on which a straight line indicating the degree of an item related to the texture is drawn, and assesses the degree of the item sensed at that time by showing a position on the straight line. For example, regarding an evaluation item such as "thickness", "body", or "mildness", with one end of the straight line defined as an intensity of "not sensed at all" and the other end defined as an intensity of "sensed greatly", the item sensed at the time of the test is shown as a position on the straight line, and the item is scored for quantification in accordance with contribution to increase of the texture corresponding to the position. For example, regarding the "thickness", "body", and "mildness", the texture is sensed to increase as these senses are stronger, and therefore, by giving the lowest score to "not sensed at all" and the highest score to "sensed greatly", the increase of the texture can be quantified. Besides, regarding "mouthfeel", in a case of a beverage, the texture is sensed to increase when the beverage is syrupy as compared with when it is watery, and hence the increase of the texture can be quantified by giving the lowest score to "watery" and the highest score to "syrupy".

Whether or not the texture is increased may be evaluated by comparing the respective items thus quantified, or may be evaluated by simultaneously comparing a plurality of items using a radar chart or the like. The evaluation with a radar chart can be carried out by evaluation of a complete picture (a shape of the like), or evaluation through comparison of a radar chart area. In the evaluation with a radar chart area, the increase of the texture can be evaluated when the area of a radar chart obtained from an oral composition containing the components (c) and (d) is larger than the area of a radar chart obtained from an oral composition not containing the components (c) and (d). In an embodiment, in the oral composition of the present invention, at least one of the evaluation items related to the texture is increased as compared with that in the control composition. In some embodiments, in the oral composition of the present invention, at least one of the evaluation items selected from "mouthfeel", "thickness", "body", and "mildness" is increased as compared with that in the control composition.

In a specific embodiment, "mouthfeel" of the oral composition of the present invention may be scored as 0.10 or more, 0.15 or more, 0.20 or more, 0.25 or more, 0.30 or more, 0.35 or more, 0.40 or more, 0.45 or more, 0.50 or more, 0.55 or more, 0.60 or more, 0.65 or more, 0.70 or more, 0.75 or more, 0.80 or more, 0.85 or more, 0.90 or more, 0.95 or more, 1.00 or more, 1.05 or more, 1.10 or more, 1.15 or more, 1.20 or more, 1.25 or more, 1.30 or more, 1.35 or more, 1.40 or more, 1.45 or more, 1.50 or more, 1.55 or more, 1.60 or more, 1.65 or more, 1.70 or more, 1.75 or more, 1.80 or more, 1.85 or more, 1.90 or more, 1.95 or more or 2.00 or more when evaluated by a VAS method in which "mouthfeel" of a control oral composition is scored as 0, a composition more "watery" than the control composition is scored as -3, and a composition more "syrupy" is scored as 3.

In a specific embodiment, "thickness" of the oral composition of the present invention may be scored as 0.10 or more, 0.15 or more, 0.20 or more, 0.25 or more, 0.30 or more, 0.35 or more, 0.40 or more, 0.45 or more, 0.50 or more, 0.55 or more, 0.60 or more, 0.65 or more, 0.70 or more, 0.75 or more, 0.80 or more, 0.85 or more, 0.90 or more, 0.95 or more, 1.00 or more, 1.05 or more, 1.10 or more, 1.15 or more, 1.20 or more, 1.25 or more, 1.30 or more, 1.35 or more, 1.40 or more, 1.45 or more, 1.50 or more, 1.55 or more, 1.60 or more, 1.65 or more, 1.70 or more, 1.75 or more, 1.80 or more, 1.85 or more, 1.90 or more, 1.95 or more or 2.00 or more when evaluated by a VAS method in which "thickness" of a control oral composition is scored as 0, a composition with "thickness not sensed at all" as compared with the control composition is scored as -3, and a composition with "thickness sensed greatly" is scored as 3.

In a specific embodiment, "body" of the oral composition of the present invention may be scored as 0.10 or more, 0.15 or more, 0.20 or more, 0.25 or more, 0.30 or more, 0.35 or more, 0.40 or more, 0.45 or more, 0.50 or more, 0.55 or more, 0.60 or more, 0.65 or more, 0.70 or more, 0.75 or more, 0.80 or more, 0.85 or more, 0.90 or more, 0.95 or more, 1.00 or more, 1.05 or more, 1.10 or more, 1.15 or more, 1.20 or more, 1.25 or more, 1.30 or more, 1.35 or more, 1.40 or more, 1.45 or more, 1.50 or more, 1.55 or more, 1.60 or more, 1.65 or more, 1.70 or more, 1.75 or more, 1.80 or more, 1.85 or more, 1.90 or more, 1.95 or more or 2.00 or more when evaluated by a VAS method in which "body" of a control oral composition is scored as 0, a composition with "body not sensed at all" as compared with the control composition is scored as -3, and a composition with "body sensed greatly" is scored as 3.

In a specific embodiment, "mildness" of the oral composition of the present invention may be scored as 0.10 or more, 0.15 or more, 0.20 or more, 0.25 or more, 0.30 or more, 0.35 or more, 0.40 or more, 0.45 or more, 0.50 or more, 0.55 or more, 0.60 or more, 0.65 or more, 0.70 or more, 0.75 or more, 0.80 or more, 0.85 or more, 0.90 or more, 0.95 or more, 1.00 or more, 1.05 or more, 1.10 or more, 1.15 or more, 1.20 or more, 1.25 or more, 1.30 or more, 1.35 or more, 1.40 or more, 1.45 or more, 1.50 or more, 1.55 or more, 1.60 or more, 1.65 or more, 1.70 or more, 1.75 or more, 1.80 or more, 1.85 or more, 1.90 or more, 1.95 or more or 2.00 or more when evaluated by a VAS method in which "mildness" of a control oral composition is scored as 0, a composition with "mildness not sensed at all" as compared with the control composition is scored as -3, and a composition with "mildness sensed greatly" is scored as 3.

In a specific embodiment, a radar chart area of an evaluation item related to the texture (such as "mouthfeel", "thickness/body", or "mildness") of the oral composition of the present invention may be larger than a radar chart area of a control composition by about 1.1 times, about 1.2 times, about 1.3 times, about 1.4 times, about 1.5 times, about 1.6 times, about 1.7 times, about 1.8 times, about 1.9 times, about 2 times, about 2.1 times, about 2.2 times, about 2.3 times, about 2.4 times, about 2.5 times, about 2.6 times, about 2.7 times, about 2.8 times, about 2.9 times, about 3 times, about 3.1 times, about 3.2 times, about 3.3 times, about 3.4 times, about 3.5 times, about 3.6 times, about 3.7 times, about 3.8 times, about 3.9 times, about 4 times, about 4.1 times, about 4.2 times, about 4.3 times, about 4.4 times, about 4.5 times, about 4.6 times, about 4.7 times, about 4.8 times, about 4.9 times or about 5 times.

[High-intensity sweetener]

The high-intensity sweetener (hereinafter, sometimes abbreviated as the "sweetener (a)" or "component (a)") means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1,000 times or more, 5,000 times or more, 10,000 times or more, 50,000 times or more or 100,000 times or more, of that of sucrose.

Specific examples of the high-intensity sweetener include peptide-based sweeteners such as aspartame, neotame, and advantame, for example, sucrose derivatives such as sucralose, for example, synthetic sweeteners such as acesulfame K, saccharine, saccharin sodium, sodium cyclamate, dulcin, disodium glycyrrhizin, trisodium glycyrrhizin, and neohesperidin dihydrochalcone (including those naturally occurring but also those whose synthetic products are mostly distributed such as neohesperidin dihydrochalcone), for example, sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin, and plant extracts containing a high-intensity sweetener component, for example, Stevia rebaudiana extract, Luo han guo extract, Glycyrrhiza glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, Lippia dulcis (Aztec sweet herb) extract, sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweet components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4β-hydroxyhernandulcin).

Examples of the steviol glycoside include rebaudioside A (hereinafter, "rebaudioside" may be abbreviated as "Reb"), RebB, RebC, RebD, RebE, RebF, RebI, RebJ, RebK, RebM, RebN, RebO, RebQ, RebR, dulcoside A, dulcoside C, rubusoside, steviol, steviol monoside, steviol bioside and stevioside. Examples of the mogroside include mogroside IV (hereinafter, "mogroside " may be abbreviated as "Mog") and MogV.

The Glycyrrhiza extract refers to those obtained from roots or rhizomes of Glycyrrhiza uralensis Fisher, Glycyrrhiza inflata Batalin, and Glycyrrhiza glabra Linne and having glycyrrhizic acid as the main component. Examples of the Glycyrrhiza extract include Glycyrrhiza extracts, Glycyrrhizin, and licorice extracts.

The sucrose derivative includes, for example, those obtained by substituting the OH group or the H group of sucrose with other substituents and examples thereof include halogen derivatives of sucrose (sucralose), oxathiazinonedioxide derivatives.

In a preferable embodiment of the present invention, the high-intensity sweetener is selected from a high-intensity sweetener having a good taste quality. As used herein, the "high-intensity sweetener having a good taste quality" means a high-intensity sweet substance having one or more taste qualities selected from, when compared with RebA, (1) less astringent taste, (2) less metallic taste, (3) less aftertaste of sweetness, and (4) less bitterness. Whether or not a certain sweet substance has the above taste quality is already known or can be determined based on a sensory evaluation. Nonrestrictive examples of the high-intensity sweetener having a good taste include RebD, RebM, neohesperidin dihydrochalcone, glycyrrhizin, thaumatin, monellin, mogroside, rubusoside, curculin, mabinlin, brazzein, pentagin, phyllodulcin, hernandulcin, miraculin, good-taste quality Stevia rebaudiana plant-containing sweet components, Siraitia grosvenorii plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components, and derivatives thereof, and combinations thereof. The high-intensity sweetener having a good taste quality does not contain major components of Stevia sweeteners such as Reb A and stevioside. In a specific embodiment, the high-intensity sweetener having a good taste quality comprises RebD, RebM, a mogroside (for example, MogV), thaumatin, brazzein or a combination thereof. In another specific embodiment, the sweetener (a) contains RebD, RebM, a mogroside (for example, MogV), thaumatin, or a combination thereof. In a preferable embodiment of the present invention, a high-intensity sweetener having a good taste quality contains RebD, RebM, MogV, a Luo han guo extract, and a combination thereof.

In an embodiment of the present invention, the high-intensity sweetener can be those naturally occurring in plants and the like or those artificially produced (for example, bioconversion or chemosynthesis), but is preferably a naturally occurring sweetener. As used herein, the "naturally occurring" does not mean that a high-intensity sweet substance contained in the oral composition of the present invention is a natural product but a high-intensity sweet substance contained in the oral composition of the present invention can be a product artificially (for example, by bioconversion) produced (non-naturally occurring product) as long as the same substance naturally occurs.

Nonrestrictive examples of the sweetener (a) include RebA, RebD, RebM, neohesperidin dihydrochalcone, glycyrrhizin, thaumatin, monellin, mogroside, rubusoside, curculin, mabinlin, brazzein, pentagin, phyllodulcin, hernandulcin, miraculin, Stevia rebaudiana plant-containing sweet components, Siraitia grosvenorii plant-containing sweet components, Glycyrrhiza glabra plant-containing sweet components, Rubus suavissimus S. Lee plant-containing sweet components, Hydrangea macrophylla var. thunbergii plant-containing sweet components, Sclerochiton ilicifolius plant-containing sweet components, Thaumataococcus daniellii Benth plant-containing sweet components, Dioscoreophyllum volkensii plant-containing sweet components, Curculigo latifolia plant-containing sweet components, Richardella dulcifica plant-containing sweet components, Pentadiplandra brazzeana plant-containing sweet components, Capparis masaikai plant-containing sweet components, Lippia dulcis plant-containing sweet components and derivatives thereof, and combinations thereof. In a specific embodiment, the sweetener (a) contains RebA, RebD, RebM, a mogroside (for example, MogV) or a combination thereof. In another specific embodiment, the sweetener (a) contains RebA, RebD, RebM, a mogroside (for example, MogV), thaumatin or a combination thereof. In a preferable embodiment of the present invention, a high-intensity sweetener contains at least one selected from the group consisting of RebA, RebD, RebM, MogV, a luo han guo extract, and a combination thereof. In an embodiment of the present invention, the sweetener (a) is substantially made up of a sweetener other than major components of Stevia sweeteners such as RebA and stevioside. As used herein, the "substantially made up of ... " means that the sweetener used in the present invention can contain major component(s) of Stevia sweeteners as long as the effects of the invention are not affected. For example, preferably 90% or more, more preferably 95% or more, or further preferably 98% or more of the sweetener (a) for use in the present invention is made up of a sweetener other than RebA and stevioside.

RebA, RebD and RebM can be directly extracted from Stevia, or can be obtained by adding glucose to a compound having another structure, contained in a Stevia extract.

The Luo han guo extract as a sweetener is an extract of Luo han guo containing a sweet substance from Luo han guo, approved in various countries including Japan as a food additive and commercially available. Examples of the sweet substance from Luo han guo include MogV, MogIV, 11-oxo-MogV, and Siamenoside I.

MogV is a kind of the major mogrol glycosides contained in Luo han guo and documented to have a good-quality sweetness property close to sucrose when compared with RebA. MogV can be obtained from a luo han guo extract (for example, an alcohol extract of Luo han guo) by purification with chromatography or the like. Alternatively, MogV can be obtained by adding glucose to a compound having another structure, contained in a luo han guo extract.

The luo han guo extract preferably contains MogV and the ratio thereof is not limited and can be 10 wt% or more, 15 wt% or more, 20 wt% or more, 25 wt% or more, 30 wt% or more, 35 wt% or more, 40 wt% or more, 45 wt% or more, 50 wt% or more, 55 wt% or more, 60 wt% or more, 65 wt% or more, 70 wt% or more or 75 wt% or more, of the total dry weight of a luo han guo extract. The content of MogV can be determined by a known technique such as liquid chromatography. The luo han guo extract can be obtained by extracting a fruit of Luo han guo (Siraitia grosvenorii) with a suitable solvent (for example, an aqueous solvent such as water, an alcohol solvent such as ethanol or methanol, or a mixed solvent of an aqueous solvent and an alcohol solvent such as water-containing ethanol or water-containing methanol), and then optionally carrying out a treatment such as degreasing, purification, concentration, and drying.

MogV can be one having a high purity, and can be, for example, one having a purity of 80% or more, 85% or more, 90% or more, 91% or more, 92% or more, 93% or more, 94% or more, 95% or more, 96% or more, 97% or more or 98% or more. MogV obtained by purification of a luo han guo extract, of course, has a smaller amount of incorporation of a luo han guo extract component other than MogV, as it has a higher purity.

In other embodiments of the present invention, MogV can also be one having a lower purity, and can be, for example, one having a purity of 50% or more, 55% or more, 60% or more, 65% or more, 70% or more or 75% or more. For example, when the sweetness intensity of sucrose per unit concentration Brix 1 is defined as a degree of sweetness of 1, the calculated value of the degree of sweetness of Mog V having a purity of about 65% is about 175. In other embodiments of the present invention, a luo han guo extract containing about 30 wt% of Mog V can be used as the high-intensity sweetener, and, when the sweetness intensity of sucrose per unit concentration Brix 1 is defined as a degree of sweetness of 1, the calculated value of the degree of sweetness of the luo han guo extract is about 100.

The high-intensity sweetener is contained in an amount corresponding to a sweetness intensity X1, as described above. When the sweetness intensity of sucrose per unit concentration Brix 1 is defined as a degree of sweetness of 1, a degree of sweetness of RebD is about 225, a degree of sweetness of RebM is about 230, a degree of sweetness of RebB is about 325, a degree of sweetness of RebA is 200 to 300 (median value 250), a degree of sweetness of RebN is 200 to 250 (median value 225), a degree of sweetness of RebO is 200 to 250 (median value 225), a degree of sweetness of RebE is 70 to 80 (median value 75), a degree of sweetness of a luo han guo extract (containing 40% of Mog V) is about 130, a degree of sweetness of MogV is about 270, a degree of sweetness of thaumatin is 2,000, and a degree of sweetness of brazzein is 500 to 2000 (median value 1250). The numerical value obtained by multiplying these degrees of sweetness by a concentration (w/v% (considered to be the same as w/w% in the case of a beverage)) of the high-intensity sweetener in the oral composition is a sweetness intensity of the high-intensity sweetener. When X1 of such a sweetener is herein determined, the above degree of sweetness (median value when a numerical value range is shown) is used. A relative ratio of a degree of sweetness of each sweetener to a degree of sweetness of 1 of sucrose can be determined from, for example, a known sugar sweetness conversion table (for example, information "Beverage term dictionary", page 11, Beverage Japan, Inc.). When a numerical range of a degree of sweetness is herein shown, a median value is adopted. Herein, in the case of a sweetener whose degree of sweetness is different with respect to each literature, a relative ratio of a degree of sweetness to a degree of sweetness of 1 of sucrose can be determined by a sensory test. Examples of such a sensory test include a method involving preparing samples where sucrose is added to pure water so that Brix is 3.0 to 5.0 by 0.5, and selecting a sample where sucrose is added, having a sweetness intensity equal to that of an aqueous solution having a predetermined concentration of a sweetener, among such samples.

In an embodiment of the present invention, the high-intensity sweetener comprises at least one selected from the group consisting of steviol glycoside, a luo han guo extract, mogrol glycoside, a Thaumataococcus daniellii Benth plant-containing sweet component, a Pentadiplandra brazzeana plant-containing sweet component, an artificial sweetener, and a combination thereof. In a preferable embodiment of the present invention, the high-intensity sweetener comprises at least one selected from the group consisting of RebA, RebB, RebC, RebD, RebE, RebF, RebI, RebJ, RebK, RebM, RebN, RebO, RebQ, RebR, Dulcoside A, Dulcoside C, rubusoside, steviol monoside, steviol bioside, stevioside, a luo han guo extract, MogV, thaumatin, brazzein, aspartame, acesulfame K, sucralose, a Glycyrrhiza extract, saccharine, and a combination thereof.

In some embodiments, the sweetener (a) contains the following combination: RebA and RebM, RebA and RebD, RebD and RebM, RebA and RebD and RebM, RebA and MogV, RebD and MogV, RebM and MogV, RebA and RebM and MogV, RebA and RebD and MogV, RebD and RebM and MogV, RebA and neohesperidin dihydrochalcone, RebD and neohesperidin dihydrochalcone, RebM and neohesperidin dihydrochalcone, RebA and RebM and neohesperidin dihydrochalcone, RebA and RebD and neohesperidin dihydrochalcone, RebD and RebM and neohesperidin dihydrochalcone, MogV and neohesperidin dihydrochalcone, RebD and RebM and MogV and neohesperidin dihydrochalcone, RebA and brazzein, RebD and brazzein, RebM and brazzein, MogV and brazzein, neohesperidin dihydrochalcone and brazzein, RebM and RebD and brazzein, RebM and RebD and brazzein and MogV, RebM and RebD and brazzein and neohesperidin dihydrochalcone, or RebM and RebD and brazzein and MogV and neohesperidin dihydrochalcone.

In another embodiment, the sweetener (a) contains the following combination: RebA and thaumatin, RebD and thaumatin, RebM and thaumatin, MogV and thaumatin, RebA and RebM and thaumatin, RebA and RebD and thaumatin, RebD and RebM and thaumatin, RebA and MogV and thaumatin, RebD and MogV and thaumatin, RebM and MogV and thaumatin, or RebD and RebM and MogV and thaumatin.

In an embodiment of the present invention, the sweetener (a) can contain one or more high-intensity sweeteners selected from RebA, RebD, RebM, MogV, a luo han guo extract, and a combination thereof, preferably one or more high-intensity sweeteners selected from RebD, RebM, and a combination thereof.

The amount of the sweetener (a) contained in the oral composition in an embodiment of the present invention is, in the case when the sweetener (a) contains a combination of a plurality of sweet substances, an amount of all of these sweet substances combined. When an amount of the sweetener (a) is Pa (ppm), Pa can be a value of, for example, about 20 to about 800, about 25 to about 800, about 30 to about 800, about 35 to about 800, about 40 to about 800, about 45 to about 800, about 50 to about 800, about 55 to about 800, about 20 to about 750, about 25 to about 750, about 30 to about 750, about 35 to about 750, about 40 to about 750, about 45 to about 750, about 50 to about 750, about 55 to about 750, about 20 to about 700, about 25 to about 700, about 30 to about 700, about 35 to about 700, about 40 to about 700, about 45 to about 700, about 50 to about 700, about 55 to about 700, about 20 to about 650, about 25 to about 650, about 30 to about 650, about 35 to about 650, about 40 to about 650, about 45 to about 650, about 50 to about 650, about 55 to about 650, about 20 to about 600, about 25 to about 600, about 30 to about 600, about 35 to about 600, about 40 to about 600, about 45 to about 600, about 50 to about 600, about 55 to about 600, about 20 to about 550, about 25 to about 550, about 30 to about 550, about 35 to about 550, about 40 to about 550, about 45 to about 550, about 50 to about 550, about 55 to about 550, about 20 to about 540, about 25 to about 540, about 30 to about 540, about 35 to about 540, about 40 to about 540, about 45 to about 540, about 50 to about 540, about 55 to about 540, about 20 to about 530, about 25 to about 530, about 30 to about 530, about 35 to about 530, about 40 to about 530, about 45 to about 530, about 50 to about 530, about 55 to about 530, about 20 to about 520, about 25 to about 520, about 30 to about 520, about 35 to about 520, about 40 to about 520, about 45 to about 520, about 50 to about 520, about 55 to about 520, about 20 to about 510, about 25 to about 510, about 30 to about 510, about 35 to about 510, about 40 to about 510, about 45 to about 510, about 50 to about 510, about 55 to about 510, about 20 to about 505, about 25 to about 505, about 30 to about 505, about 35 to about 505, about 40 to about 505, about 45 to about 505, about 50 to about 505, about 55 to about 505, about 20 to about 500, about 25 to about 500, about 30 to about 500, about 35 to about 500, about 40 to about 500, about 45 to about 500, about 50 to about 500, about 55 to about 500, about 20 to about 495, about 25 to about 495, about 30 to about 495, about 35 to about 495, about 40 to about 495, about 45 to about 495, about 50 to about 495, about 55 to about 495, about 20 to about 490, about 25 to about 490, about 30 to about 490, about 35 to about 490, about 40 to about 490, about 45 to about 490, about 50 to about 490, about 55 to about 490, about 100 to about 500, about 100 to about 450, about 100 to about 400, about 100 to about 350, about 100 to about 300, about 100 to about 250, about 100 to about 200, about 150 to about 500, about 150 to about 450, about 150 to about 400, about 150 to about 350, about 150 to about 300, about 150 to about 250, about 150 to about 200, about 20 to about 200, about 200 to about 500, about 200 to about 450, about 200 to about 400, about 200 to about 350, about 200 to about 300 or about 200 to about 250.

In an embodiment of the present invention, an amount Pa ppm of the high-intensity sweetener can be about 20 to about 600 ppm, about 30 to about 550 ppm, about 55 to about 490 ppm, about 20 to about 200 ppm, about 100 to about 500 ppm or about 150 to about 350 ppm.


[Sodium]

The oral composition of the present invention comprises (c) 60 mg/100 mL or less of sodium, and it is meant that a content of sodium atom is 60 mg/100 mL or less. The content of sodium may be, depending on an embodiment, in the range of 0.1 to 60 mg/100 mL, 0.1 to 55 mg/100 mL, 0.1 to 50 mg/100 mL, 0.1 to 45 mg/100 mL, 0.1 to 40 mg/100 mL, 0.1 to 35 mg/100 mL, 0.1 to 30 mg/100 mL, 0.1 to 25 mg/100 mL, 0.1 to 20 mg/100 mL, 0.1 to 19 mg/100 mL, 0.1 to 18 mg/100 mL, 0.1 to 17 mg/100 mL, 0.1 to 16 mg/100 mL, 0.1 to 15 mg/100 mL, 0.1 to 14 mg/100 mL, 0.1 to 13 mg/100 mL, 0.1 to 12 mg/100 mL, 0.1 to 11 mg/100 mL, 0.1 to 10 mg/100 mL, 1 to 60 mg/100 mL, 1 to 55 mg/100 mL, 1 to 50 mg/100 mL, 1 to 45 mg/100 mL, 1 to 40 mg/100 mL, 1 to 35 mg/100 mL, 1 to 30 mg/100 mL, 1 to 25 mg/100 mL, 1 to 20 mg/100 mL, 1 to 19 mg/100 mL, 1 to 18 mg/100 mL, 1 to 17 mg/100 mL, 1 to 16 mg/100 mL, 1 to 15 mg/100 mL, 1 to 14 mg/100 mL, 1 to 13 mg/100 mL, 1 to 12 mg/100 mL, 1 to 11 mg/100 mL, 1 to 10 mg/100 mL, 5 to 60 mg/100 mL, 5 to 55 mg/100 mL, 5 to 50 mg/100 mL, 5 to 45 mg/100 mL, 5 to 40 mg/100 mL, 5 to 35 mg/100 mL, 5 to 30 mg/100 mL, 5 to 25 mg/100 mL, 5 to 20 mg/100 mL, 5 to 19 mg/100 mL, 5 to 18 mg/100 mL, 5 to 17 mg/100 mL, 5 to 16 mg/100 mL, 5 to 15 mg/100 mL, 5 to 14 mg/100 mL, 5 to 13 mg/100 mL, 5 to 12 mg/100 mL, 5 to 11 mg/100 mL, 5 to 10 mg/100 mL, 7 to 60 mg/100 mL, 7 to 55 mg/100 mL, 7 to 50 mg/100 mL, 7 to 45 mg/100 mL, 7 to 40 mg/100 mL, 7 to 35 mg/100 mL, 7 to 30 mg/100 mL, 7 to 25 mg/100 mL, 7 to 20 mg/100 mL, 7 to 19 mg/100 mL, 7 to 18 mg/100 mL, 7 to 17 mg/100 mL, 7 to 16 mg/100 mL, 7 to 15 mg/100 mL, 10 to 60 mg/100 mL, 10 to 55 mg/100 mL, 10 to 50 mg/100 mL, 10 to 45 mg/100 mL, 10 to 40 mg/100 mL, 10 to 35 mg/100 mL, 10 to 30 mg/100 mL, 10 to 25 mg/100 mL, 10 to 20 mg/100 mL, 10 to 19 mg/100 mL, 10 to 18 mg/100 mL, 10 to 17 mg/100 mL, 10 to 16 mg/100 mL, 10 to 15 mg/100 mL, 15 to 60 mg/100 mL, 15 to 55 mg/100 mL, 15 to 50 mg/100 mL, 15 to 45 mg/100 mL, 15 to 40 mg/100 mL, 15 to 35 mg/100 mL, 15 to 30 mg/100 mL, 15 to 25 mg/100 mL, 15 to 20 mg/100 mL, 20 to 60 mg/100 mL, 20 to 55 mg/100 mL, 20 to 50 mg/100 mL, 20 to 45 mg/100 mL, 20 to 40 mg/100 mL, 20 to 35 mg/100 mL, 20 to 30 mg/100 mL, 20 to 25 mg/100 mL, 25 to 60 mg/100 mL, 25 to 55 mg/100 mL, 25 to 50 mg/100 mL, 25 to 45 mg/100 mL, 25 to 40 mg/100 mL, 25 to 35 mg/100 mL, 25 to 30 mg/100 mL, 30 to 60 mg/100 mL, 30 to 55 mg/100 mL, 30 to 50 mg/100 mL, 30 to 45 mg/100 mL, 30 to 40 mg/100 mL, 30 to 35 mg/100 mL, 35 to 60 mg/100 mL, 35 to 55 mg/100 mL, 35 to 50 mg/100 mL, 35 to 45 mg/100 mL, 35 to 40 mg/100 mL, 40 to 60 mg/100 mL, 40 to 55 mg/100 mL, 40 to 50 mg/100 mL, 40 to 45 mg/100 mL, 45 to 60 mg/100 mL, 45 to 55 mg/100 mL, 45 to 50 mg/100 mL, 50 to 60 mg/100 mL, 50 to 55 mg/100 mL or 55 to 60 mg/100 mL

Further, the content of sodium may be, depending on an embodiment, in the range of 0.1 to 22 mg/100 mL, 0.1 to 21 mg/100 mL , 1 to 22 mg/100 mL , 1 to 21 mg/100 mL, 4 to 40 mg/100 mL , 4 to 35 mg/100 mL, 4 to 34 mg/100 mL, 4 to 33 mg/100 mL, 4 to 32 mg/100 mL , 4 to 31 mg/100 mL, 4 to 30 mg/100 mL, 4 to 29 mg/100 mL, 4 to 26 mg/100 mL, 4 to 25 mg/100 mL, 4 to 22 mg/100 mL , 4 to 21 mg/100 mL, 4 to 20 mg/100 mL, 4 to 19 mg/100 mL , 4 to 18 mg/100 mL, 4 to 17 mg/100 mL, 4 to 16 mg/100 mL, 4 to 15 mg/100 mL, 4 to 14 mg/100 mL, 4 to 13 mg/100 mL, 4 to 12 mg/100 mL, 4 to 11 mg/100 mL, 4 to 10 mg/100 mL, 5 to 34 mg/100 mL, 5 to 33 mg/100 mL, 5 to 32 mg/100 mL, 5 to 31 mg/100 mL, 5 to 29 mg/100 mL, 5 to 22 mg/100 mL , 5 to 21 mg/100 mL, 10 to 34 mg/100 mL, 10 to 33 mg/100 mL, 10 to 32 mg/100 mL, 10 to 31 mg/100 mL, 10 to 29 mg/100 mL , 10 to 22 mg/100 mL , 10 to 21 mg/100 mL , 11.5 to 34 mg/100 mL, 11.5 to 33 mg/100 mL , 11.5 to 32 mg/100 mL , 11.5 to 31 mg/100 mL , 11.5 to 30 mg/100 mL , 11.5 to 29 mg/100 mL , 11.5 to 22 mg/100 mL, 11.5 to 21 mg/100 mL, 11.5 to 20 mg/100 mL , 11.5 to 19 mg/100 mL, 11.5 to 18 mg/100 mL, 11.5 to 17 mg/100 mL , 11.5 to 16 mg/100 mL , 11.5 to 15 mg/100 mL, 11.5 to 14 mg/100 mL , 11.5 to 13 mg/100 mL , 11.5 to 12 mg/100 mL , 5.75 to 34.5 mg/100 mL , 5.75 to 28.75 mg/100 mL, 5.75 to 23 mg/100 mL, 5.75 to 17.25 mg/100 mL, 5.75 to 11.5 mg/100 mL, 11.5 to 34.5 mg/100 mL, 11.5 to 28.75 mg/100 mL, 11.5 to 23 mg/100 mL , 11.5 to 17.25 mg/100 mL, 17.25 to 34.5 mg/100 mL, 17.25 to 28.75 mg/100 mL, 17.25 to 23 mg/100 mL , 23 to 34.5 mg/100 mL, 23 to 28.75 mg/100 mL, or 28.75 to 34.5 mg/100 mL .

The sodium is not particularly limited in terms of the form thereof as long as it is contained in an ingestible form in the oral composition of the present invention, and can be, for example, in the form of at least one selected from the group consisting of sodium chloride, sodium hydroxide, sodium malate, sodium sulfate, sodium citrate (monosodium citrate, disodium citrate, trisodium citrate), sodium phosphate, sodium carbonate, sodium hydrogen carbonate, sodium disulfide, sodium bicarbonate, sodium alginate, sodium arginate, sodium glucoheptanoate, sodium gluconate, monosodium glutamate, sodium tartrate, monosodium aspartate, sodium lactate, sodium caseinate, sodium ascorbate, and a mixture thereof.

In an embodiment of the present invention, sodium from a sodium component (for example, sodium benzoate, sodium sulfite, sodium hyposulfite, sodium dehydroacetate, sodium pyrosulfite, and sodium propionate) used as a preservative is not substantially included in the component (c).

The content of sodium in the beverage can be herein measured by an atomic absorption spectrometry, X-ray fluorescence analysis, and the like. Note that, when an amount of a sodium-containing compound contained in the beverage is known, a value calculated from the contained amount can also be adopted.

In an embodiment of the present invention, an amount of sodium contained in the oral composition can be defined by an amount of sodium source. The "sodium source" means a compound which generates sodium ions when the oral composition is put in the mouth. The amount of the sodium source can be less than 26 mM when the compound contains one sodium atom. In other embodiments of the present invention, the amount of the sodium source is about 25mM or less, about 24mM or less, about 23mM or less, about 22mM or less, about 21mM or less, about 20mM or less, about 19mM or less, about 18mM or less, about 17mM or less, about 16mM or less, about 15mM or less, about 14mM or less, about 13mM or less, about 12mM or less, about 11mM or less, about 10mM or less, about 9.0mM or less, about 8.5mM or less, about 8.0mM or less, about 8.5mM or less, about 7.0mM or less, about 7.5mM or less, about 6.0mM or less, about 5.5mM or less, about 5.0mM or less, about 4.5mM or less, about 4.0mM or less, about 3.5mM or less, about 2.0mM or less, about 1.5mM or less, about 1.0mM or less or about 0.5mM or less. In other embodiments, the amount of the sodium source may be in the range of about 0.1 to about 25mM, about 0.5 to about 25mM, about 1.0 to about 25mM, about 1.5 to about 25mM, about 2.0 to about 25mM, about 2.5 to about 25mM, about 3.0 to about 25mM, about 3.5 to about 25mM, about 4.0 to about 25mM, about 4.5 to about 25mM, about 5.0 to about 25mM, about 5.5 to about 25mM, about 6.0 to about 25mM, about 6.5 to about 25mM, about 7.0 to about 25mM, about 7.5 to about 25mM, about 8.0 to about 25mM, about 8.5 to about 25mM, about 9.0 to about 25mM, about 9.5 to about 25mM, about 0.1 to about 19mM, about 0.5 to about 19mM, about 1.0 to about 19mM, about 1.5 to about 19mM, about 2.0 to about 19mM, about 2.5 to about 19mM, about 3.0 to about 19mM, about 3.5 to about 19mM, about 4.0 to about 19mM, about 4.5 to about 19mM, about 5.0 to about 19mM, about 5.5 to about 19mM, about 6.0 to about 19mM, about 6.5 to about 19mM, about 7.0 to about 19mM, about 7.5 to about 19mM, about 8.0 to about 19mM, about 8.5 to about 19mM, about 9.0 to about 19mM, about 9.5 to about 19mM, about 0.1 to about 15mM, about 0.5 to about 15mM, about 1.0 to about 15mM, about 1.5 to about 15mM, about 2.0 to about 15mM, about 2.5 to about 15mM, about 3.0 to about 15mM, about 3.5 to about 15mM, about 4.0 to about 15mM, about 4.5 to about 15mM, about 5.0 to about 15mM, about 5.5 to about 15mM, about 6.0 to about 15mM, about 6.5 to about 15mM, about 7.0 to about 15mM, about 7.5 to about 15mM, about 8.0 to about 15mM, about 8.5 to about 15mM, about 9.0 to about 15mM, about 9.5 to about 15mM, about 0.1 to about 9.9mM, about 0.5 to about 9.9mM, about 1.0 to about 9.9mM, about 1.5 to about 9.9mM, about 2.0 to about 9.9mM, about 2.5 to about 9.9mM, about 3.0 to about 9.9mM, about 3.5 to about 9.9mM, about 4.0 to about 9.9mM, about 4.5 to about 9.9mM, about 5.0 to about 9.9mM, about 5.5 to about 9.9mM, about 6.0 to about 9.9mM, about 6.5 to about 9.9mM, about 7.0 to about 9.9mM, about 7.5 to about 9.9mM, about 8.0 to about 9.9mM, about 8.5 to about 9.9mM, about 9.0 to about 9.9mM, about 9.5 to about 9.9mM, about 0.1 to about 9.5mM, about 0.1 to about 9.0mM, about 0.1 to about 8.5mM, about 0.1 to about 8.0mM, about 0.1 to about 7.5mM, about 0.1 to about 7.0mM, about 0.1 to about 6.5mM, about 0.1 to about 6.0mM, about 0.1 to about 5.5mM, about 0.1 to about 5.0mM, about 0.1 to about 4.5mM, about 0.1 to about 4.0mM, about 0.1 to about 3.5mM, about 0.1 to about 3.0mM, about 0.1 to about 2.5mM, about 0.1 to about 2.0mM, about 0.1 to about 1.5mM, about 0.1 to about 1.0mM, about 0.1 to about 0.5mM, about 0.5 to about 9.5mM, about 0.5 to about 9.5mM, about 0.5 to about 9.0mM, about 0.5 to about 8.5mM, about 0.5 to about 8.0mM, about 0.5 to about 7.5mM, about 0.5 to about 7.0mM, about 0.5 to about 6.5mM, about 0.5 to about 6.0mM, about 0.5 to about 5.5mM, about 0.5 to about 5.0mM, about 0.5 to about 4.5mM, about 0.5 to about 4.0mM, about 0.5 to about 3.5mM, about 0.5 to about 3.0mM, about 0.5 to about 2.5mM, about 0.5 to about 2.0mM, about 0.5 to about 1.5mM, about 0.5 to about 1.0mM, about 1.0 to about 9.5mM, about 1.0 to about 9.0mM, about 1.0 to about 8.5mM, about 1.0 to about 8.0mM, about 1.0 to about 7.5mM, about 1.0 to about 7.0mM, about 1.0 to about 6.5mM, about 1.0 to about 6.0mM, about 1.0 to about 5.5mM, about 1.0 to about 5.0mM, about 1.0 to about 4.5mM, about 1.0 to about 4.0mM, about 1.0 to about 3.5mM, about 1.0 to about 3.0mM, about 1.0 to about 2.5mM, about 1.0 to about 2.0mM, about 1.0 to about 1.5mM, about 1.5 to about 9.5mM, about 1.5 to about 9.0mM, about 1.5 to about 8.5mM, about 1.5 to about 8.0mM, about 1.5 to about 7.5mM, about 1.5 to about 7.0mM, about 1.5 to about 6.5mM, about 1.5 to about 6.0mM, about 1.5 to about 5.5mM, about 1.5 to about 5.0mM, about 1.5 to about 4.5mM, about 1.5 to about 4.0mM, about 1.5 to about 3.5mM, about 1.5 to about 3.0mM, about 1.5 to about 2.5mM, about 1.5 to about 2.0mM, about 2.0 to about 9.5mM, about 2.0 to about 9.0mM, about 2.0 to about 8.5mM, about 2.0 to about 8.0mM, about 2.0 to about 7.5mM, about 2.0 to about 7.0mM, about 2.0 to about 6.5mM, about 2.0 to about 6.0mM, about 2.0 to about 5.5mM, about 2.0 to about 5.0mM, about 2.0 to about 4.5mM, about 2.0 to about 4.0mM, about 2.0 to about 3.5mM, about 2.0 to about 3.0mM, about 2.0 to about 2.5mM, about 2.5 to about 9.5mM, about 2.5 to about 9.0mM, about 2.5 to about 8.5mM, about 2.5 to about 8.0mM, about 2.5 to about 7.5mM, about 2.5 to about 7.0mM, about 2.5 to about 6.5mM, about 2.5 to about 6.0mM, about 2.5 to about 5.5mM, about 2.5 to about 5.0mM, about 2.5 to about 4.5mM, about 2.5 to about 4.0mM, about 2.5 to about 3.5mM, about 2.5 to about 3.0mM, about 3.0 to about 9.5mM, about 3.0 to about 9.0mM, about 3.0 to about 8.5mM, about 3.0 to about 8.0mM, about 3.0 to about 7.5mM, about 3.0 to about 7.0mM, about 3.0 to about 6.5mM, about 3.0 to about 6.0mM, about 3.0 to about 5.5mM, about 3.0 to about 5.0mM, about 3.0 to about 4.5mM, about 3.0 to about 4.0mM, about 3.0 to about 3.5mM, about 3.5 to about 9.5mM, about 3.5 to about 9.0mM, about 3.5 to about 8.5mM, about 3.5 to about 8.0mM, about 3.5 to about 7.5mM, about 3.5 to about 7.0mM, about 3.5 to about 6.5mM, about 3.5 to about 6.0mM, about 3.5 to about 5.5mM, about 3.5 to about 5.0mM, about 3.5 to about 4.5mM, about 3.5 to about 4.0mM, about 4.0 to about 9.5mM, about 4.0 to about 9.0mM, about 4.0 to about 8.5mM, about 4.0 to about 8.0mM, about 4.0 to about 7.5mM, about 4.0 to about 7.0mM, about 4.0 to about 6.5mM, about 4.0 to about 6.0mM, about 4.0 to about 5.5mM, about 4.0 to about 5.0mM, about 4.0 to about 4.5mM, about 4.5 to about 9.5mM, about 4.5 to about 9.0mM, about 4.5 to about 8.5mM, about 4.5 to about 8.0mM, about 4.5 to about 7.5mM, about 4.5 to about 7.0mM, about 4.5 to about 6.5mM, about 4.5 to about 6.0mM, about 4.5 to about 5.5mM, about 4.5 to about 5.0mM, about 5.0 to about 9.5mM, about 5.0 to about 9.0mM, about 5.0 to about 8.5mM, about 5.0 to about 8.0mM, about 5.0 to about 7.5mM, about 5.0 to about 7.0mM, about 5.0 to about 6.5mM, about 5.0 to about 6.0mM, about 5.0 to about 5.5mM, about 5.5 to about 9.5mM, about 5.5 to about 9.0mM, about 5.5 to about 8.5mM, about 5.5 to about 8.0mM, about 5.5 to about 7.5mM, about 5.5 to about 7.0mM, about 5.5 to about 6.5mM, about 5.5 to about 6.0mM, about 6.0 to about 9.5mM, about 6.0 to about 9.0mM, about 6.0 to about 8.5mM, about 6.0 to about 8.0mM, about 6.0 to about 7.5mM, about 6.0 to about 7.0mM, about 6.0 to about 6.5mM, about 6.5 to about 9.5mM, about 6.5 to about 9.0mM, about 6.5 to about 8.5mM, about 6.5 to about 8.0mM, about 6.5 to about 7.5mM, about 6.5 to about 7.0mM, about 7.0 to about 9.5mM, about 7.0 to about 9.0mM, about 7.0 to about 8.5mM, about 7.0 to about 8.0mM or about 7.0 to about 7.5mM.

[Phospholipid]

A phospholipid used in the present invention is an amphipathic lipid having, in the structure, a phosphorus atom in the form of a phosphoric acid ester. The phospholipid encompasses a glycerophospholipid using glycerin as a skeleton, and a sphingophospholipid using sphingosine as a skeleton. The glycerophospholipid representatively has a structure in which fatty acid is ester-bonded in the 1- and 2-positions, and phosphoric acid is ester-bonded in the 3-position of glycerin, and an alcohol such as choline, ethanolamine, serine, or inositol is ester-bonded to a phosphoric acid group. A polar (hydrophilic) portion including the glycerin, the phosphoric acid group and the alcohol ester is designated as a head, and a nonpolar (hydrophobic) fatty acid is designated as a tail. Besides, a partial structure including the glycerin, the fatty acid, and the phosphoric acid is designated as phosphatidic acid. Non-restrictive examples of the glycerophospholipid include phosphatidylcholine (PC), phosphatidylethanolamine (PE), phosphatidylinositol (PI), phosphatidylserine (PS), phosphatidylglycerol (PG), and cardiolipin. A non-restrictive example of the sphingophospholipid includes sphingomyelin (SM). In a usual phospholipid, two fatty acids are bonded to the basic skeleton of glycerin or sphingosine, and a phospholipid in which merely one fatty acid is bonded is designated as lysophospholipid. Non-restrictive examples of the lysophospholipid include lysoglycerophospholipids such as lysophosphatidylcholine (LPC), lysophosphatidylethanolamine (LPE), lysophosphatidylinositol (LPI), lysophosphatidylserine (LPS), and lysophosphatidylglycerol (LPG), and lysosphingophospholipid such as lysosphingomyelin (LSM). In a lysoglycerophospholipid, fatty acid is bonded to the 1- or 2-position of glycerin. In an embodiment, the phospholipid encompasses lysophospholipids. In an embodiment, the phospholipid encompasses zwitterionic phospholipids. A zwitterionic phospholipid is a lipid having, in a molecule, both a positive charge and a negative charge. Non-restrictive examples of the zwitterionic phospholipid include PC, PE, LPC, and LPE. In a specific embodiment, the phospholipid encompasses zwitterionic lysophospholipids (such as LPC, and LPE).

A fatty acid contained in the phospholipid may be a saturated fatty acid or an unsaturated fatty acid. A phospholipid containing two fatty acids, such as a glycerophospholipid, may have a saturated fatty acid in the 1-position and an unsaturated fatty acid in the 2-position of glycerin, or may have an unsaturated fatty acid in the 1-position and a saturated fatty acid in the 2-position, or alternatively, both of the two may be saturated fatty acids or both of the two may be unsaturated fatty acids. The fatty acid may have various lengths, and the number of carbon atoms contained in the fatty acid is not limited but may be, for example, 8 or more, 10 or more, 12 or more, 14 or more, 15 or more, 16 or more, 8 to 30, 10 to 28, 12 to 26, 14 to 24, 15 to 23, 16 to 22, 8, 9, 10, 12, 14, 15, 16, 17, 18, 20, 22, 24, 26, 28 or 30. A phospholipid containing two fatty acids can contain an optional combination of fatty acids respectively having the numbers of carbon atoms described above. In an embodiment, the number of carbon atoms contained in the fatty acid is 14, 15, 16, 17, 18, 20, 22 or 23. In an embodiment of a phospholipid containing two fatty acids, a combination of the numbers of carbon atoms of the fatty acids is selected from (14, 18), (16, 16), (15, 18), (16, 18), (17, 18), (18, 18), (18, 20), (18, 22) and (18, 23). In an embodiment, molecular species of the fatty acid contained in the phospholipid is selected from (14:0), (15:0), (16:0), (16:1), (17:0), (17:1), (18:0), (18:1), (18:2), (18:3), (20:0), (20:1), (22:0) and (23:0). Here, a numerical value before the colon in parentheses indicates the number of carbon atoms of the fatty acid, and a numerical value after the colon indicates the number of double bonds contained in the fatty acid. For example, (16:1) denotes a fatty acid containing one double bond, and having 16 carbon atoms. In an embodiment, a combination of molecular species of fatty acids contained in a phospholipid containing two fatty acids is selected from (14:0, 18:2), (14:0, 18:1), (16:0, 16:0), (15:0, 18:2), (16:1, 18:2), (16:0, 18:2), (16:0, 18:1), (17:1, 18:2), (17:0, 18:1), (18:3, 18:3), (18:2, 18:3), (18:2, 18:2), (18:1, 18:2), (18:1, 18:1), (18:2, 20:1), (18:2, 20:0), (18:2, 22:0) and (18:2, 23:0).

In a specific embodiment, the phospholipid is selected from LPC(14:0), 2-LPC(16:0), 1-LPC(16:0), LPC(17:0), 2-LPC(18:3), 1-LPC(18:3), LPC(18:2), 2-LPC(18:1), 1-LPC(18:1), LPC(18:0), LPC(20:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0) and PC(18:2, 23:0). Here, LPC indicates lysophosphatidylcholine, 1-LPC indicates lysophosphatidylcholine in which a fatty acid is confirmed to be bonded to the 1-position of glycerin, 2-LPC indicates lysophosphatidylcholine in which a fatty acid is confirmed to be bonded to the 2-position of glycerin, and PC indicates phosphatidylcholine.

The phospholipid may be one purified from a living thing. In an exemplary embodiment, the phospholipid can be from plants (particularly, plants containing fats/oils) such as soybean, rapeseed, sunflower, oil palm, sesame, corn, peanut, olive, cotton, and linum, or egg yolk or the like. In a specific embodiment, the phospholipid is from a plant selected from soybean, rapeseed, sunflower, and oil palm.

The phospholipid may be purified from a living thing, or a commercially available product may be used. The phospholipid can be purified by any of known optional methods. Representatively, a phospholipid can be obtained by squeezing an oil content from a raw material, adding hot water to the oil content to hydrate a phospholipid, collecting a gummy substance, and drying and filtering the resultant. Examples of the commercially available product include Lecion® P, Lecion® LP-1, and Lecimal® EL manufactured by Riken Vitamin Co., Ltd., and SLP-paste, SLP-white, SLP-PC35, SLP-PC70, SLP-PI powder A, SLP-paste lyso, SLP-white lyso, and SLP-LPC70 manufactured by Tsuji Oil Mills Co., Ltd. A phospholipid product for foods is preferred. A product containing a phospholipid is designated as lecithin in some cases.

The oral composition of the present invention may contain one or more phospholipids. The oral composition of the present invention may contain, for example, a mixture of two or more of the above-described phospholipids. A phospholipid purified from a living thing contains a plurality of molecular species in many cases. In a specific embodiment, the phospholipid contains a combination of molecular species selected from Table 2 below.

Table 2 Exemplary combination of molecular species

| | Combination of molecular species |
|---|---|
| 1 | 1-LPC(16:0), 1-LPC(18:3), LPC(18:2), 2-LPC(18:1), 1-LPC(18:1), LPC(18:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0) |
| 2 | 2-LPC(16:0), 1-LPC(16:0), LPC(18:2), 2-LPC(18:1), 1-LPC(18:1), LPC(18:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |
| 3 | PC(16:0, 18:2), PC(16:0, 18:1), PC(18:2, 18:3), PC(18:2, 18:2), PC(18:1, 18:2), PC(18:1, 18:1) |
| 4 | LPC(14:0), 2-LPC(16:0), 1-LPC(16:0), LPC(17:0), 2-LPC(18:3), 1-LPC(18:3), LPC(18:2), 2-LPC(18:1), 1-LPC(18:1), LPC(18:0), LPC(20:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |
| 5 | 2-LPC(16:0), 1-LPC(16:0), LPC(17:0), 2-LPC(18:3), 1-LPC(18:3), LPC(18:2), 2-LPC(18:1), 1-LPC(18:1), LPC(18:0), LPC(20:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |

(continued)

| | Combination of molecular species |
|---|---|
| 6 | 2-LPC(16:0), 1-LPC(16:0), 2-LPC(18:3), 1-LPC(18:3), LPC(18:2), 2-LPC(18:1), 1-LPC(18:1), LPC (18:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18: 2), PC(18:1, 18:2), PC(18:1, 18:1), PC(18:2, 20:1), PC(18:2, 20:0), PC(18:2, 22:0), PC(18:2, 23:0) |
| 7 | 1-LPC(16:0), 2-LPC(18:2), 1-LPC(18:2), PC(16:0, 18:2), PC(18:2, 18:2), PC(18:0, 18:3) |
| 8 | LPC(14:0), LPC(16:0), LPC(18:0), LPC(18:1), PC(16:1, 18:2), PC(16:0, 18:2), PC(18:2, 18:2), PC (14:0, 16:0), PC(14:1, 18:2), PC(15:0, 16:0), PC(15:0, 18:0), PC(16:0, 18:0), PC(18:0, 18:1) |

[Intrinsic phospholipid]

The oral composition of the present invention contains an intrinsic phospholipid. An intrinsic phospholipid refers to a phospholipid contained as an intrinsic component of the oral composition. The intrinsic phospholipid may be from a raw material contained in the oral composition, or may be from an additive usually used in accordance with the type of the oral composition. Non-restrictive examples of the former include a phospholipid from coffee bean in a coffee beverage, a phospholipid from soybean in a soymilk beverage, and a phospholipid from milk in a milk beverage, and a non-restrictive example of the latter includes a phospholipid contained, as an emulsifier, in an ice cream, a margarine, sweets, and a modified milk powder.

[Foreign phospholipid]

The oral composition of the present invention contains (c) a foreign phospholipid in an amount less than a taste recognition threshold. A foreign phospholipid refers to a phospholipid different from the intrinsic phospholipid. It can be said that the foreign phospholipid is a phospholipid other than the intrinsic phospholipid. Regarding being different from the intrinsic phospholipid, for example, when the intrinsic phospholipid is only one type, the foreign phospholipid can be an optional phospholipid (one or a combination of a plurality of phospholipids) other than the intrinsic phospholipid. When the intrinsic phospholipid is a mixture of a plurality of phospholipids, the foreign phospholipid may be a phospholipid not contained in the intrinsic phospholipid, or a combination of phospholipids including that phospholipid. For example, when the intrinsic phospholipid contains a combination of phospholipids A and B, the foreign phospholipid may be a phospholipid C different from the phospholipids A and B, or a combination of the phospholipid C and another optional phospholipid (which may be a combination of phospholipids including the phospholipid A and/or B as long as the phospholipid C is contained). Besides, regarding being different from the intrinsic phospholipid, for example, it may be a phospholipid from a material different from the material (such as a living thing, or foodstuff) from which the intrinsic phospholipid is derived. Specifically, when a coffee beverage contains only a phospholipid from coffee bean, the foreign phospholipid is a phospholipid other than the phospholipid from coffee bean (such as a phospholipid from soybean, rapeseed, sunflower, oil palm, sesame, corn, peanut, olive, cotton, linum, egg yolk, or milk), and when a soymilk beverage contains only a phospholipid from soybean, the foreign phospholipid is a phospholipid other than the phospholipid from soybean (such as a phospholipid from rapeseed, sunflower, oil palm, sesame, corn, peanut, olive, cotton, linum, coffee, egg yolk, or milk), and when a milk beverage contains only a phospholipid from milk, the foreign phospholipid is a phospholipid other than the phospholipid from milk (such as a phospholipid from soybean, rapeseed, sunflower, oil palm, sesame, corn, peanut, olive, cotton, linum, coffee, or egg yolk).
The intrinsic phospholipid and the foreign phospholipid can be distinguished from each other according to the presence of a peculiar molecular species, or a combination of peculiar molecular species. For example, as shown in examples described later, a phospholipid from coffee can be distinguished from a phospholipid from soybean, rapeseed, sunflower, or milk according to the presence of 2-LPC(18:2), 1-LPC(18:2) or PC(18:0, 18:3) a phospholipid from soybean can be distinguished from a phospholipid from rapeseed, sunflower, coffee, or milk according to the presence of 2-LPC (18:3), and a phospholipid from milk can be distinguished from a phospholipid from soybean, rapeseed, sunflower, or coffee according to the presence of C10:0 fatty acid, LPC(14:0), LPC(16:0), LPC(18:1), PC(14:0, 16:0), PC(14:1, 18:2), PC(15:0, 16:0), PC(15:0, 18:0), PC(16:0, 18:0) or PC(18:0, 18:1). The molecular species of a phospholipid are not limited, and can be specified by LC-MS or the like.
As used herein, the threshold of phospholipids, high-intensity sweeteners, and the like means a detection threshold or a taste recognition threshold. The detection threshold means a minimum concentration at which the difference from water can be clearly identified but a type of the taste (for example, bitterness, sourness, and sweetness) does not have to be always recognized, and the taste recognition threshold means a minimum concentration at which a taste can be recognized (for example, Eur J Clin Nutr (2004) 58, 629-636). Additionally, the taste recognition threshold is known to be about 1.5 to 2 times the detection threshold (Yuki Yamauchi et al., WHOLE MOUTH GUSTATORY TEST (PART1) - BASIC CONSIDERATIONS AND PRINCIPAL COMPONENT ANALYSIS -", Journal of The Oto-Rhino-Laryngological Society of Japan, vol. 98 (1995) No. 1, p.119-129, and Reiko Ohmori, "Comparisons of the taste sensitivity between three generations", The bulletin of the Faculty of Education, Utsunomiya University, Section 1 (2013) Vol. 63 p.201-210)).

In the present invention, it is preferable that a measured value be used as the taste recognition threshold. A taste recognition threshold of a substance can be determined by preparing aqueous solutions containing the substance in several concentration levels and tasting in the order from low concentrations to high concentrations to carry out a sensory test by which the taste can be sensed or not. A concentration at which a difference from water is detected is defined as a taste detection threshold and a concentration at which a taste is recognized is defined as a taste recognition threshold. For example, for a substance for which a theoretical value (a literature value) is already established, aqueous solutions in several concentration levels close to such a concentration are prepared and several persons who received sensory trainings carry out the test thereby to determine these thresholds. In an embodiment of the present invention, the taste recognition threshold means a taste recognition threshold in pure water. The taste recognition threshold in pure water means, for example in case of the phospholipid in the oral composition of the present invention, a minimum concentration at which such a taste can be recognized when only the phospholipid is added to water without addition of any sweetener or the like. The taste recognition threshold of the phospholipid can vary depending on species of a living thing from which it is derived, or a combination of molecular species contained therein, and is representatively about 10 to about 250 $\mu$g/mL, and when aqueous solutions at a plurality of concentration levels within this range are prepared, a sensory test can be efficiently performed.

The concentration of the foreign phospholipid contained in the oral composition of the present invention is not limited, and may be, for example, less than about 250 $\mu$g/ mL, less than about 240 $\mu$g/ mL, less than about 230 $\mu$g/ mL, less than about 220 $\mu$g/ mL, less than about 210 $\mu$g/ mL, less than about 200 $\mu$g/ mL, less than about 190 $\mu$g/ mL, less than about 180 $\mu$g/ mL, less than about 170 $\mu$g/ mL, less than about 160 $\mu$g/ mL, less than about 150 $\mu$g/ mL, less than about 140 $\mu$g/ mL, less than about 130 $\mu$g/ mL, less than about 120 $\mu$g/ mL, less than about 110 $\mu$g/ mL, less than about 100 $\mu$g/ mL, less than about 95 $\mu$g/ mL, less than about 90 $\mu$g/ mL, less than about 85 $\mu$g/ mL, less than about 80 $\mu$g/ mL, less than about 75 $\mu$g/ mL, less than about 70 $\mu$g/ mL, less than about 65 $\mu$g/ mL, less than about 60 $\mu$g/ mL, less than about 55 $\mu$g/ mL, less than about 50 $\mu$g/ mL, less than about 45 $\mu$g/ mL, less than about 40 $\mu$g/ mL, less than about 35 $\mu$g/ mL, less than about 30 $\mu$g/ mL, less than about 25 $\mu$g/ mL, less than about 20 $\mu$g/ mL, less than about 19 $\mu$g/ mL, less than about 18 $\mu$g/ mL, less than about 17 $\mu$g/ mL, less than about 16 $\mu$g/ mL, less than about 15 $\mu$g/ mL, less than about 14 $\mu$g/ mL, less than about 13 $\mu$g/ mL, less than about 12.5 $\mu$g/ mL, less than about 12 $\mu$g/ mL, less than about 11 $\mu$g/ mL, less than about 10 $\mu$g/ mL, less than about 9 $\mu$g/ mL, less than about 8 $\mu$g/ mL, less than about 7 $\mu$g/ mL, less than about 6.25 $\mu$g/ mL, less than about 6 $\mu$g/ mL, less than about 5 $\mu$g/ mL, less than about 4 $\mu$g/ mL, less than about 3.125 $\mu$g/ mL, less than about 3 $\mu$g/ mL, less than about 2 $\mu$g/ mL, less than about 1.6125 $\mu$g/ mL, less than about 1.5 $\mu$g/ mL or less than about 1 $\mu$g/ mL.

In an embodiment, the concentration of the foreign phospholipid contained in the oral composition of the present invention is not limited, and may be, for example, about 1.6125 to about 12.5 $\mu$g/ mL, about 3.125 to about 12.5 $\mu$g/ mL, about 3.125 to about 25 $\mu$g/ mL, about 6.25 to about 25 $\mu$g/ mL, about 6.25 to about 50 $\mu$g/ mL, about 12.5 to about 25 $\mu$g/ mL, about 25 to about 50 $\mu$g/ mL, about 100 to about 150 $\mu$g/ mL or about 100 to about 200 $\mu$g/ mL.

[Optional component]

(Sweetener)

The oral composition of the present invention can contain a sweetener other than the high-intensity sweetener of the component (a). In the present description, the "sweetener" means any substance or a substance group which causes a sweetness response. Sweeteners can be classified into carbohydrate sweeteners and non-carbohydrate sweeteners based on structural characteristics and also into low-intensity sweeteners and high-intensity sweeteners based on the degree of sweetness. Further, sweet substances can also be classified based on the energy (calorie) into caloric sweeteners and non-caloric sweeteners. Further, sweet substances can also be classified based on the availability into natural sweeteners and artificial sweeteners.

The carbohydrate sweetener is not limited and examples include starch sugars such as sucrose, lactose, glucose, maltose, starch syrup, a high-fructose corn syrup, and fructose, sugar alcohols such as erythritol, sorbitol, mannitol, maltitol, xylitol, and palatinit, palatinose, fructooligosaccharide, Coupling Sugar®, galactooligosaccharide, lactosucrose, raffinose, soyoligosaccharide, and honey. Further, the carbohydrate sweetener includes rare sugars.

The rare sugar refers to a monosaccharide that occurs in very small quantities in nature and derivatives thereof. For example, the rare sugar includes naturally occurring aldoses other than D-glucose, D-galactose, D-mannose, D-ribose, D-xylose, and L-arabinose, naturally occurring ketoses other than D-fructose, and naturally occurring sugar alcohols other than D-sorbitol. Nonrestrictive examples of the rare sugar include ketoses such as D-tagatose, D-sorbose, D-allulose (D-psicose), L-fructose, L-allulose (L-psicose), L-tagatose, and L-sorbose, aldoses such as altrose and D-allose, and sugar alcohols such as xylitol, erythritol, and D-talitol.

The caloric sweetener typically means sweet substances having an energy of 4 kcal/g. An energy of a sweet substance is already known or can be determined by measuring a content by HPLC or the like and calculating by multiplying the content by an energy conversion factor, or measuring a heat of physical combustion using a calorie meter (for example, bomb calorimeter) and correcting the heat with a digestion-absorption rate, an excreted heat or the like. Nonrestrictive examples of the caloric sweetener include sucrose, lactose, glucose, maltose, starch syrup, a high-fructose corn syrup, and fructose.

The non-caloric sweeteners typically refer to those having the nature of being difficult to be digested in the body and consequently having a reduced energy to be taken into and means sweet substances having an energy of less than 2 kcal/g, preferably less than 1 kcal/g, and further preferably less than 0.5 kcal/g. Nonrestrictive examples of the non-caloric sweetener include non-caloric hexoses such as allulose (psicose) and allose, non-caloric pentoses such as xylose and arabinose, non-caloric tetroses such as erythrose and threose, and non-caloric sugar alcohols such as erythritol and allitol.

Further, the sweet substances can also be classified based on the energy (calorie) level. For example, the sweet substances can be classified into sweet substances having an energy of 4 kcal/g or more and sweet substances having an energy of less than 4 kcal/g. The sweet substances having an energy of less than 4 kcal/g can further be classified into sweet substances having an energy of less than 3 kcal/g, sweet substances having an energy of less than 2.5 kcal/g, sweet substances having an energy of less than 2 kcal/g, sweet substances having an energy of less than 1.5 kcal/g, sweet substances having an energy of less than 1 kcal/g, sweet substances having an energy of less than 0.5 kcal/g, sweet substances having an energy of 1 kcal/g or more and less than 4 kcal/g, sweet substances having an energy of 2 kcal/g or more and less than 4 kcal/g, sweet substances having an energy of 3 kcal/g or more and less than 4 kcal/g, sweet substances having an energy of 2 kcal/g or more and less than 3 kcal/g, sweet substances having an energy of 1 kcal/g or more and less than 2 kcal/g, sweet substances having an energy of 0 kcal/g or more and less than 2 kcal/g, or sweet substances having an energy of 0 kcal/g or more and less than 1 kcal/g. Examples of the sweet substance having an energy of 4 kcal/g or more include sucrose, lactose, glucose, maltose, starch syrup, a high-fructose corn syrup, and fructose, examples of the sweet substance having an energy of 2 kcal/g or more and less than 4 kcal/g include sorbitol, xylitol, D-xylose, D-ribose, D-tagatose, and arabinose, and examples of the sweet substance having an energy of 0 kcal/g or more and less than 2 kcal/g include D-allulose, erythritol, allose, erythrose, threose, and allitol.

The low-intensity sweetener means a compound having about the same degree of sweetness as that of sucrose (for example, less than 5 times, about 0.1 to 2 times, about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharide, maltooligosaccharide, isomaltooligosaccharide, galactooligosaccharide, Coupling Sugar®, and palatinose, and sugar alcohol low-intensity sweeteners such as maltitol, sorbitol, erythritol, xylitol, lactitol, palatinit, and reduced starch saccharified products. Further, the low-intensity sweetener includes rare sugars, caloric sweeteners, non-caloric sweeteners, carbohydrate sweeteners, non-carbohydrate sweeteners, natural sweeteners, and artificial sweeteners as long as the degree of sweetness is in the above range.

The oral composition in an embodiment of the present invention contains a low-intensity sweetener. In this embodiments of the present invention, the following oral composition (hereinafter, also referred to as the oral composition of Embodiment A) is provided.

An oral composition comprising:

(a) a high-intensity sweetener in an amount corresponding to a sweetness intensity X1,
(b) an intrinsic phospholipid,
(c) 60 mg/100 mL or less of sodium,
(d) a foreign phospholipid in an amount less than a taste recognition threshold, and
(e) a low-intensity sweetener in an amount corresponding to a sweetness intensity X6 (hereinafter, sometimes abbreviated as the "component (e)".),

wherein the oral composition has a sweetness of a sweetness intensity X2 exhibited by the components (a) and (b), a sweetness of a sweetness intensity X7 exhibited by the components (a) to (e), and $0.1 < X2 + X6 < X7$ is satisfied. The oral composition in an embodiment of the present invention does not contain a component as a sweetener other than (a) a high-intensity sweetener in an amount corresponding to a sweetness intensity X1 and (e) a low-intensity sweetener in an amount corresponding to a sweetness intensity X6.

In an embodiment of the present invention, the low-intensity sweetener contains a sweetener selected from hexose, pentose, tetrose, a polysaccharide having a terminal sugar of aldose or ketose, sugar alcohols, and a combination thereof. In other embodiments of the present invention, the low-intensity sweetener contains a sweetener selected from glucose, sucrose, fructose, maltose, an oligosaccharide, a high-fructose corn syrup, lactose, psicose, allose, tagatose, xylose, ribose, and a combination thereof. In still another embodiment of the present invention, the low-intensity sweetener contains a sweetener selected from glucose, sucrose, fructose, and a combination thereof.

X6 in the "sweetness intensity X6" may be 0 to 0.5, 0 to 1.0, 0 to 1.5, 0 to 2.0, 0 to 2.5, 0 to 3.0, 0 to 3.5, 0 to 4.0, 0 to 4.5, 0 to 5.0, 0 to 5.5, 0 to 6.0, 0 to 6.5, 0 to 7.0, 0 to 7.5, 0 to 8.0, 0 to 8.25, 0 to 8.5, 0 to 8.75, 0 to 9.0, 0 to 9.25, 0 to 9.5, 0 to 9.75, 0 to 10.0, 0.05 to 0.5, 0.05 to 1.0, 0.05 to 1.5, 0.05 to 2.0, 0.05 to 2.5, 0.05 to 3.0, 0.05 to 3.5, 0.05 to 4.0, 0.05 to 4.5, 0.05 to 5.0, 0.05 to 5.5, 0.05 to 6.0, 0.05 to 6.5, 0.05 to 7.0, 0.05 to 7.5, 0.05 to 8.0, 0.05 to 8.25, 0.05 to 8.5, 0.05 to 8.75, 0.05 to 9.0, 0.05 to 9.25, 0.05 to 9.5, 0.05 to 9.75, 0.05 to 10.0, 0.1 to 0.5, 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.1 to 6.0, 0.1 to 6.5, 0.1 to 7.0, 0.1 to 7.5, 0.1 to 8.0, 0.1 to 8.25, 0.1 to 8.5, 0.1 to 8.75, 0.1 to 9.0, 0.1 to 9.25, 0.1 to 9.5, 0.1 to 9.75, 0.1 to 10.0, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 0.5 to 6.0, 0.5 to 6.5, 0.5 to 7.0, 0.5 to 7.5, 0.5 to 8.0, 0.5 to 8.25, 0.5 to 8.5, 0.5 to 8.75, 0.5 to 9.0, 0.5 to 9.25, 0.5 to 9.5, 0.5 to 9.75, 0.5 to 10.0, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.0 to 5.5, 1.0 to 6.0, 1.0 to 6.5, 1.0 to 7.0, 1.0 to 7.5, 1.0 to 8.0, 1.0 to 8.25, 1.0 to 8.5, 1.0 to 8.75, 1.0 to 9.0, 1.0 to 9.25, 1.0 to 9.5, 1.0 to 9.75, 1.0 to 10.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 1.5 to 6.0, 1.5 to 6.5, 1.5 to 7.0, 1.5 to 7.5, 1.5 to 8.0, 1.5 to 8.25, 1.5 to 8.5, 1.5 to 8.75, 1.5 to 9.0, 1.5 to 9.25, 1.5 to 9.5, 1.5 to 9.75, 1.5 to 10.0, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.0 to 6.0, 2.0 to 6.5, 2.0 to 7.0, 2.0 to 7.5, 2.0 to 8.0, 2.0 to 8.25, 2.0 to 8.5, 2.0 to 8.75, 2.0 to 9.0, 2.0 to 9.25, 2.0 to 9.5, 2.0 to 9.75, 2.0 to 10.0, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 2.5 to 6.0, 2.5 to 6.5, 2.5 to 7.0, 2.5 to 7.5, 2.5 to 8.0, 2.5 to 8.25, 2.5 to 8.5, 2.5 to 8.75, 2.5 to 9.0, 2.5 to 9.25, 2.5 to 9.5, 2.5 to 9.75, 2.5 to 10.0, 0.1 to 5.9, 3.0 to 3.5, 3.0 to 4.0, 3.0 to 4.5, 3.0 to 5.0, or 3.0 to 5.5.

X6 may also be 0 to 10.5, 0 to 11.0, 0 to 11.5, 0 to 12.0, 0 to 12.5, 0 to 13.0, 0 to 13.5, 0 to 14.0, 0 to 14.5, 0 to 15.0, 0.05 to 10.5, 0.05 to 11.0, 0.05 to 11.5, 0.05 to 12.0, 0.05 to 12.5, 0.05 to 13.0, 0.05 to 13.5, 0.05 to 14.0, 0.05 to 14.5, 0.05 to 15.0, 0.1 to 10.5, 0.1 to 11.0, 0.1 to 11.5, 0.1 to 12.0, 0.1 to 12.5, 0.1 to 13.0, 0.1 to 13.5, 0.1 to 14.0, 0.1 to 14.5, 0.1 to 15.0, 0.5 to 10.5, 0.5 to 11.0, 0.5 to 11.5, 0.5 to 12.0, 0.5 to 12.5, 0.5 to 13.0, 0.5 to 13.5, 0.5 to 14.0, 0.5 to 14.5, 0.5 to 15.0, 1.0 to 10.5, 1.0 to 11.0, 1.0 to 11.5, 1.0 to 12.0, 1.0 to 12.5, 1.0 to 13.0, 1.0 to 13.5, 1.0 to 14.0, 1.0 to 14.5, 1.0 to 15.0, 1.5 to 10.5, 1.5 to 11.0, 1.5 to 11.5, 1.5 to 12.0, 1.5 to 12.5, 1.5 to 13.0, 1.5 to 13.5, 1.5 to 14.0, 1.5 to 14.5, 1.5 to 15.0, 2.0 to 10.5, 2.0 to 11.0, 2.0 to 11.5, 2.0 to 12.0, 2.0 to 12.5, 2.0 to 13.0, 2.0 to 13.5, 2.0 to 14.0, 2.0 to 14.5, 2.0 to 15.0, 2.5 to 10.5, 2.5 to 11.0, 2.5 to 11.5, 2.5 to 12.0, 2.5 to 12.5, 2.5 to 13.0, 2.5 to 13.5, 2.5 to 14.0, 2.5 to 14.5 or 2.5 to 15.0.

The amount corresponding to a sweetness intensity X6 of a low-intensity sweetener refers to an amount (concentration) which provides a sweetness of a sweetness intensity X6 under the conditions when the low-intensity sweetener is dissolved in water having the same volume as the oral composition of the present invention at 20°C.

X7 is not particularly limited as long as it is greater than X2 + X6 and may be 4.0 to 20, 4.0 to 15, 4.0 to 12.5, 4.0 to 10, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15 or 10.5 to 12.5

X7 may also be 4.0 to 18, 4.0 to 16, 4.0 to 15.5, 4.0 to 14, 4.5 to 18, 4.5 to 16, 4.5 to 15.5, 4.5 to 14, 5.0 to 18, 5.0 to 16, 5.0 to 15.5, 5.0 to 14, 5.5 to 18, 5.5 to 16, 5.5 to 15.5, 5.5 to 14, 6.0 to 18, 6.0 to 16, 6.0 to 15.5, 6.0 to 14, 6.5 to 18, 6.5 to 16, 6.5 to 15.5, 6.5 to 14, 7.0 to 18, 7.0 to 16, 7.0 to 15.5, 7.0 to 14, 7.5 to 18, 7.5 to 16, 7.5 to 15.5, 7.5 to 14, 7.5 to 9, 7.5 to 8, 8.0 to 18, 8.0 to 18, 8.0 to 16, 8.0 to 15.5, 8.0 to 14, 8.5 to 18, 8.5 to 16, 8.5 to 15.5, 8.5 to 14, 9.0 to 18, 9.0 to 16, 9.0 to 15.5, 9.0 to 14, 9.5 to 18, 9.5 to 16, 9.5 to 15.5, 9.5 to 14, 10.0 to 18, 10.0 to 16, 10.0 to 15.5, 10.5 to 18, 10.5 to 16 or 10.5 to 15.5.

(Other components)

The oral composition of the present invention can suitably contain an antioxidant (sodium erythorbate or the like), an emulsifier (sucrose esters of fatty acids, sorbitan esters of fatty acids, polyglycerin esters of fatty acids or the like), an acidulant (phosphoric acid, citric acid, malic acid or the like), and a flavor, as long as the effects of the present invention are not affected.

[Exemplary embodiments of the oral composition of the present invention]

In an embodiment of the present invention, a composition is provided comprising:

(a) a high-intensity sweetener in an amount corresponding to a sweetness intensity X1,
(b) an intrinsic phospholipid,
(c) 60 mg/100 mL or less, 3 to 60 mg/100 mL, 4 to 60 mg/100 mL or 5 to 50 mg/100 mL of sodium, and
(d) a foreign phospholipid in an amount less than a taste recognition threshold,

wherein the oral composition has a sweetness of a sweetness intensity X2 exhibited by the components (a) and (b), and a sweetness of a sweetness intensity X3 exhibited by the components (a) to (d), and $0.1 < X2 < X3$ is satisfied, wherein the high-intensity sweetener comprises a high-intensity sweetener selected from RebA, RebD, RebM, MogV, a luo han guo extract, and a combination thereof, preferably a high-intensity sweetener selected from RebD, RebM, and a combination thereof,
X2 is 0.5 to 9.0, preferably 1.0 to 8.0, and more preferably 2.0 to 6.0.

In the present embodiment, the amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm.

In an embodiment of the present invention, an oral composition is provided comprising:

(a) about 20 to about 600ppm of a high-intensity sweetener,
(b) an intrinsic phospholipid,
(c) 60 mg/100 mL or less, 3 to 60 mg/100 mL, 4 to 60 mg/100 mL or 5 to 50 mg/100 mL of sodium, and
(d) less than about 250 $\mu$g/ mL, about 10 to about 250 $\mu$g/ mL, about 1.6125 to about 12.5 $\mu$g/ mL, about 3.125 to about 12.5 $\mu$g/ mL, about 3.125 to about 25 $\mu$g/ mL, about 6.25 to about 25 $\mu$g/ mL, about 6.25 to about 50 $\mu$g/ mL, about 12.5 to about 25 $\mu$g/ mL, about 25 to about 50 $\mu$g/ mL, about 100 to about 150 $\mu$g/ mL or about 100 to about 200 $\mu$g/ mL of a foreign phospholipid,

wherein the high-intensity sweetener optionally comprises a high-intensity sweetener selected from RebA, RebD, RebM, MogV, a luo han guo extract, and a combination thereof, preferably a high-intensity sweetener selected from RebD, RebM, MogV, a luo han guo extract, and a combination thereof, more preferably a high-intensity sweetener selected from RebD, RebM, and a combination thereof.

In an embodiment of the present invention, a coffee beverage is provided comprising:

(a) about 20 to about 600ppm of a high-intensity sweetener,
(b) an intrinsic phospholipid from coffee,
(c) 60 mg/100 mL or less, 3 to 60 mg/100 mL, 4 to 60 mg/100 mL or 5 to 50 mg/100 mL of sodium, and
(d) about 10 to about 250 $\mu$g/ mL, about 1.6125 to about 12.5 $\mu$g/ mL, about 3.125 to about 12.5 $\mu$g/ mL, about 3.125 to about 25 $\mu$g/ mL, about 6.25 to about 25 $\mu$g/ mL, about 6.25 to about 50 $\mu$g/ mL, about 12.5 to about 25 $\mu$g/ mL, about 25 to about 50 $\mu$g/ mL, about 100 to about 150 $\mu$g/ mL or about 100 to about 200 $\mu$g/ mL of a foreign phospholipid, for example, less than about 25 $\mu$g/ mL, about 3.125 to about 25 $\mu$g/ mL or about 6.25 to about 25 $\mu$g/ mL of phospholipid from soybean.

wherein the high-intensity sweetener comprises a high-intensity sweetener selected from RebA, RebD, RebM, MogV, a luo han guo extract, and a combination thereof, preferably a high-intensity sweetener selected from RebD, RebM, MogV, a luo han guo extract, and a combination thereof, more preferably a high-intensity sweetener selected from RebD, RebM, and a combination thereof.

In an embodiment of the present invention, a coffee beverage with milk is provided comprising:

(a) about 20 to about 600ppm of a high-intensity sweetener,
(b) an intrinsic phospholipid from coffee and milk,
(c) 60 mg/100 mL or less, 3 to 60 mg/100 mL, 4 to 60 mg/100 mL or 5 to 50 mg/100 mL of sodium, and
(d) about 10 to about 250 $\mu$g/ mL, about 1.6125 to about 12.5 $\mu$g/ mL, about 3.125 to about 12.5 $\mu$g/ mL, about 3.125 to about 25 $\mu$g/ mL, about 6.25 to about 25 $\mu$g/ mL, about 6.25 to about 50 $\mu$g/ mL, about 12.5 to about 25 $\mu$g/ mL, about 25 to about 50 $\mu$g/ mL, about 100 to about 150 $\mu$g/ mL or about 100 to about 200 $\mu$g/ mL of a foreign phospholipid, for example, less than about 25 $\mu$g/ mL, about 3.125 to about 25 $\mu$g/ mL or about 6.25 to about 25 $\mu$g/ mL of phospholipid from soybean.

wherein the high-intensity sweetener comprises a high-intensity sweetener selected from RebA, RebD, RebM, MogV, a luo han guo extract, and a combination thereof, preferably a high-intensity sweetener selected from RebD, RebM, MogV, a luo han guo extract, and a combination thereof, more preferably a high-intensity sweetener selected from RebD, RebM, and a combination thereof.

## 2. Method for producing an oral composition

The present invention provides, as the second embodiment, the following method for producing the oral composition with an enhanced sweetness (hereinafter, referred to as "the production method of the present invention").

A method for producing the oral composition of the present invention comprising, to a raw material of the oral composition comprising the intrinsic phospholipid:

(a) adding a high-intensity sweetener in an amount corresponding to a sweetness intensity X1,
(b) adding sodium to obtain a sodium content in the composition of 60 mg/100 mL or less, and
(c) adding a foreign phospholipid in an amount less than a taste recognition threshold.

The oral composition produced by the method of the present invention is the oral composition of the present invention described in the above section "1. Oral composition in which sweetness exhibited by high-intensity sweetener is increased." Additionally, the "raw material" in the method of the present invention can be each material or a mixture thereof required for the production of the oral composition, and can further include additional components such as a preservative, a flavor, a carrier, a fruit juice. The "raw material" can be made up of several materials.

In the method of the present invention, any of the following (a) to (c) can be carried out first.

(a) adding the high-intensity sweetener in an amount corresponding to a sweetness intensity X1,
(b) adding the sodium to obtain a sodium content in the composition of 60 mg/100 mL or less, and
(c) adding the foreign phospholipid in an amount less than a taste recognition threshold.

Two or more steps can be carried out simultaneously. For example, (a) and (b), (a) and (c), (b) and (c), or (a) and (b) and (c) can be carried out simultaneously.

In Step (a), a high-intensity sweetener in an amount corresponding to a sweetness intensity X1 is added to the raw material, but a high-intensity sweetener in an amount corresponding to a sweetness intensity X1 does not need to be added at once, and can be added in several divided batches.

Similarly, when sodium is added in Step (b) to obtain a sodium content in the composition of 60 mg/100 mL or less, sodium does not need to be added at once but can be added in several divided batches. Sodium (or a sodium source) added to the raw material in Step (b) can be selected from sodium (or the sodium sources) described in the above section "1. Oral composition in which sweetness exhibited by high-intensity sweetener is increased."

Similarly, when a foreign phospholipid of less than a taste recognition threshold is added in Step (c), the foreign phospholipid of less than a taste recognition threshold does not need to be added at once but can be added in several divided batches. The foreign phospholipid added to the raw material in Step (c) can be selected from the phospholipids described in the above section "1. Oral composition in which sweetness exhibited by high-intensity sweetener is increased" other than an intrinsic phospholipid.

The "addition" herein means not only the actual operation of adding either of the component (a): a high-intensity sweetener in an amount corresponding to a sweetness intensity X1, the component (c): 60 mg/100 mL or less of sodium, and the component (d): a foreign phospholipid in an amount less than a taste recognition threshold to the raw materials but also the operation of adjusting amounts of the components (a), (c), and (d) to predetermined amounts respectively in the oral composition to be finally produced through the production process of the oral composition of the present invention.

For example, a case in which when the first raw material contains a fruit juice, a grain, and extracts thereof and accordingly the raw material contains one or more of any of the components (a), (c), and (d) in advance, and the second raw material to be mixed with the first raw material also contains the components (a), (c), and (d) whereby the oral composition of the present invention can be produced by mixing the first and the second raw materials, the operation of individually adding the components (a), (c), and (d) to the raw materials is not carried out but in the method of the present invention Steps (a) to (c) are considered to have been carried out as long as the oral composition of the present invention to be finally produced comprises (a) a high-intensity sweetener in an amount corresponding to a sweetness intensity X1, (c) 60 mg/100 mL or less of sodium, and (d) a foreign phospholipid in an amount less than a taste recognition threshold.

The production method of an embodiment of the present invention (hereinafter, also referred to as the production method of Embodiment A) further comprises adding (d) a low-intensity sweetener in an amount corresponding to a sweetness intensity X6. The production method of Embodiment A enables the production of the oral composition of the Embodiment A. Steps (a) to (d) can be carried out separately, or 2 or more steps can be carried out simultaneously. For example, (a) and (b), (a) and (c), (a) and (d), (b) and (c), (b) and (d), (c) and (d), (a) and (b) and (c), (a) and (b) and (d), (a) and (c) and (d), (b) and (c) and (d), or (a) and (b) and (c) and (d) can be carried out simultaneously.

In the method of the present invention, the "oral composition", "sweetness intensity X1", "high-intensity sweetener", "sweetness intensity X2", an amount of sodium, form of sodium in the oral composition, "phospholipid", "sweetness intensity X3", "optional component", "low-intensity sweetener", "sweetness intensity X5", "sweetness intensity X6", "other components", and energy are defined as described in the above section for the oral composition, and the numerical values described in the above section for the oral composition are applicable to the numerical values as they are.

3. Method of enhancing a sweetness of the oral composition

The present invention provides, as the third embodiment, a method for enhancing a sweetness of an oral composition (hereinafter, referred to as "the sweetness enhancement method of the present invention").

An embodiment of the sweetness enhancement method of the present invention relates to a method of enhancing a sweetness of an oral composition provided by a high-intensity sweetener, the method comprising, in a production of an oral composition comprising an intrinsic phospholipid:

(a) adding a high-intensity sweetener in an amount of a taste recognition threshold or more,
(b) adding sodium to obtain a sodium content in the composition of 60 mg/100 mL or less, and
(c) adding a foreign phospholipid in an amount less than a taste recognition threshold.

Another embodiment of the sweetness enhancement method of the present invention relates to a method of enhancing a sweetness of an oral composition comprising adding 60 mg/100 mL or less of sodium and a foreign phospholipid of less than a taste recognition threshold to an oral composition comprising a high-intensity sweetener of a taste recognition threshold or more and an intrinsic phospholipid.

According to the sweetness enhancement method of the present invention, a sweetness of an oral composition comprising an intrinsic phospholipid is enhanced, and thus, an oral composition having a sweetness beyond a sweetness intensity obtained when a component (a'): a high-intensity sweetener in an amount of a taste recognition threshold or more is simply added to the oral composition can be provided. Specifically, sodium and a foreign phospholipid are simultaneously or separately added to an oral composition containing an intrinsic phospholipid and a high-intensity sweetener in an amount of a taste recognition threshold or more, so that the oral composition comprises 60 mg/100 mL or less of sodium and the foreign phospholipid in an amount less than a taste recognition threshold after the addition, and thus, the oral composition is provided with a sweetness beyond a sweetness intensity obtained only by adding a high-intensity sweetener in an amount of a taste recognition threshold or more. Here, the high-intensity sweetener need not be comprised in the oral composition before adding the sodium and the foreign phospholipid, but may be added to the oral composition simultaneously with the sodium and/or the foreign phospholipid, or may be added to the oral composition after the sodium and/or the foreign phospholipid was/were added. The amount of the sodium (or a sodium source) to be added can be selected from the amounts described above in the section "1. Oral composition in which sweetness exhibited by high-intensity sweetener is increased". Besides, the type and the amount of the foreign phospholipid to be added can be selected to accord with the type and the amount of the foreign phospholipid in the oral composition described above in the section "1. Oral composition in which sweetness exhibited by high-intensity sweetener is increased".

In still another embodiment of the sweetness enhancement method of the present invention, addition of (e'): a low-intensity sweetener in an amount of a taste recognition threshold or more may be further included.

According to the sweetness enhancement method of this embodiment, a sweetness of an oral composition is enhanced, and thus, an oral composition having a sweetness beyond a sweetness intensity obtained when a component (a'): a high-intensity sweetener in an amount of a taste recognition threshold or more and (e'): a low-intensity sweetener in an amount of a taste recognition threshold or more are simply added to the oral composition can be provided. Specifically, sodium (or a sodium source) and a foreign phospholipid are simultaneously or separately added to an oral composition containing an intrinsic phospholipid, and a high-intensity sweetener and a low-intensity sweetener in an amount of a taste recognition threshold or more, so that the oral composition comprises 60 mg/100 mL or less,, 3 to 60 mg/100 mL, 4 to 60 mg/100 mL or 5 to 50 mg/100 mL of sodium and the foreign phospholipid in an amount less than a taste recognition threshold after the addition, and thus, the oral composition is provided with a sweetness beyond a sweetness intensity obtained only by adding a high-intensity sweetener and a low-intensity sweetener in an amount of a taste recognition threshold or more.

In yet another embodiment of the sweetness enhancement method of the present invention, provided is a method of enhancing a sweetness of an oral composition comprising making an oral composition comprising an intrinsic phospholipid to comprise

(b) a foreign phospholipid of less than a taste recognition threshold;

(c) 60 mg/100 mL or less of sodium; and

(d') a low-intensity sweetener in an amount of a taste recognition threshold.

According to the sweetness enhancement method of this embodiment, a sweetness of an oral composition is enhanced, and thus, an oral composition having a sweetness beyond a sweetness intensity obtained when a component (d') is simply added to the oral composition can be provided. Specifically, sodium (or a sodium source) and a foreign phospholipid are simultaneously or separately added to an oral composition containing an intrinsic phospholipid and a low-intensity sweetener in an amount of a taste recognition threshold or more, so that the oral composition comprises 60 mg/100 mL or less, 3 to 60 mg/100 mL, 4 to 60 mg/100 mL or 5 to 50 mg/100 mL of sodium and the foreign phospholipid in an amount less than a taste recognition threshold after the addition, and thus, the oral composition is provided with a sweetness beyond a sweetness intensity obtained only by adding a low-intensity sweetener in an amount of a taste recognition threshold or more. In this embodiment also, the amount of the sodium (or a sodium source) to be added can be selected from the amounts described above in the section " 1. Oral composition in which sweetness exhibited by high-intensity sweetener is increased". Besides, the type and the amount of the foreign phospholipid to be added can be selected to accord with the type and the amount of the foreign phospholipid in the oral composition described above in the section " 1. Oral composition in which sweetness exhibited by high-intensity sweetener is increased".

In an embodiment of the present invention, 60 mg/100 mL or less of sodium and a phospholipid in an amount less than a taste recognition threshold are added to an oral composition containing a high-intensity sweetener in an amount corresponding to a sweetness intensity X1 and/or a low-intensity sweetener in an amount corresponding to a sweetness intensity X6. In another embodiment of the present invention, the amount of the sodium to be added is an amount such that a sodium content in the oral composition become 60 mg/100 mL or less, 3 to 60 mg/100 mL, 4 to 60 mg/100 mL, or 5 to 50 mg/mL. In another embodiment, the amount of the sodium may be an amount such that a sodium content in the oral composition in the range of 0.1 to 60 mg/100 mL, 0.1 to 55 mg/100 mL, 0.1 to 50 mg/100 mL, 0.1 to 45 mg/100 mL, 0.1 to 40 mg/100 mL, 0.1 to 35 mg/100 mL, 0.1 to 30 mg/100 mL, 0.1 to 25 mg/100 mL, 0.1 to 20 mg/100 mL, 0.1 to 19 mg/100 mL, 0.1 to 18 mg/100 mL, 0.1 to 17 mg/100 mL, 0.1 to 16 mg/100 mL, 0.1 to 15 mg/100 mL, 0.1 to 14 mg/100 mL, 0.1 to 13 mg/100 mL, 0.1 to 12 mg/100 mL, 0.1 to 11 mg/100 mL, 0.1 to 10 mg/100 mL, 1 to 60 mg/100 mL, 1 to 55 mg/100 mL, 1 to 50 mg/100 mL, 1 to 45 mg/100 mL, 1 to 40 mg/100 mL, 1 to 35 mg/100 mL, 1 to 30 mg/100 mL, 1 to 25 mg/100 mL, 1 to 20 mg/100 mL, 1 to 19 mg/100 mL, 1 to 18 mg/100 mL, 1 to 17 mg/100 mL, 1 to 16 mg/100 mL, 1 to 15 mg/100 mL, 1 to 14 mg/100 mL, 1 to 13 mg/100 mL, 1 to 12 mg/100 mL, 1 to 11 mg/100 mL, 1 to 10 mg/100 mL, 5 to 60 mg/100 mL, 5 to 55 mg/100 mL, 5 to 50 mg/100 mL, 5 to 45 mg/100 mL, 5 to 40 mg/100 mL, 5 to 35 mg/100 mL, 5 to 30 mg/100 mL, 5 to 25 mg/100 mL, 5 to 20 mg/100 mL, 5 to 19 mg/100 mL, 5 to 18 mg/100 mL, 5 to 17 mg/100 mL, 5 to 16 mg/100 mL, 5 to 15 mg/100 mL, 5 to 14 mg/100 mL, 5 to 13 mg/100 mL, 5 to 12 mg/100 mL, 5 to 11 mg/100 mL, 5 to 10 mg/100 mL, 7 to 60 mg/100 mL, 7 to 55 mg/100 mL, 7 to 50 mg/100 mL, 7 to 45 mg/100 mL, 7 to 40 mg/100 mL, 7 to 35 mg/100 mL, 7 to 30 mg/100 mL, 7 to 25 mg/100 mL, 7 to 20 mg/100 mL, 7 to 19 mg/100 mL, 7 to 18 mg/100 mL, 7 to 17 mg/100 mL, 7 to 16 mg/100 mL, 7 to 15 mg/100 mL, 10 to 60 mg/100 mL, 10 to 55 mg/100 mL, 10 to 50 mg/100 mL, 10 to 45 mg/100 mL, 10 to 40 mg/100 mL, 10 to 35 mg/100 mL, 10 to 30 mg/100 mL, 10 to 25 mg/100 mL, 10 to 20 mg/100 mL, 10 to 19 mg/100 mL, 10 to 18 mg/100 mL, 10 to 17 mg/100 mL, 10 to 16 mg/100 mL, 10 to 15 mg/100 mL, 15 to 60 mg/100 mL, 15 to 55 mg/100 mL, 15 to 50 mg/100 mL, 15 to 45 mg/100 mL, 15 to 40 mg/100 mL, 15 to 35 mg/100 mL, 15 to 30 mg/100 mL, 15 to 25 mg/100 mL, 15 to 20 mg/100 mL, 20 to 60 mg/100 mL, 20 to 55 mg/100 mL, 20 to 50 mg/100 mL, 20 to 45 mg/100 mL, 20 to 40 mg/100 mL, 20 to 35 mg/100 mL, 20 to 30 mg/100 mL, 20 to 25 mg/100 mL, 25 to 60 mg/100 mL, 25 to 55 mg/100 mL, 25 to 50 mg/100 mL, 25 to 45 mg/100 mL, 25 to 40 mg/100 mL, 25 to 35 mg/100 mL, 25 to 30 mg/100 mL, 30 to 60 mg/100 mL, 30 to 55 mg/100 mL, 30 to 50 mg/100 mL, 30 to 45 mg/100 mL, 30 to 40 mg/100 mL, 30 to 35 mg/100 mL, 35 to 60 mg/100 mL, 35 to 55 mg/100 mL, 35 to 50 mg/100 mL, 35 to 45 mg/100 mL, 35 to 40 mg/100 mL, 40 to 60 mg/100 mL, 40 to 55 mg/100 mL, 40 to 50 mg/100 mL, 40 to 45 mg/100 mL, 45 to 60 mg/100 mL, 45 to 55 mg/100 mL, 45 to 50 mg/100 mL, 50 to 60 mg/100 mL, 50 to 55 mg/100 mL or 55 to 60 mg/100 mL.

In an embodiment of the present invention, the amount of the foreign phospholipid to be added may be an amount such that a sodium content in the oral composition become less than about 250 μg/ mL, less than about 240 μg/ mL, less than about 230 μg/ mL, less than about 220 μg/ mL, less than about 210 μg/ mL, less than about 200 μg/ mL, less than about 190 μg/ mL, less than about 180 μg/ mL, less than about 170 μg/ mL, less than about 160 μg/ mL, less than about 150 μg/ mL, less than about 140 μg/ mL, less than about 130 μg/ mL, less than about 120 μg/ mL, less than about 110 μg/ mL, less than about 100 μg/ mL, less than about 95 μg/ mL, less than about 90 μg/ mL, less than about 85 μg/ mL, less than about 80 μg/ mL, less than about 75 μg/ mL, less than about 70 μg/ mL, less than about 65 μg/ mL, less than about 60 μg/ mL, less than about 55 μg/ mL, less than about 50 μg/ mL, less than about 45 μg/ mL, less than about 40 μg/ mL, less than about 35 μg/ mL, less than about 30 μg/ mL, less than about 25 μg/ mL, less than about 20 μg/ mL, less than about 19 μg/ mL, less than about 18 μg/ mL, less than about 17 μg/ mL, less than about 16 μg/ mL, less than about 15 μg/ mL, less than about 14 μg/ mL, less than about 13 μg/ mL, less than about 12.5 μg/ mL, less than about 12 μg/ mL, less than about 11 μg/ mL, less than about 10 μg/ mL, less than about 9 μg/ mL, less than

about 8 $\mu g/$ mL, less than about 7 $\mu g/$ mL, less than about 6.25 $\mu g/$ mL, less than about 6 $\mu g/$ mL, less than about 5 $\mu g/$ mL, less than about 4 $\mu g/$ mL, less than about 3.125 $\mu g/$ mL, less than about 3 $\mu g/$ mL, less than about 2 $\mu g/$ mL, less than about 1.6125 $\mu g/$ mL, less than about 1.5 $\mu g/$ mL, less than about 1 $\mu g/$ mL, less than about 1.6125 to about 12.5 $\mu g/$ mL, about 3.125 to about 12.5 $\mu g/$ mL, about 3.125 to about 25 $\mu g/$ mL, about 6.25 to about 25 $\mu g/$ mL, about 6.25 to about 50 $\mu g/$ mL, about 12.5 to about 25 $\mu g/$ mL, about 25 to about 50 $\mu g/$ mL, about 100 to about 150 $\mu g/$ mL or about 100 to about 200 $\mu g/$ mL.

In the sweetness enhancement method of the present invention, the "oral composition", "sweetness intensity X1", "high-intensity sweetener", "sweetness intensity X2", an amount of sodium, form of sodium in the oral composition, "phospholipid", "sweetness intensity X3", "optional component", "low-intensity sweetener", "sweetness intensity X5", "sweetness intensity X6", "other components", and energy are defined as described in the above section for the oral composition, and the numerical values described in the above section for the oral composition are applicable to the numerical values as they are.

## 4. Method of enhancing a texture of the oral composition

The present invention provides, as the fourth embodiment, a method for enhancing a texture of an oral composition comprising an intrinsic phospholipid (hereinafter, referred to as "the texture enhancement method of the present invention").

An embodiment of the sweetness enhancement method of the present invention relates to a method of enhancing a texture of an oral composition provided by a high-intensity sweetener, the method comprising, in a production of an oral composition comprising an intrinsic phospholipid:

(a) adding a high-intensity sweetener in an amount of a taste recognition threshold or more,
(b) adding sodium to obtain a sodium content in the composition of 60 mg/100 mL or less, and
(c) adding a foreign phospholipid in an amount less than a taste recognition threshold.

Another embodiment of the texture enhancement method of the present invention relates to a method of enhancing a texture of an oral composition comprising adding 60 mg/100 mL or less of sodium and a foreign phospholipid of less than a taste recognition threshold to an oral composition comprising an intrinsic phospholipid and a high-intensity sweetener of a taste recognition threshold or more.

According to the texture enhancement method of the present invention, a texture of an oral composition is enhanced, and thus, an oral composition having a texture beyond a texture intensity obtained when a component (a'): a high-intensity sweetener in an amount of a taste recognition threshold or more is simply added to the oral composition can be provided. Specifically, sodium and a foreign phospholipid are simultaneously or separately added to an oral composition containing an intrinsic phospholipid and a high-intensity sweetener in an amount of a taste recognition threshold or more, so that the oral composition comprises 60 mg/100 mL or less of sodium and the foreign phospholipid in an amount less than a taste recognition threshold after the addition, and thus, the texture of the oral composition can be increased than a texture obtained only by adding a high-intensity sweetener in an amount of a taste recognition threshold or more. The amount of the sodium (or a sodium source) to be added can be selected from the amounts described above in the section " 1. Oral composition in which texture exhibited by high-intensity sweetener is increased". Besides, the type and the amount of the foreign phospholipid to be added can be selected to accord with the type and the amount of the foreign phospholipid in the oral composition described above in the section " 1. Oral composition in which texture exhibited by high-intensity sweetener is increased".

In the texture enhancement method of the present invention, the "oral composition", "high-intensity sweetener", an amount of sodium, form of sodium in the oral composition, "phospholipid", "texture" and the like are defined as described in the above section for the oral composition, and the numerical values described in the above section for the oral composition are applicable to the numerical values as they are.

## 5. Concentrate for providing the oral composition

The present invention provides, as the fifth embodiment, a concentrate for providing the following oral composition (hereinafter, referred to as "the enhancement method of the present invention").

An oral composition comprising:

(a) a high-intensity sweetener in an amount corresponding to a sweetness intensity X1,
(b) an intrinsic phospholipid,
(c) 60 mg/100 mL or less of sodium, and
(d) a foreign phospholipid in an amount less than a taste recognition threshold,

wherein the oral composition has a sweetness of a sweetness intensity X2 exhibited by the components (a) and (b), and a sweetness of a sweetness intensity X3 exhibited by the components (a) to (d), and 0.1 < X2 < X3 is satisfied.

The concentrate of the present invention is diluted in any ratio and used for providing the oral composition. The "oral composition" is the same as described in "1. Oral composition in which sweetness exhibited by high-intensity sweetener is increased." For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold, or 10-fold and used. Further, the concentrate of the present invention is preferable in the aspects of preservability and transportability because it is concentrated. The concentrate of the present invention can be solid or liquid.

The concentrate of the present invention is 2 to 10-fold concentrate, preferably 3 to 9-fold concentrate, more preferably 4 to 8-fold concentrate, and further preferably 5 to 7-fold concentrate, of the oral composition of the present invention.

The concentrate in an embodiment of the present invention is 5-fold concentrate of the oral composition of the present invention and comprises:

(a) a high-intensity sweetener in an amount corresponding to a sweetness intensity X1a,
(b) an intrinsic phospholipid in an amount of 5-fold of the amount of the oral composition,
(c) 300 mg/100 mL or less of sodium, and
(d) a foreign phospholipid in an amount less than 5-fold of a taste recognition threshold,

wherein the oral composition has a sweetness of a sweetness intensity X2a exhibited by the components (a) and (b), and a sweetness of a sweetness intensity X3a exhibited by the components (a) to (d), and 0.5 < X2a < X3a < 100, preferably 1.0 < X2a < X3a < 50, and more preferably 2.0 < X2a < X3a < 25 is satisfied.

The concentrate in an embodiment of the present invention is 10-fold concentrate of the oral composition of the present invention and comprises:

(a) a high-intensity sweetener in an amount corresponding to a sweetness intensity X1b,
(b) an intrinsic phospholipid in an amount of 10-fold of the amount of the oral composition,
(c) 600 mg/100 mL or less of sodium, and
(d) a foreign phospholipid in an amount less than 10-fold of a taste recognition threshold,

wherein the oral composition has a sweetness of a sweetness intensity X2b exhibited by the components (a) and (b), and a sweetness of a sweetness intensity X3a exhibited by the components (a) to (d), and 1.0 < X2b < X3b < 200, preferably 2.0 < X2b < X3b < 100, and more preferably 4.0 < X2b < X3b < 50 is satisfied.

6. Oral composition with enhanced texture

The present invention provides, as the sixth embodiment, the following oral composition (hereinafter, referred to as "the oral composition A of the present invention").

An oral composition comprising:

(a) a high-intensity sweetener at a taste recognition threshold or more,
(b) an intrinsic phospholipid,
(c) 60 mg/100 mL or less of sodium, and
(d) a foreign phospholipid of less than a taste recognition threshold,

wherein the oral composition has an increased texture by the components (c) to (d).

In the oral composition A of the present invention, the "oral composition", "high-intensity sweetener", an amount of sodium, form of sodium in the oral composition, "phospholipid", "taste recognition threshold", "low-intensity sweetener", "texture", "other components", and energy are defined as described in the above section for the oral composition, and the numerical values described in the above section for the oral composition are applicable to the numerical values as they are.

7. Alternative use of lipid other than phospholipid

In another embodiment of the present invention, the oral composition may contain, instead of the component (d): a foreign phospholipid in an amount less than a taste recognition threshold, a lipid other than a phospholipid in an amount less than a taste recognition threshold as a component (d'). Examples of such a lipid include lipids containing a fatty acid having 8 to 22 carbon atoms, such as triglyceride (particularly, triglyceride containing a fatty acid having 8 or 10 carbon atoms, such as ACTOR M-1), and oils/fats from hydrogenated coconut oil (such as EMAFAT Co-7). The sweetness enhancement effect can be obtained also by these lipids. Alternative use of a lipid other than the foreign phospholipid is applicable to the production method, the sweetness enhancement method, the texture increase method, and the concentrate of the present invention.

In the present description, the term "about" means that a subject matter is in ranges of ±25%, ±10%, ±5%, ±3%, ±2%, or ±1%, of the numerical value following the "about." For example, "about 10" means a range from 7.5 to 12.5. In the present description, the "mM" means a molar concentration and means $1 \times 10^{-3}$ mol/L.

EXAMPLES

Hereinafter, the present invention will be described with reference to Examples, etc. However, the present invention is not limited by these specific embodiments.

[Example 1] Evaluation of sweetness enhancement effect by addition of sodium and phospholipid (1)

In order to evaluate the sweetness enhancement effect obtained by adding a lipid and sodium to a sweet beverage, a sensory evaluation was carried out for beverages respectively using various lipid materials shown in Table 3.
1 w/v% of sucrose (manufactured by Pacific Sugar Mfg. Co., Ltd. (the same in the following examples), sweetness intensity of 1), 3.5 w/v% of glucose (manufactured by Showa Sangyo Co., Ltd., (the same in the following examples), sweetness intensity of about 2.3), 208 ppm of Rebaudioside D (RebD) (purity of 95% or more (the same in the following examples), sweetness intensity of 4.7), and 5 mM sodium gluconate (purity of 98% or more (the same in the following examples), 11.5 mg/100 mL in terms of Na) were dissolved in pure water to obtain a control beverage (Control), and to this control beverage, each of lipid materials having various concentrations in an amount less than a taste recognition threshold shown in Table 3 was added to obtain a test beverage. The taste recognition threshold of each lipid material was previously determined by a sensory test. The sweetness enhancement effect by a lipid was verified by sensorily comparing a sweetness intensity of each test beverage with a sweetness intensity of the control beverage. The evaluation was carried out by those (4 to 8 persons) who received sensory trainings as panelists by a three-alternative forced choice method for choosing "test beverage being sweeter", "control beverage being sweeter", and "equivalent sweetness". Of those who carried out the evaluation, the breakdowns and ratios of persons who sensed the sweetness enhanced as compared with the control beverage were shown in a result column of Table 4. For example, regarding a test beverage that was evaluated by 7 persons and sensed for sweetness enhancement by 4 persons, "4/7" was shown in a breakdown column, and 57 was shown in a % column. It is known from WO2018/225817 that sodium enhances the sweetness of a sweet beverage, and therefore, the evaluation of sweetness enhanced in this experiment means that sweetness already enhanced by sodium was further enhanced by the lipid.

Table 3 List of lipid materials tested

| Product name | Origin | Features | Components | Taste recognition threshold (μg/mL) |
|---|---|---|---|---|
| Lecion P | Soybean | High purity lecithin | Lecithin | 100~200 |
| Lecimal EL | Soybean | Enzyme-decomposed lecithin | Lysolecithin | 100~200 |
| ACTOR M-1 | | containing triglyceride of C8: C10 of about 6:4 | Edible fat/oil (triglyceride of C8: C10 of about 6:4), vitamin E | 200 |
| EMAFAT PA (N) | Oil palm | Powdered fat/oil from palm oil | Edible fat/oil, starch degradation product, casein Na, emulsifier, vitamin E | 50 |
| EMAFAT CO-7 | Palm | Powdered fat/oil from hydrogenated coconut oil | Edible fat/oil, starch degradation product, casein Na, emulsifier | 25~50 |
| SLP-white | Soybean | High purity powder lecithin | Lecithin | 25~50 |
| SLP-white lyso | Soybean | High purity enzyme-decomposed powder lecithin | Lysolecithin | 25 |
| SLP-PC70 | Soybean | Fractionated lecithin containing 70% or more of PC | Lecithin | 3.125 |

(continued)

| Product name | Origin | Features | Components | Taste recognition threshold (μg/mL) |
|---|---|---|---|---|
| SLP-LPC70 | Soybean | Enzyme-decomposed lecithin containing 65 to 75% of LPC | Lysolecithin | 3.125 |
| - | Rapeseed | Lecithin paste | Lecithin | 25 |
| - | Sunflower | Powder lecithin | Lecithin | 12.5~25 |
| * Lecion P, Lecimal EL, ACTOR M-1, EMAFAT PA (N), and EMAFAT CO-7: manufactured by Riken Vitamin Co., Ltd., SLP-white, SLP-white lyso, SLP-PC70 and SLP-LPC70: manufactured by Tsuji Oil Mills Co., Ltd. | | | | |

Table 4 Sensory test results (Sweetness enhancement

| Product name | Concentration (μg/ mL) | Results | |
|---|---|---|---|
| | | Breakdown | % |
| Lecion P | 100 | 4/4 | 100 |
| | 200 | 2/4 | 50 |
| Lecimal EL | 100 | 4/4 | 100 |
| | 200 | 2/4 | 50 |
| ACTOR M-1 | 25 | 5/8 | 63 |
| | 100 | 4/8 | 50 |
| EMAFAT PA(N) | 6.25 | 5/8 | 63 |
| | 25 | 4/8 | 50 |
| EMAFAT CO-7 | 6.25 | 3/8 | 38 |
| | 25 | 4/8 | 50 |
| SLP-white | 6.25 | 6/8 | 75 |
| | 25 | 6/8 | 75 |
| SLP-white lyso | 6.25 | 2/6 | 33 |
| | 12.5 | 2/6 | 33 |
| | 25 | 6/6 | 100 |
| | 50 | 1/6 | 17 |
| SLP-PC70 | 3.125 | 3/7 | 43 |
| | 12.5 | 4/7 | 57 |
| SLP-LPC70 | 1.6125 | 2/8 | 25 |
| | 3.125 | 3/8 | 38 |
| | 3.125 | 1/7 | 14 |
| | 12.5 | 2/7 | 29 |
| Lecithin paste from rapeseed | 3.125 | 4/6 | 67 |
| | 6.25 | 2/6 | 33 |
| | 12.5 | 3/6 | 50 |
| | 25 | 3/6 | 50 |

(continued)

| Product name | Concentration (μg/ mL) | Results | |
|---|---|---|---|
| | | Breakdown | % |
| Powder lecithin from sunflower | 3.125 | 6/8 | 75 |
| | 12.5 | 4/8 | 50 |

[Example 2] Study of molecular species contained in lipid material

Molecular species of a free fatty acid, LPC and PC contained in a lipid material were analyzed.

(1) Analysis of free fatty acid

(i) Preparation of standard solution

Fatty acid standard reagents shown in Table 5 were dissolved in solvents (methanol, acetone, and chloroform) to prepare standard undiluted solutions. The standard undiluted solutions were mixed, and the resultant was appropriately diluted with methanol to prepare a standard solution having concentrations of the respective fatty acids of 10 ng/mL to 5000 ng/mL. At this point, an internal standard (fatty acid-$^{18}O_2$, 67 types, manufactured by Chemicals Evaluation and Research Institute, Japan (CERI)) was added to the standard solution to a concentration of 100 ng/mL in the standard solution.

Table 5 Fatty acid standard reagents

| Fatty acid | Molecular species | Purity | Manufacturer |
|---|---|---|---|
| Caprylic acid | 8:0 | ≥97% | FUJIFILM Wako Pure Chemical Corporation |
| Capric acid | 10:0 | 98% | FUJIFILM Wako Pure Chemical Corporation |
| Lauric acid | 12:0 | ≥98% | FUJIFILM Wako Pure Chemical Corporation |
| Myristic acid | 14:0 | ≥98% | FUJIFILM Wako Pure Chemical Corporation |
| Palmitic acid | 16:0 | ≥95% | Tokyo Chemical Industry Co., Ltd. |
| Stearic acid | 18:0 | ≥98% | Tokyo Chemical Industry Co., Ltd. |
| Oleic acid | 18:1n-9 | ≥99% | Sigma-Aldrich |
| Linoleic acid | 18:2n-6 | ≥98% | FUJIFILM Wako Pure Chemical Corporation |
| α-Linoleic acid | 18:3n-3 | ≥98% | Cayman Chemical |
| Erucic acid | 22:1n-9 | ≥98% | Cayman Chemical |

(ii) Preparation of lipid extract

To about 50 mg of each lipid material shown in Table 6 and used in Example 2, 1 mL of methanol/chloroform (1/1 v/v) was added, the resultant was subjected to ultrasonic extraction, was shaken with a multi-shaker for 5 minutes, and was centrifuged with a high speed refrigerated micro centrifuge (MX-207, manufactured by Tomy Seiko Co., Ltd.) to prepare a lipid extract. Besides, a blank operation was also carried out.

Table 6 List of lipid materials

| Material name | Article name, etc. |
|---|---|
| A | Lecithin paste from rapeseed |
| B | Powder lecithin from sunflower |
| C | EMAFAT PA(N) |
| D | EMAFAT CO-7 |

(continued)

| Material name | Article name, etc. |
|---|---|
| E | ACTOR M-1 |
| F | SLP-LPC70 |
| G | SLP-PC70 |
| H | SLP-white lyso |
| I | SLP-white |

(iii) Preparation and analysis of analysis sample

The lipid extract obtained in the (ii) described above was appropriately diluted with methanol to prepare an analysis sample. At this point, the internal standard (fatty acid-$^{18}O_2$) was added thereto to a concentration of 100 ng/mL in the analysis sample. A free fatty acid composition of the thus obtained analysis sample was analyzed under analysis conditions shown in Table 7.

Table 7 Free fatty acid analysis conditions

| Device | LC: Prominence XR (Shimadzu Corporation)<br>MS: LTQ Orbitrap XL (Thermo Fisher Scientific) |
|---|---|
| Column | L-column 3 ODS (2.1 mm I.D.×150 mm, particle size 2 μm, CERT) |
| Flow rate | 0.3 mL/min |
| Column temperature | 40°C |
| Sampler temperature | 4°C |
| Injection amount | 3 μL |
| Ionization method | Thermo electrospray ionization method |
| Measurement mode | Full scan (Negative) |
| Mass range (m/z) | 140 to 460 |

For detecting a peak, analysis software, Xcalibur ver. 2.1.0 (Thermo Fisher Scientific) was used. Regarding ions of a fatty acid to be analyzed, a chromatogram was output with a mass error of 10 ppm. An area value of the detected peak was divided by a peak area value of the internal standard (fatty acid-$^{18}O_2$) to calculate a ratio. A calibration curve was created based on a peak area ratio of the standard solution and the concentration thereof, and the calibration curve and a peak area ratio of the sample were used to calculate a free fatty acid concentration in the sample. A lower limit of quantification was calculated based on a lowest concentration at which a signal noise ratio (S/N) exceeded 10 in the analysis of the standard solution, and using the amount of the sample, a final volume and the like.

(iv) Analysis results

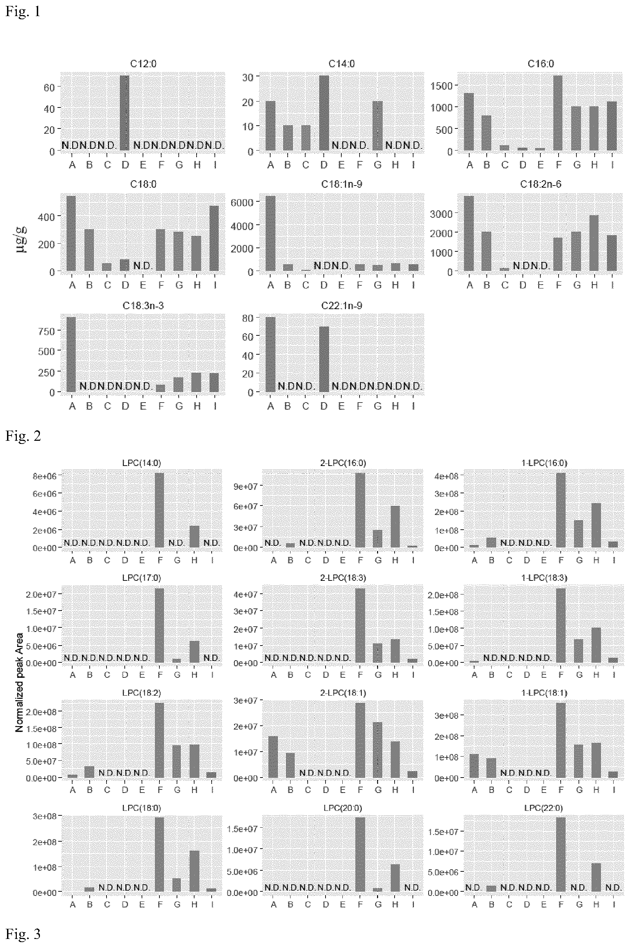

Concentrations of free fatty acids detected in each sample are shown in Table 8 and Figure 1.

Table 8 Concentrations of free fatty acids in each lipid sample (μg/g)

| Molecular species | A | B | C | D | E | F | G | H | I | Lower limit of quantification |
|---|---|---|---|---|---|---|---|---|---|---|
| 8:0 | N.D. | N.D. | N.D. | N.D. | N.D. | N.D. | N.D. | N.D. | N.D. | 1000 |
| 10:0 | N.D. | N.D. | N.D. | N.D. | N.D. | N.D. | N.D. | N.D. | N.D. | 100 |
| 12:0 | N.D. | N.D. | N.D. | (70) | N.D. | N.D. | N.D. | N.D. | N.D. | 100 |
| 14:0 | 20 | (10) | (10) | 30 | N.D. | N.D. | (20) | N.D. | N.D. | 20 |
| 16:0 | 1300 | 790 | 100 | 50 | 30 | 1700 | 1000 | 1000 | 1100 | 20 |

(continued)

| Molecular species | A | B | C | D | E | F | G | H | I | Lower limit of quantification |
|---|---|---|---|---|---|---|---|---|---|---|
| 18:0 | 540 | 300 | 50 | 80 | N.D. | 300 | 280 | 250 | 470 | 20 |
| 18:1n-9 | 6400 | 580 | 70 | N.D. | N.D. | 560 | 450 | 620 | 560 | 20 |
| 18:2n-6 | 3800 | 2000 | 130 | N.D. | N.D. | 1700 | 2000 | 2800 | 1800 | 20 |
| 18:3n-3 | 900 | N.D. | N.D. | N.D. | N.D. | 80 | 170 | 230 | 220 | 20 |
| 22:1n-9 | 60 | N.D. | N.D. | 70 | N.D. | N.D. | N.D. | N.D. | N.D. | 100 |
| N.D.: Not detected | | | | | | | | | | |

Values under the lower limit of quantification are indicated within parentheses as reference values.

(2) LPC and PC analysis

(i) Preparation and analysis of analysis sample

An analysis sample was prepared by adding 500 ng/mL of phosphatidylcholine 16:0 D31-18:1 (Avanti Polar Lipids) in methanol to 2 μL of the lipid extract obtained in the (1) (ii) described above. Besides, 10 μL each of analysis samples thus prepared was collected, and the resultants were mixed to prepare a QC sample. LPC and PC compositions of the thus obtained analysis sample were analyzed under analysis conditions shown in Table 9.

Table 9 Analysis conditions for LPC and PC

| Device | LC: Prominence XR (Shimadzu Corporation)<br>MS: LTQ Orbitrap XL (Thermo Fisher Scientific) |
|---|---|
| Column | L-column 2 ODS Metal free (2 mm I.D.×50 mm, particle size 3 μm, CERI) |
| Flow rate | 0.3 mL/min |
| Column temperature | 40°C |
| Sampler temperature | 4°C |
| Injection amount | 3 μL |
| Ionization method | Thermo electrospray ionization method |
| Measurement mode | Full scan (Negative) |
| Resolution | 30,000 |
| Mass range (m/z) | 200 to 1,600 |

For estimation of lipid molecular species and alignment between measurement samples, analysis software, Lipid Search Ver. 4.2 (MITSUI KNOWLEDGE INDUSTRY CO., LTD.) was used. Under conditions shown in Table 10 and Table 11, peak picking, lipid molecular species estimation processing, and alignment processing were executed. Out of peaks estimated to be derived from LPC and PC, the estimation result was employed for only peaks satisfying all the conditions shown in Table 12. Besides, an area value of a detected peak in each sample was corrected in accordance with the following equation using the peak area value of phosphatidylcholine 16:0 D31-18:1 used as the internal standard:

$$[NMArea] = [MainArea] \times \frac{[MainArea_{IS,Min}]}{[MainArea_{IS}]}$$

[NMArea]: each corrected peak area value in each sample
[MainArea]: each peak area value in each sample
[MainArea IS]: peak area value of phosphatidylcholine 16:0 D31-18:1 in each sample
[Mainarea IS,Min]: minimum peak area value of phosphatidylcholine 16:0 D31-18:1 in all samples

Table 10 Conditions for peak detection and lipid molecular species estimation

| Database | General | |
|---|---|---|
| | Labeled GPL, GL, SP, ChE | |
| Peak Detection | Recalc Isotope | on |
| | R.T. Interval (Min) | 0.0 |
| Search Options | Search Type | Product |
| | Exp Type | LC |
| | Precursor Tol. | 5.0 ppm |
| | Product Tol. | 0.5 Da |
| | Intensity threshold | 1.0% production |
| | m-score threshold | 5.0 |
| Quantitation | MZ tol | -5.0 +5.0 ppm |
| | RT range (min.) | -0.5 +0.5 |
| Class | Target Class: | LPC, PC |
| Ion | Negative: | -H, +HCOO, +CH$_3$COO |
| | Positive: | +H, +NH$_4$, +Na |

Table 11 Conditions for alignment processing

| Integration method | Average |
|---|---|
| R.T. tolerance | 0.25 |
| Main Node Filter | All isomer peaks |
| m-Score Threshold | 5.0 |

Table 12 Conditions for employing estimation results by Lipid Search

| Items | Conditions |
|---|---|
| Peak area | Peak area being 500,000 or more |
| SN ratio | SN ratio being 3 or more |
| Coefficient of variation in sample measurement | Detected in QC measurement, the coefficient of variation being less than 15% |
| Retention time | Reasonability between estimated result and retention time |
| Precursor ion | not stable isotope |
| Product ion | Specific product ion being detected in each lipid class |

(ii) Analysis results

Out of LPC and PC detected in each sample, molecular species satisfying the employed conditions are shown in Tables 13 and 14. Besides, normalized peak area values of respective molecular species in the respective samples are illustrated in Figures 2 and 3.

Table 13 LPC and PC detected in analysis samples

| Lipid class | Lipid molecular species |
|---|---|
| LPC (12 species) | LPC(14:0) 2-LPC(16:0) 1-LPC(16:0) LPC(17:0) 2-LPC(18:3) 1-LPC(18:3) LPC(18:2) 2-LPC(18:1) 1-LPC(18:1) LPC(18:0) LPC(20:0) LPC(22:0) |

(continued)

| Lipid class | Lipid molecular species |
|---|---|
| PC (18 species) | PC(14:0, 18:2) PC(14:0, 18:1) PC(16:0, 16:0) PC(15:0, 18:2) PC(16:1, 18:2) PC(16:0, 18:2) PC (16:0, 18:1) PC(17:1, 18:2) PC(17:0, 18:1) PC(18:3, 18:3) PC(18:2, 18:3) PC(18:2, 18:2) PC(18: 1, 18:2) PC(18:1, 18:1) PC(18:2, 20:1) PC(18:2, 20:0) PC(18:2, 22:0) PC(18:2, 23:0) |

Table 14 LPC and PC detected in each analysis sample

| | Combination of molecular species |
|---|---|
| A | 1-LPC(16:0), 1-LPC(18:3), LPC(18:2), 2-LPC(18:1), 1-LPC(18:1), LPC(18:0), PC(14:0, 18:2), PC(14: 0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18: 1), PC(18:2, 20:1), PC(18:2, 20:0) |
| B | 2-LPC(16:0), 1-LPC(16:0), LPC(18:2), 2-LPC(18:1), 1-LPC(18:1), LPC(18:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18: 1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |
| C | PC(16:0, 18:2), PC(16:0, 18:1), PC(18:2, 18:3), PC(18:2, 18:2), PC(18:1, 18:2), PC(18:1, 18:1) |
| D | - |
| E | - |
| F | LPC(14:0), 2-LPC(16:0), 1-LPC(16:0), LPC(17:0), 2-LPC(18:3), 1-LPC(18:3), LPC(18:2), 2-LPC(18: 1), 1-LPC(18:1), LPC(18:0), LPC(20:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC (18:3, 18:3), PC(18:2, 18:3), PC(18:2, 18:2), PC(18:1, 18:2), PC(18:1, 18:1), PC(18:2, 20:1), PC(18: 2, 20:0), PC(18:2, 22:0), PC(18:2, 23:0) |
| G | 2-LPC(16:0), 1-LPC(16:0), LPC(17:0), 2-LPC(18:3), 1-LPC(18:3), LPC(18:2), 2-LPC(18:1), 1-LPC (18:1), LPC(18:0), LPC(20:0), PC(14:0, 18:2), PC(14:0, 18:1), PC(16:0, 16:0), PC(15:0, 18:2), PC (16:1, 18:2), PC(16:0, 18:2), PC(16:0, 18:1), PC(17:1, 18:2), PC(17:0, 18:1), PC(18:3, 18:3), PC(18: 2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |
| H | LPC(14:0), 2-LPC(16:0), 1-LPC(16:0), LPC(17:0), 2-LPC(18:3), 1-LPC(18:3), LPC(18:2), 2-LPC(18: 1), 1-LPC(18:1), LPC(18:0), LPC(20:0), LPC(22:0), PC(14:0, 18:2), PC(14:0, 18:1), PC(16:0, 16:0), PC(15:0, 18:2), PC(16:1, 18:2), PC(16:0, 18:2), PC(16:0, 18:1), PC(17:1, 18:2), PC(17:0, 18:1), PC (18:3, 18:3), PC(18:2, 18:3), PC(18:2, 18:2), PC(18:1, 18:2), PC(18:1, 18:1), PC(18:2, 20:1), PC(18: 2, 20:0), PC(18:2, 22:0), PC(18:2, 23:0) |
| I | 2-LPC(16:0), 1-LPC(16:0), 2-LPC(18:3), 1-LPC(18:3), LPC(18:2), 2-LPC(18:1), 1-LPC(18:1), LPC (18:0), PC(14:0, 18:2), PC(14:0, 18:1), PC(16:0, 16:0), PC(15:0, 18:2), PC(16:1, 18:2), PC(16:0, 18: 2), PC(16:0, 18:1), PC(17:1, 18:2), PC(17:0, 18:1), PC(18:3, 18:3), PC(18:2, 18:3), PC(18:2, 18:2), PC(18:1, 18:2), PC(18:1, 18:1), PC(18:2, 20:1), PC(18:2, 20:0), PC(18:2, 22:0), PC(18:2, 23:0) |

[Example 3] Study of molecular species contained in intrinsic phospholipid of foods

Molecular species of an intrinsic free fatty acid, LPC and PC contained in a food were analyzed.

(1) Analysis of free fatty acid

(i) Preparation of standard solution

Fatty acid standard reagents shown in Table 5 above were dissolved in solvents (methanol, acetone, and chloroform) to prepare standard undiluted solutions. The standard undiluted solutions were mixed, and the resultant was appropriately diluted with methanol to prepare a standard solution having concentrations of the respective fatty acids of 10 ng/mL to 2500 ng/mL. At this point, an internal standard (fatty acid-$^{18}O_2$, 67 types, manufactured by Chemicals Evaluation and Research Institute, Japan (CERI)) was added to the standard solution to a concentration of 200 ng/mL in the standard solution.

(ii) Preparation of lipid extract

After freeze drying 400 μL and 200 μL each of a coffee extract (mixture of a coffee extract and a pH adjuster, caffeine content: 40 mg/100 mL, sodium content: 17.7 mg/100 g, the same in the following examples), 0.5 mL of methanol was added thereto to be subjected to ultrasonic extraction, and then the resultant was shaken with a multi-shaker for 5 minutes. To the resultant, 0.5 mL of chloroform was further added to be subjected to ultrasonic extraction, the resultant was shaken with a multi-shaker for 5 minutes, and then centrifuged with a high speed refrigerated micro centrifuge (MX-207, manufactured by Tomy Seiko Co., Ltd.), and a supernatant was collected to prepare a lipid extract. Besides, a blank operation was also carried out.

To about 50 mg and about 10 mg each of a skimmed milk powder (Yotsuba Milk Products Co., Ltd., the same in the following examples), 0.5 mL of methanol was added, and the resultant was subjected to ultrasonic extraction, and shaking with a multi-shaker for 5 minutes. To the resultant, 0.5 mL of chloroform was further added to be subjected to ultrasonic extraction, the resultant was shaken with a multi-shaker for 5 minutes, and then centrifuged with a high speed refrigerated micro centrifuge (MX-207, manufactured by Tomy Seiko Co., Ltd.), and a supernatant was collected to prepare a lipid extract. Besides, a blank operation was also carried out.

(iii) Preparation and analysis of analysis sample

After drying each lipid extract obtained in the (ii) described above, the resultant was dissolved again in methanol to prepare an analysis sample. At this point, the internal standard (fatty acid-$^{18}O_2$) was added thereto to a concentration of 200 ng/mL in the analysis sample. A free fatty acid composition of the thus obtained analysis sample was analyzed under analysis conditions shown in Table 7.

For detecting a peak, analysis software, MRMPROBS ver.2.60 (RIKEN) was used. Regarding ions of a fatty acid to be analyzed, a chromatogram was output with a mass error of 10 ppm. An area value of the detected peak was divided by a peak area value of the internal standard (fatty acid-$^{18}O_2$) to calculate a ratio. A calibration curve was created based on a peak area ratio of the standard solution and the concentration thereof, and the calibration curve and a peak area ratio of the sample were used to calculate a free fatty acid concentration in the sample. A lower limit of quantification was calculated based on a lowest concentration at which a signal noise ratio (S/N) exceeded 10 in the analysis of the standard solution, and using the amount of the sample, a final volume and the like.

(iv) Analysis results

Concentrations of free fatty acids detected in each sample are shown in Tables 15 to 16.

Table 15 Concentrations of intrinsic free fatty acids in coffee (μg/g)

| Molecular species | Concentration | Lower limit of quantification |
|---|---|---|
| 8:0 | N.D. | 25 |
| 10:0 | N.D. | 15 |
| 12:0 | 9 | 5 |
| 14:0 | N.D. | 5 |
| 16:0 | N.D. | 5 |
| 18:0 | N.D. | 5 |
| 18:1n-9 | 7 | 5 |
| 18:2n-6 | 38 | 5 |
| 18:3n-3 | N.D. | 5 |
| 22:1n-9 | N.D. | 25 |
| N.D.: Not detected | | |

Table 16 Concentrations of intrinsic free fatty acids in skimmed milk ($\mu$g/g)

| Molecular species | Concentration | Lower limit of quantification |
|---|---|---|
| 8:0 | N.D. | 5 |
| 10:0 | 5 | 2 |
| 12:0 | 9 | 1 |
| 14:0 | 18 | 1 |
| 16:0 | 32 | 1 |
| 18:0 | 6 | 1 |
| 18:1n-9 | 12 | 1 |
| 18:2n-6 | 2 | 1 |
| 18:3n-3 | N.D. | 1 |
| 22:1n-9 | N.D. | 5 |
| N.D.: Not detected | | |

(2) LPC and PC analysis

(i) Preparation and analysis of analysis sample

After drying each lipid extract obtained in the (1) (ii) described above, a known amount of phosphatidylcholine 16:0 D31-18:1 (Avanti Polar Lipids) was added thereto to prepare an analysis sample. LPC and PC compositions of the thus obtained analysis sample were analyzed under analysis conditions shown in Table 9.

For estimation of lipid molecular species and alignment between measurement samples, analysis software, Lipid Search Ver. 4.2 (MITSUI KNOWLEDGE INDUSTRY CO., LTD.) was used. Under conditions shown in Table 10 and Table 11, peak picking, lipid molecular species estimation processing, and alignment processing were executed. Out of peaks estimated to be derived from LPC and PC, the estimation result was employed for only peaks satisfying all the conditions shown in Table 17. Besides, an area value of a detected peak in each sample was corrected in accordance with the following equation using the peak area value of phosphatidylcholine 16:0 D31-18:1 used as the internal standard:

$$[NMArea] = [MainArea] \times \frac{[MainArea_{IS,Min}]}{[MainArea_{IS}]} \div [Concentration\ ratio] \div [Sample\ weight]$$

[NMArea]: each corrected peak area value in each sample
[MainArea]: each peak area value in each sample
[MainArea IS]: peak area value of phosphatidylcholine 16:0 D31-18:1 in each sample
[Mainarea IS,Min]: minimum peak area value of phosphatidylcholine 16:0 D31-18:1 in all samples
[Concentration ratio]: concentration ratio of sample
[Sample weight]: mass (mg) of sample

Table 17 Conditions for employing estimation results by Lipid Search

| Items | Conditions |
|---|---|
| Peak area | Peak area being 100,000 or more |
| SN ratio | SN ratio being 3 or more |
| Coefficient of variation in sample measurement | Coefficient of variation being less than 15% in three rounds of analysis |
| Retention time | Reasonability between estimated result and retention time |
| Precursor ion | not stable isotope |

(continued)

| Items | Conditions |
|---|---|
| Product ion | Specific product ion being detected in each lipid class |

(ii) Analysis results

Molecular species detected in each sample are shown in Tables 18 and 19.

Table 18 Corrected peak area of lipid molecular species detected in each sample

| Molecular species | Coffee | Skimmed milk |
|---|---|---|
| LPC(14:0) | N.D. | 3248 |
| LPC(16:0) | 86 | 19010 |
| LPC(18:0) | N.D. | 5612 |
| LPC(18:1) | N.D. | 6637 |
| 2-Acyl-LPC(18:2) | 12 | N.D. |
| 1-Acyl-LPC(18:2) | 256 | N.D. |
| PC(14:0 16:0) | N.D. | 296164 |
| PC(14:1 18:2) | N.D. | 78886 |
| PC(15:0 16:0) | N.D. | 76404 |
| PC(15:0 18:0) | N.D. | 47013 |
| PC(16:0 18:0) | N.D. | 89114 |
| PC(16:0 18:2) | 185 | 187376 |
| PC(16:1 18:2) | N.D. | 35690 |
| PC(18:0 18:1) | N.D. | 170649 |
| PC(18:0 18:3) | 59 | N.D. |
| PC(18:2 18:2) | 98 | 36606 |
| N.D.: Not detected | | |

Table 19 Combination of lipid molecular species detected in each sample analyzed

| | Combination of molecular species |
|---|---|
| Coffee | LPC(16:0) 2-Acyl-LPC(18:2) 1-Acyl-LPC(18:2) PC(16:0, 18:2) PC(18:0 18:3) PC(18:2 18:2) |
| Skimmed milk | LPC(14:0) LPC(16:0) LPC(18:0) LPC(18:1) PC(14:0, 16:0) PC(14:1, 18:2) PC(15:0, 16:0) PC(15:0, 18:0) PC(16:0, 18:0) PC(16:0, 18:2) PC(16:1, 18:2) PC(18:0, 18:1) PC(18:2, 18:2) |
| *1-Acyl-LPC and 2-Acyl-LPC are abbreviated respectively as 1-LPC and 2-LPC in some cases. | |

[Example 4] Measurement of taste recognition threshold of phospholipid

Aqueous solutions of phospholipids from soybean, oil palm, rapeseed, and sunflower in concentrations shown in Table 20 below were prepared. As a phospholipid from soybean, SLP-white (material I of Example 2) was used, as a phospholipid from oil palm, EMAFAT PA(N) (material C of Example 2) was used, as a phospholipid from rapeseed, paste lecithin from rapeseed (material A of Example 2) was used, and as a phospholipid from sunflower, powder lecithin from sunflower (material B of Example 2) was used (the same in Examples 5 to 10). Each sample contained only water and the phospholipid. These samples were evaluated by those (6 to 8 persons) who received sensory trainings as panelists based on the following criteria:
Evaluation criteria:

A: No taste is sensed other than water

B: Taste different from water is sensed but cannot be specified

C: Taste is sensed

D: Extremely intense taste is sensed

Evaluation results are shown in Table 20 below.

Table 20 Taste recognition threshold of various phospholipid

|  | Concentration ($\mu$g/ mL) | A | B | C | D |
|---|---|---|---|---|---|
| Soybean n=8 | 3.125 | 6 | 1 | 1 | 0 |
|  | 6.25 | 3 | 4 | 1 | 0 |
|  | 12.5 | 3 | 2 | 3 | 0 |
|  | 25 | 1 | 3 | 4 | 0 |
|  | 50 | 0 | 2 | 4 | 2 |
| Oil palm n=8 | 25 | 3 | 3 | 1 | 0 |
|  | 50 | 2 | 3 | 2 | 0 |
|  | 100 | 3 | 1 | 3 | 0 |
|  | 150 | 1 | 2 | 2 | 2 |
|  | 200 | 1 | 2 | 1 | 3 |
| Rapeseed n=6 | 3.125 | 1 | 5 | 0 | 0 |
|  | 6.25 | 1 | 4 | 1 | 0 |
|  | 12.5 | 3 | 1 | 2 | 0 |
|  | 25 | 2 | 2 | 1 | 1 |
|  | 50 | 2 | 1 | 2 | 1 |
| Sunflower n=6 | 3.125 | 5 | 1 | 0 | 0 |
|  | 6.25 | 2 | 4 | 0 | 0 |
|  | 12.5 | 3 | 1 | 2 | 0 |
|  | 25 | 2 | 1 | 2 | 1 |
|  | 50 | 1 | 0 | 2 | 3 |

Based on the above-described results, a sum of persons having made evaluation as A and B was compared with a sum of persons having made evaluation as C and D, and a concentration at which the latter exceeded a half of the total number of the persons was set as an upper limit value of the taste recognition threshold, and a concentration one level lower than this concentration was set as a lower limit of the taste recognition threshold. Thus, the taste recognition thresholds of the phospholipids from soybean, oil palm, rapeseed, and sunflower were respectively determined as 12.5 to 25 $\mu$g/ mL, 100 to 150 $\mu$g/ mL, 25 to 50 $\mu$g/ mL and 12.5 to 25 $\mu$g/ mL.

[Example 5] Evaluation of sweetness enhancement effect by addition of sodium and phospholipid (2)

1 w/v% of sucrose, 3.5 w/v% of glucose, and 208 ppm of RebD were dissolved in pure water to obtain a control beverage (Control), each phospholipid in a concentration shown in Table 21 was added to the control beverage to obtain a test beverage 1, and 5 mM sodium gluconate was further added to the test beverage 1 to obtain a test beverage 2.

The sweetness enhancement effect was verified by sensorily comparing a sweetness intensity of such a test beverage 1 with a sweetness intensity of the control beverage, and by sensorily comparing a sweetness intensity of the test beverage 2 with the sweetness intensity of the test beverage 1. The evaluation was carried out by those (6 to 12 persons) who received sensory trainings as panelists by a three-alternative forced choice method for choosing "sweeter than the beverage to be compared", "beverage to be compared being sweeter", and "equivalent sweetness to beverage to be compared". Of those who carried out the evaluation, the breakdowns and ratios of persons who sensed the sweetness of the test beverage 1 enhanced as compared with the control beverage were shown in a result column of Table 21, and the breakdowns and ratios of persons who sensed the sweetness of the test beverage 2 enhanced as compared with the test beverage 1 were shown in a result column of Table 22.

Table 21 Sensory test results (Sweetness enhancement: Control beverage vs. Test beverage 1)

| Phospholipid | Concentration ($\mu$g/ mL) | Results | |
|---|---|---|---|
| | | Breakdown | % |
| Soybean | 6.25 | 6/10 | 60 |
| Oil palm | 6.25 | 3/6 | 50 |
| Rapeseed | 3.125 | 6/10 | 60 |
| Sunflower | 3.125 | 5/6 | 83 |

Table 22 Sensory test results (Sweetness enhancement: Test beverage 1 vs. Test beverage 2)

| Phospholipid | Concentration ($\mu$g/ mL) | Results | |
|---|---|---|---|
| | | Breakdown | % |
| Soybean | 6.25 | 4/5 | 80 |
| Oil palm | 6.25 | 4/6 | 67 |
| Rapeseed | 3.125 | 5/9 | 56 |
| Sunflower | 3.125 | 8/12 | 67 |

[Example 6] Evaluation of sweetness enhancement effect by addition of sodium and phospholipid (3)

1 w/v% of sucrose, 3.5 w/v% of glucose, and 208 ppm of MogV (purity of 95% or more (the same in the following examples), sweetness intensity of about 5.6) were dissolved in pure water to obtain a control beverage (Control, sweetness intensity of about 8.9), 6.25 $\mu$g/ mL of phospholipid from soybean was added to the control beverage to obtain a test beverage 1, and 5 mM sodium gluconate was further added to the test beverage 1 to obtain a test beverage 2. The sweetness enhancement effect was verified by sensorily comparing a sweetness intensity of the test beverage 1 with a sweetness intensity of the control beverage, and by sensorily comparing a sweetness intensity of the test beverage 2 with the sweetness intensity of the test beverage 1. The evaluation was carried out by those (7 persons) who received sensory trainings as panelists by a three-alternative forced choice method for choosing "sweeter than the beverage to be compared", "beverage to be compared being sweeter", and "equivalent sweetness to beverage to be compared". Of those who carried out the evaluation, the breakdowns and ratios of persons who sensed the sweetness of the test beverage 1 enhanced as compared with the control beverage, and the breakdowns and ratios of persons who sensed the sweetness of the test beverage 2 enhanced as compared with the test beverage 1 were shown in the result column of Table 23.

Table 23 Sensory test results (Sweetness enhancement)

| | Results | |
|---|---|---|
| | Breakdown | % |
| Control beverage vs. Test beverage1 | 5/7 | 71 |
| Test beverage 1 vs. Test beverage 2 | 4/7 | 57 |

[Example 7] Evaluation of texture increase effect by addition of sodium and phospholipid (1)

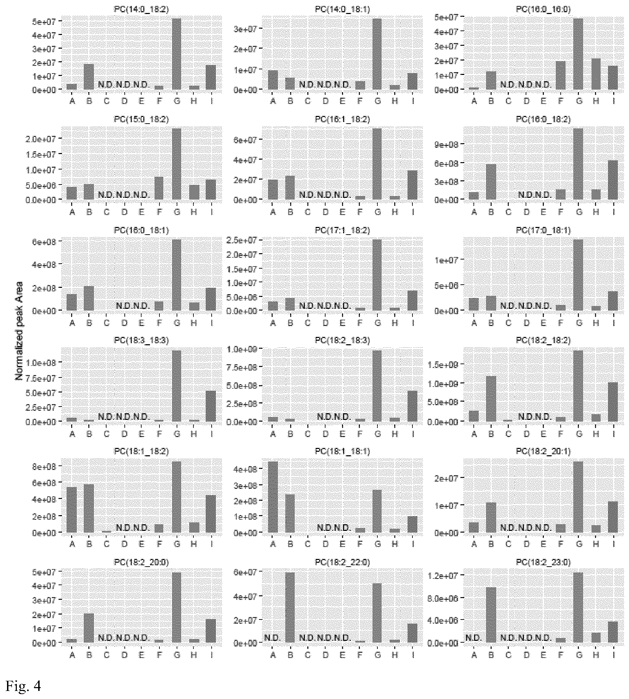

The control beverage and the test beverage 2 prepared in Example 5 were used to evaluate the texture of the test beverage 2 in the evaluation items of "Mouthfeel", "Thickness/Body", and "Mildness". Each evaluation item was scored in a range of -3 to 3 with an increment of 0.5 based on that a beverage with no difference from the control beverage was scored as 0. When the mouthfeel was more syrupy, thickness/body was sensed, or mildness was sensed as compared with the control beverage (Control), such a beverage was scored close to 3, when the sweetness was started to be sensed later, the mouthfeel was watery, the thickness/body was not sensed, or the mildness was not sensed as compared with the control beverage, such a beverage was scored close to -3. In other words, a score closer to 0 means that the beverage was closer to the control beverage. The evaluation was carried out by those (6 to 10 persons) who received sensory trainings as panelists. Results are illustrated in Figure 4 and Table 24. An area ratio shown in Table 24 indicates an area ratio in a radar chart obtained assuming that that of the control beverage was 1.

Table 24 Sensory test results (Texture)

|  | Soybean (Soy) n=10 | Oil palm (Palm) n=7 | Rapeseed (Rapeseed) n=6 | Sunflower (Sunflower) n=6 | Control beverage (Control) |
|---|---|---|---|---|---|
| Mouthfeel | 0.60 | 0.79 | 0.67 | 0.58 | 0 |
| Thickness/ Body | 0.80 | 0.57 | 0.92 | 0.50 | 0 |
| Mildness | 0.75 | 0.14 | 0.67 | 0.58 | 0 |
| Area ratio | 3.07 | 2.21 | 2.94 | 2.41 | 1 |

[Example 8] Evaluation of texture increase effect by addition of sodium and phospholipid (2)

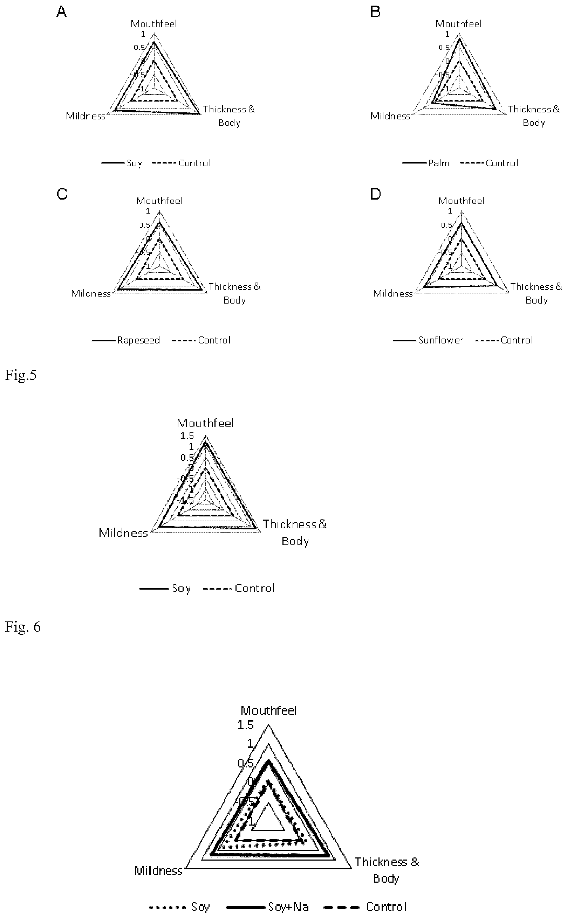

The control beverage and the test beverage 2 prepared in Example 6 were used to evaluate the texture of the test beverage 2 in the same manner as in Example 7. The evaluation was carried out by those (7 persons) who received sensory trainings as panelists. Results are illustrated in Figure 5 and Table 25. An area ratio shown in Table 25 indicates an area ratio in a radar chart obtained assuming that that of the control beverage was 1.

Table 25 Sensory test results (Texture)

|  | Test beverage 2 (Test) | Control beverage (Control) |
|---|---|---|
| Mouthfeel | 1.21 | 0 |
| Thickness/Body | 1.21 | 0 |
| Mildness | 1.00 | 0 |
| Area ratio | 3.10 | 1 |

[Example 9] Influence of addition of sodium and phospholipid on sweetness onset (1)

The control beverage and the test beverage 2 prepared in Example 5 were used to evaluate sweetness onset of the test beverage 2. Beverages were scored in a range of -3 to 3 with an increment of 0.5 based on that a beverage with no difference from the control beverage was scored as 0. When the sweetness onset is faster than the control beverage (Control), such a beverage was scored close to 3, and when the sweetness onset is slower than the control beverage, such a beverage was scored close to - 3. In other words, a score closer to 0 means that the beverage was closer to the control beverage. The evaluation was carried out by those (6 to 10 persons) who received sensory trainings as panelists. Results are shown in Table 26.

Table 26 Sensory test results (Sweetness onset)

| Soybean (Soy) n=10 | Oil palm (Palm) n=7 | Rapeseed (Rapeseed) n=6 | Sunflower (Sunflower) n=6 | Control beverage (Control) |
|---|---|---|---|---|
| 0.15 | -0.14 | 0.58 | -0.08 | 0 |

[Example 10] Influence of addition of sodium and phospholipid on sweetness onset (2)

The control beverage and the test beverage 2 prepared in Example 6 were used to evaluate sweetness onset of the test beverage 2 in a same manner as Example 9. The evaluation was carried out by those (7 persons) who received sensory trainings as panelists. The result was 0.07.

[Example 11] Quantification of sweetness enhancement effect by addition of phospholipid

1 w/v% of sucrose, 3.5 w/v% of glucose, and 208 ppm of RebD were dissolved in pure water to obtain a control beverage 1 (sweetness intensity: about 8.0), 5 mM of sodium gluconate was added to the control beverage 1 to obtain a control beverage 2, and 6.25 μg/mL of phospholipid (from soybean, SLP-white (material I of Example 2), the same in the following examples unless otherwise stated) was added to the control beverage 2 to obtain a test beverage. Sweetness intensities of the control beverages 1 and 2 and the test beverage were measured by those (n = 6) who received sensory trainings as panelists by employing Visual Analog Scale (VAS). Each panelist plotted the intensity of sweetness sensed at that time on a straight line with the left end defined as an intensity of "not sweet at all" and with the right end defined as an intensity of "nothing is sweeter than this", and a distance from the left end was used as an index of the sweetness intensity. As a result, assuming that the sweetness intensity of the control beverage 1 was 8, the sweetness intensity of the control beverage 2 was 10.6, and the sweetness intensity of the test beverage was 12.2, and thus, the sweetness intensity was enhanced by about 52% as compared with the control beverage 1.

[Example 12] Evaluation of sweetness enhancement effect by addition of sodium and phospholipid (4)

355.2 ppm of RebD was dissolved in pure water to obtain a control beverage (Control, C), 6.3 μg/mL of a phospholipid was added to the control beverage to obtain a test beverage 1 (T1), and 5 mM sodium gluconate (purity: 98% or more) was further added to the test beverage 1 to obtain a test beverage 2 (T2). The sweetness enhancement effect was verified by sensorily comparing a sweetness intensity of the test beverage 1 with a sweetness intensity of the control beverage, and by sensorily comparing a sweetness intensity of the test beverage 2 with the sweetness intensity of the test beverage 1. The evaluation was carried out by those (7 persons) who received sensory trainings as panelists by a three-alternative forced choice method for choosing "sweeter than the control beverage", "control beverage being sweeter", and "equivalent sweetness to the control beverage". Results are shown in Table 27. Of those who carried out the evaluation, 4 persons out of the 7 persons sensed that the sweetness of the test beverage 1 was equivalent or enhanced as compared with that of the control beverage (57%, with 1 person out of the 7 persons having sensed as equivalent (14%)), and 5 persons out of the 7 persons sensed that the sweetness of the test beverage 2 was equivalent or enhanced as compared with the test beverage 1 (71 %, with 1 person out of the 7 persons having sensed as equivalent (14%)).

Table 27 Sensory evaluation results

| Panelist | A | B | C | D | E | F | G |
|---|---|---|---|---|---|---|---|
| Control sample v. Test sample1 | C>T1 | C<T1 | C<T1 | C>T1 | C>T1 | C<T1 | C=T1 |
| Test sample 1 v. Test sample2 | T1=T2 | T1<T2 | T1>T2 | T1<T2 | T1<T2 | T1<T2 | T1>T2 |

[Example 13-1] Evaluation of texture increase effect by addition of sodium and phospholipid (3)

The control beverage and the test beverages 1 and 2 prepared in Example 12 were used to sensory evaluate the texture of the test beverages 1 and 2 in the same manner as in Example 7. The evaluation was carried out by those (7 persons) who received sensory trainings as panelists. As a result, the mouthfeel, the thickness/body, the mildness, and the area ratio were respectively 0.07, 0.14, 0.36, and 1.41 for the test beverage 1, and 0.57, 0.79, 0.71, and 2.85 for the test beverage 2 (Figure 6).

[Example 13-2] Influence of addition of sodium and phospholipid on sweetness onset (3)

The control beverage and the test beverages 1 and 2 prepared in Example 12 were used to sensory evaluate the sweetness onset of the test beverages 1 and 2 in the same manner as in Example 9. The evaluation was carried out by those (7 persons) who received sensory trainings as panelists. As a result, the sweetness onset was -0.21 for the test beverage 1, and 0.07 for the test beverage 2.

[Example 14] Influence of addition of phospholipid on taste quality and texture (1)

Components selected from sucrose, glucose, RebD, sodium gluconate, and a phospholipid were added, in ratios shown in Table 28 below, to 1000 g of a coffee extract, and the resultant was mixed to prepare a coffee beverage sample. Each beverage sample was refrigerated until use in the following sensory test.

Table 28 Composition of coffee beverage

| Beverage sample | 14-1 | 14-2 | 14-3 | 14-4 | 14-5 | 14-6 | 14-7 | 14-8 | 14-9 |
|---|---|---|---|---|---|---|---|---|---|
| Coffee extract (g) | 1000 | 1000 | 1000 | 1000 | 1000 | 1000 | 1000 | 1000 | 1000 |
| Sucrose (g) | 10 | 10 | 10 | 10 | 10 | 10 | 0 | 0 | 0 |
| Glucose (g) | 35 | 35 | 35 | 35 | 35 | 35 | 0 | 0 | 0 |
| RebD (g) | 0.1 | 0.3 | 0.1 | 0.1 | 0.3 | 0.3 | 0.208 | 0.208 | 0.208 |
| Sodium gluconate (g) | 0 | 0 | 1.897 | 1.897 | 1.897 | 1.897 | 0 | 1.897 | 1.897 |
| Phospholipid (mg) | 0 | 0 | 0 | 0 | 10 | 10 | 0 | 0 | 10 |

A taste quality and texture of a test beverage (beverage sample containing a phospholipid and/or sodium gluconate (such as beverage samples 14-3 and 14-5)) were evaluated on evaluation items of "Total sweetness", "Lingering", "Thickness/Body", "Mildness", "Mouthfeel", and "Off-taste". Each evaluation item was scored in a range of -3 to 3 with an increment of 0.5 based on that a beverage with no difference from a control beverage (beverage sample having the same composition as the test beverage except that a phospholipid and sodium gluconate were not contained (such as a beverage sample 14-1)) was scored as 0. When the sweetness was more sensed, the sweetness did not linger, the thickness was more sensed, the mouthfeel was syrupy, the mildness was more sensed, or an off-taste (bitterness, astringency) was less sensed as compared with the control beverage (Control), such a beverage was scored close to 3, and when the sweetness was less sensed, the sweetness lingered more, the thickness was less sensed, the mouthfeel was watery, the mildness was less sensed, or an off-taste (bitterness, astringency) was more sensed as compared with the control beverage, such a beverage was scored close to -3. In other words, a score closer to 0 means that the beverage was closer to the control beverage. The evaluation was carried out by those (5 persons) who received sensory trainings as panelists. Results are shown in Table 29.

Table 29 Sensory test results

| Beverage sample | 14-3 | 14-4 | 14-5 | 14-6 | 14-8 | 14-9 |
|---|---|---|---|---|---|---|
| Total sweetness | 0.40 | 1.20 | 0.40 | 1.00 | 0.50 | 0.80 |
| Lingering | 0.20 | 0.30 | 0.20 | 0.20 | 0.30 | 0.40 |
| Thickness/Body | 0.20 | 0.90 | 0.20 | 0.80 | 0.40 | 0.70 |
| Mildness | 0.40 | 0.50 | 0.30 | 0.90 | 0.20 | 0.60 |
| Mouthfeel | 0.20 | 0.50 | 0.30 | 0.70 | 0.00 | 0.60 |
| Off-taste | 0.60 | 1.00 | 0.40 | 0.70 | 0.20 | 0.40 |

[Example 15] Influence of addition of phospholipid on taste quality and texture (2)

Components selected from sucrose, glucose, RebA (purity: 95% or more), RebM (purity: 95% or more), MogV, a Luo han guo extract (aqueous extract of Luo han guo containing 40 wt% of MogV), sodium gluconate, and a phospholipid were added, in ratios shown in Table 30 below, to 1000 g of a coffee extract, and the resultant was mixed to prepare a coffee beverage sample. Each beverage sample was refrigerated until use in the following sensory test.

Table 30 Composition of coffee beverage

| Beverage sample | 15-1 | 15-2 | 15-3 | 15-4 | 15-5 | 15-6 |
|---|---|---|---|---|---|---|
| Coffee extract (g) | 1000 | 1000 | 1000 | 1000 | 1000 | 1000 |
| Sucrose (g) | 10 | 10 | 10 | 10 | 10 | 10 |

(continued)

| Beverage sample | 15-1 | 15-2 | 15-3 | 15-4 | 15-5 | 15-6 |
|---|---|---|---|---|---|---|
| Glucose (g) | 35 | 35 | 35 | 35 | 35 | 35 |
| RebA (g) | 0.208 | 0.208 | 0.208 | 0 | 0 | 0 |
| RebM (g) | 0 | 0 | 0 | 0.208 | 0.208 | 0.208 |
| MogV (g) | 0 | 0 | 0 | 0 | 0 | 0 |
| Luo han guo extract (g) | 0 | 0 | 0 | 0 | 0 | 0 |
| Sodium gluconate (g) | 0 | 1.897 | 1.897 | 0 | 1.897 | 1.897 |
| Phospholipid (mg) | 0 | 0 | 10 | 0 | 0 | 10 |
| Beverage sample | 15-7 | 15-8 | 15-9 | 15-10 | 15-11 | 15-12 |
| Coffee extract (g) | 1000 | 1000 | 1000 | 1000 | 1000 | 1000 |
| Sucrose (g) | 10 | 10 | 10 | 10 | 10 | 10 |
| Glucose (g) | 35 | 35 | 35 | 35 | 35 | 35 |
| RebA (g) | 0 | 0 | 0 | 0 | 0 | 0 |
| RebM (g) | 0 | 0 | 0 | 0 | 0 | 0 |
| MogV (g) | 0.208 | 0.208 | 0.208 | 0 | 0 | 0 |
| Luo han guo extract (g) | 0 | 0 | 0 | 0.208 | 0.208 | 0.208 |
| Sodium gluconate (g) | 0 | 1.897 | 1.897 | 0 | 1.897 | 1.897 |
| Phospholipid (mg) | 0 | 0 | 10 | 0 | 0 | 10 |

A taste quality and texture of a test beverage (beverage sample containing a phospholipid and/or sodium gluconate (such as beverage samples 15-2 and 15-3)) were evaluated in the same manner as in Example 14 with reference to a control beverage (beverage sample having the same composition as the test beverage except that a phospholipid and sodium gluconate were not contained (such as a beverage sample 15-1)). Results are shown in Table 31.

Table 31 Sensory test results

| Beverage sample | 15-2 | 15-3 | 15-5 | 15-6 | 15-8 | 15-9 | 15-11 | 15-12 |
|---|---|---|---|---|---|---|---|---|
| Total sweetness | 0.40 | 0.90 | 0.60 | 1.20 | 0.20 | 0.90 | 0.40 | 0.90 |
| Lingering | 0.20 | 0.20 | 0.30 | 0.20 | 0.20 | 0.30 | 0.20 | 0.30 |
| Thickness/Body | 0.30 | 1.00 | 0.50 | 0.80 | 0.40 | 0.90 | 0.20 | 0.60 |
| Mildness | 0.40 | 0.70 | 0.50 | 0.80 | 0.10 | 0.60 | 0.30 | 0.70 |
| Mouthfeel | 0.40 | 0.70 | 0.40 | 0.70 | 0.10 | 0.70 | 0.20 | 0.50 |
| Off-taste | 0.40 | 0.70 | 0.70 | 0.80 | 0.60 | 0.50 | 0.40 | 0.80 |

[Example 16] Influence of addition of phospholipid on taste quality and texture (3)

Components selected from sucrose, glucose, RebD, sodium gluconate, and a phospholipid were added, in ratios shown in Table 32 below, to 1000 g of a coffee extract, and the resultant was mixed to prepare a coffee beverage sample. Each beverage sample was refrigerated until use in the following sensory test.

Table 32 Composition of coffee beverage

| Beverage sample | 16-1 | 16-2 | 16-3 | 16-4 | 16-5 | 16-6 | 16-7 |
|---|---|---|---|---|---|---|---|
| Coffee extract (g) | 1000 | 1000 | 1000 | 1000 | 1000 | 1000 | 1000 |
| Sucrose (g) | 10 | 10 | 10 | 10 | 10 | 10 | 10 |

(continued)

| Beverage sample | 16-1 | 16-2 | 16-3 | 16-4 | 16-5 | 16-6 | 16-7 |
|---|---|---|---|---|---|---|---|
| Glucose (g) | 35 | 35 | 35 | 35 | 35 | 35 | 35 |
| RebD (g) | 0.208 | 0.208 | 0.208 | 0.208 | 0.208 | 0.208 | 0.208 |
| Sodium gluconate (g) | 0 | 0.948 | 1.897 | 0.948 | 0.948 | 1.897 | 1.897 |
| Phospholipid (mg) | 0 | 0 | 0 | 6.25 | 10 | 6.25 | 10 |
| Brix | 5.34 | 5.41 | 5.51 | 5.44 | 5.44 | 5.55 | 5.54 |
| Energy (Kcal/100 mL) | 21.36 | 21.64 | 22.04 | 21.77 | 21.77 | 22.21 | 22.17 |

A taste quality and texture of test beverages (beverage samples 16-2 to 16-7) compared to the control beverage (beverage sample 16-1) were evaluated in the same manner as in Example 14. Results are shown in Table 33.

Table 33 Sensory test results

| Beverage sample | 16-2 | 16-3 | 16-4 | 16-5 | 16-6 | 16-7 |
|---|---|---|---|---|---|---|
| Total sweetness | 0.50 | 0.67 | 0.75 | 0.58 | 0.83 | 1.08 |
| Lingering | 0.00 | 0.08 | 0.08 | 0.08 | -0.17 | 0.08 |
| Thickness/Body | 0.42 | 0.42 | 0.67 | 0.67 | 0.92 | 1.00 |
| Mildness | 0.25 | 0.25 | 0.42 | 0.50 | 0.83 | 0.75 |
| Mouthfeel | 0.17 | 0.17 | 0.42 | 0.42 | 0.75 | 0.83 |
| Off-taste | 0.17 | 0.42 | 0.50 | 0.33 | 0.50 | 0.67 |

[Example 17] Influence of addition of phospholipid on taste quality and texture (4)

Components selected from skimmed milk, sucrose, glucose, RebD, sodium gluconate, and a phospholipid were added, in ratios shown in Table 34 below, to 1000 g of a coffee extract, and the resultant was mixed to prepare a sample of coffee beverage with milk. Each beverage sample was refrigerated until use in the following sensory test.

Table 34 Composition of coffee beverage with milk

| Beverage sample | 17-1 | 17-2 | 17-3 | 17-4 | 17-5 | 17-6 | 17-7 |
|---|---|---|---|---|---|---|---|
| Coffee extract (g) | 1000 | 1000 | 1000 | 1000 | 1000 | 1000 | 1000 |
| Skimmed milk (g) | 18.9 | 18.9 | 18.9 | 18.9 | 18.9 | 18.9 | 18.9 |
| Sucrose (g) | 10 | 10 | 10 | 10 | 10 | 10 | 10 |
| Glucose (g) | 35 | 35 | 35 | 35 | 35 | 35 | 35 |
| RebD (g) | 0.208 | 0.208 | 0.208 | 0.208 | 0.208 | 0.208 | 0.208 |
| Sodium gluconate (g) | 0 | 1.897 | 3.79 | 1.897 | 1.897 | 3.79 | 3.79 |
| Phospholipid (mg) | 0 | 0 | 0 | 6.25 | 10 | 6.25 | 10 |
| Brix | 7.18 | 7.38 | 7.57 | 7.37 | 7.38 | 7.60 | 7.59 |
| Energy (Kcal/100 mL) | 28.72 | 29.52 | 30.28 | 29.49 | 29.53 | 30.41 | 30.37 |

A taste quality and texture of test beverages (beverage samples 17-2 to 17-7) compared to the control beverage (beverage sample 17-1) were evaluated in the same manner as in Example 14. Results are shown in Table 35.

Table 35 Sensory test results

| Beverage sample | 17-2 | 17-3 | 17-4 | 17-5 | 17-6 | 17-7 |
|---|---|---|---|---|---|---|
| Total sweetness | 0.33 | 0.75 | 1.00 | 0.75 | 0.83 | 0.92 |
| Lingering | 0.17 | 0.00 | -0.58 | 0.17 | -0.17 | -0.08 |
| Thickness/Body | 0.33 | 0.33 | 0.67 | 0.50 | 0.75 | 0.67 |
| Mildness | 0.00 | 0.17 | 0.83 | 0.17 | 0.50 | 0.67 |
| Mouthfeel | 0.25 | 0.25 | 0.83 | 0.25 | 0.75 | 0.42 |
| Off-taste | 0.17 | 0.17 | 0.00 | 0.58 | 0.25 | 0.50 |

[Example 18] Influence of addition of phospholipid on taste quality and texture (5)

Components selected from sucrose, glucose, RebD, sodium gluconate, and a phospholipid (paste lecithin from rapeseed (material A of Example 2) or powder lecithin from sunflower (material B of Example 2)) were added, in ratios shown in Table 36 below, to 1000 g of a coffee extract, and the resultant was mixed to prepare a coffee beverage sample. Each beverage sample was refrigerated until use in the following sensory test.

Table 36 Composition of coffee beverage

| Beverage sample | 18-1 | 18-2 | 18-3 | 18-4 | 18-5 | 18-6 | 18-7 |
|---|---|---|---|---|---|---|---|
| Coffee extract (g) | 1000 | 1000 | 1000 | 1000 | 1000 | 1000 | 1000 |
| Sucrose (g) | 10 | 10 | 10 | 10 | 10 | 10 | 10 |
| Glucose (g) | 35 | 35 | 35 | 35 | 35 | 35 | 35 |
| RebD (g) | 0.208 | 0.208 | 0.208 | 0.208 | 0.208 | 0.208 | 0.208 |
| Sodium gluconate (g) | 0 | 0.948 | 1.897 | 0.948 | 0.948 | 1.897 | 1.897 |
| Phospholipid from rapeseed (mg) | 0 | 0 | 0 | 3.125 | 0 | 3.125 | 0 |
| Phospholipid from sunflower (mg) | 0 | 0 | 0 | 0 | 3.125 | 0 | 3.125 |
| Brix | 5.30 | 5.38 | 5.50 | 5.38 | 5.39 | 5.47 | 5.49 |
| Energy (Kcal/100 mL) | 21.2 | 21.52 | 22.00 | 21.52 | 21.56 | 21.88 | 21.96 |

A taste quality and texture of test beverages (beverage samples 18-2 to 18-7) compared to the control beverage (beverage sample 18-1) were evaluated in the same manner as in Example 14. Results are shown in Table 37.

Table 37 Sensory test results

| Beverage sample | 18-2 | 18-3 | 18-4 | 18-5 | 18-6 | 18-7 |
|---|---|---|---|---|---|---|
| Total sweetness | 0.60 | 0.40 | 0.90 | 0.80 | 1.20 | 1.40 |
| Lingering | 0.00 | 0.00 | 0.20 | 0.10 | 0.20 | 0.20 |
| Thickness/Body | 0.40 | 0.50 | 0.80 | 0.50 | 1.00 | 0.70 |
| Mildness | 0.60 | 0.10 | 0.30 | 0.60 | 0.60 | 0.80 |
| Mouthfeel | 0.60 | 0.10 | 0.30 | 0.40 | 0.80 | 0.90 |
| Off-taste | 0.20 | 0.50 | 0.10 | 0.50 | 0.30 | 0.40 |

[Example 19] Influence of addition of phospholipid on taste quality and texture (6)

Components selected from skimmed milk, sucrose, glucose, RebD, sodium gluconate, and a phospholipid (paste lecithin from rapeseed (material A of Example 2) or powder lecithin from sunflower (material B of Example 2)) were added, in ratios shown in Table 38 below, to 1000 g of a coffee extract, and the resultant was mixed to prepare a sample of coffee beverage with milk. Each beverage sample was refrigerated until use in the following sensory test.

Table 38 Composition of coffee beverage with milk

| Beverage sample | 19-1 | 19-2 | 19-3 | 19-4 | 19-5 | 19-6 | 19-7 |
|---|---|---|---|---|---|---|---|
| Coffee extract (g) | 1000 | 1000 | 1000 | 1000 | 1000 | 1000 | 1000 |
| Skimmed milk (g) | 18.9 | 18.9 | 18.9 | 18.9 | 18.9 | 18.9 | 18.9 |
| Sucrose (g) | 10 | 10 | 10 | 10 | 10 | 10 | 10 |
| Glucose (g) | 35 | 35 | 35 | 35 | 35 | 35 | 35 |
| RebD (g) | 0.208 | 0.208 | 0.208 | 0.208 | 0.208 | 0.208 | 0.208 |
| Sodium gluconate (g) | 0 | 1.897 | 3.79 | 1.897 | 1.897 | 3.79 | 3.79 |
| Phospholipid from rapeseed (mg) | 0 | 0 | 0 | 3.125 | 0 | 3.125 | 0 |
| Phospholipid from sunflower (mg) | 0 | 0 | 0 | 0 | 3.125 | 0 | 3.125 |
| Brix | 7.12 | 7.31 | 7.50 | 7.30 | 7.31 | 7.50 | 7.52 |
| Energy (Kcal/100 mL) | 28.48 | 29.24 | 30.00 | 29.20 | 29.24 | 30.00 | 30.08 |

A taste quality and texture of test beverages (beverage samples 19-2 to 19-7) compared to the control beverage (beverage sample 19-1) were evaluated in the same manner as in Example 14. Results are shown in Table 39.

Table 39 Sensory test results

| Beverage sample | 19-2 | 19-3 | 19-4 | 19-5 | 19-6 | 19-7 |
|---|---|---|---|---|---|---|
| Total sweetness | 0.40 | 0.60 | 0.90 | 0.80 | 1.20 | 1.30 |
| Lingering | 0.10 | 0.00 | 0.10 | 0.00 | 0.10 | 0.30 |
| Thickness/Body | 0.40 | 0.40 | 0.70 | 0.70 | 0.80 | 0.80 |
| Mildness | 0.50 | 0.50 | 0.50 | 0.60 | 0.70 | 0.80 |
| Mouthfeel | 0.40 | 0.50 | 0.60 | 0.80 | 0.80 | 1.10 |
| Off-taste | 0.20 | 0.20 | 0.40 | 0.40 | 0.70 | 0.50 |

## Claims

1. An oral composition comprising:

   (a) a high-intensity sweetener in an amount corresponding to a sweetness intensity X1,
   (b) an intrinsic phospholipid,
   (c) 60 mg/100 mL or less of sodium, and
   (d) a foreign phospholipid in an amount less than a taste recognition threshold,

   wherein the oral composition has a sweetness of a sweetness intensity X2 exhibited by the components (a) and (b), and a sweetness of a sweetness intensity X3 exhibited by the components (a) to (d), and $0.1 < X2 < X3$ is satisfied.

2. The oral composition according to claim 1, wherein the phospholipid has a fatty acid having 14 or more carbon atoms.

3. The oral composition according to claim 1 or 2, having a sweetness of a sweetness intensity X4 exhibited by the components (a) to (c), wherein $0.1 < X2 < X4 < X3$ is satisfied.

4. The oral composition according to any one of claims 1 to 3, further comprising a low-intensity sweetener.

5. The oral composition according to any one of claims 1 to 4, wherein the high-intensity sweetener comprises a high-intensity sweetener selected from a stevia extract, a Luo han guo extract, a steviol glycoside, a mogroside, and a combination thereof.

6. The oral composition according to claim 4 or 5, wherein the low-intensity sweetener comprises a low-intensity sweetener selected from glucose, sucrose, fructose, maltose, a high-fructose corn syrup, lactose, psicose, allose, tagatose, xylose, ribose, and a combination thereof.

7. The oral composition according to any one of claims 1 to 6, which is a beverage.

8. The oral composition according to claim 7, wherein the beverage is selected from a coffee beverage, a milk beverage, a milk-based beverage, and a soymilk beverage.

9. The oral composition according to any one of claims 1 to 8, wherein the intrinsic phospholipid is a phospholipid from coffee bean, and the foreign phospholipid is a phospholipid from a material selected from soybean, rapeseed, sunflower, oil palm, sesame, corn, peanut, olive, cotton, linum, egg yolk, and milk.

10. A method for producing the oral composition according to any one of claims 1 to 9 comprising, to a raw material of the oral composition comprising the intrinsic phospholipid:

   (a) adding the high-intensity sweetener in an amount corresponding to a sweetness intensity X1,
   (b) adding the sodium to obtain a sodium content in the composition of 60 mg/100 mL or less, and
   (c) adding the foreign phospholipid in an amount less than a taste recognition threshold.

11. A method for enhancing a sweetness of an oral composition provided by a high-intensity sweetener, the method comprising, in a production of an oral composition comprising an intrinsic phospholipid:

   (a) adding a high-intensity sweetener in an amount of a taste recognition threshold or more,
   (b) adding sodium to obtain a sodium content in the composition of 60 mg/100 mL or less, and
   (c) adding a foreign phospholipid in an amount less than a taste recognition threshold.

12. An oral composition comprising:

   (a) about 20 to about 600 ppm of a high-intensity sweetener,
   (b) an intrinsic phospholipid,
   (c) 60 mg/100 mL or less of sodium, and
   (d) less than about 250 $\mu$g/mL of a phospholipid.

Fig. 1

Fig. 2

Fig. 3

Fig. 4

A

Mouthfeel

Mildness — Thickness & Body

—— Soy ----- Control

B

Mouthfeel

Mildness — Thickness & Body

—— Palm ----- Control

C

Mouthfeel

Mildness — Thickness & Body

—— Rapeseed ----- Control

D

Mouthfeel

Mildness — Thickness & Body

—— Sunflower ----- Control

Fig.5

Mouthfeel

Mildness — Thickness & Body

—— Soy ----- Control

Fig. 6

Mouthfeel

Mildness — Thickness & Body

······ Soy —— Soy+Na --- Control

# EP 4 268 614 A1

## INTERNATIONAL SEARCH REPORT

International application No.

**PCT/JP2021/048994**

### A. CLASSIFICATION OF SUBJECT MATTER

*A23L 27/00*(2016.01)i; *A61K 47/02*(2006.01)i; *A61K 47/24*(2006.01)i; *A61K 47/26*(2006.01)i; *A61K 47/28*(2006.01)i; *A61K 47/46*(2006.01)i; *A23L 2/60*(2006.01)i
FI: A23L27/00 E; A23L27/00 101; A23L27/00 101A; A23L27/00 101Z; A23L2/60; A23L2/00 C; A61K47/46; A61K47/26; A61K47/28; A61K47/24; A61K47/02

According to International Patent Classification (IPC) or to both national classification and IPC

### B. FIELDS SEARCHED

Minimum documentation searched (classification system followed by classification symbols)

A23L27/00; A61K47/02; A61K47/24; A61K47/26; A61K47/28; A61K47/46; A23L2/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | US 6368651 B1 (THE NUTRASWEET COMPANY) 09 April 2002 (2002-04-09) claims, column 3, last paragraph, examples | 1-4, 6-8, 10-11 |
| Y | claims, column 3, last paragraph, examples | 5-10 |
| X | JP 2016-529893 A (TATE & LYLE INGREDIENTS AMERICAS LLC) 29 September 2016 (2016-09-29) claims, paragraph [0030], examples | 1-12 |
| Y | claims, paragraph [0030], examples | 5-10 |
| X | JP 2001-346555 A (SENJU SHOKUHIN KK) 18 December 2001 (2001-12-18) example 2 | 12 |
| X | CN 103689741 A (SERICULTURE & AGRI-FOOD RESEARCH INSTITUTE GAAS) 02 April 2014 (2014-04-02) claims | 12 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 February 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2021/048994**

## C.    DOCUMENTS CONSIDERED TO BE RELEVANT

| Category* | Citation of document, with indication, where appropriate, of the relevant passages | Relevant to claim No. |
|---|---|---|
| X | JP 2003-265103 A (SNOW BRAND MILK PRODUCTS CO., LTD.) 24 September 2003 (2003-09-24)<br>    examples | 12 |
| A | ZHOU, L. et al. Effect of heat treatment on the content of individual phospholipids in coffee beans. Food Chemisty. 2013, vol. 141, pp. 3846-3850<br>    1. Introduction | 1-12 |
| A | 鈴木秀男. 植物油製造プロセスとリン回収. 生物工学. 2012, vol. 90, no. 8, pp. 488-492, (SUZUKI, Hideo), non-official translation (Plant Oil Production Processes and Phosphorous Recovery. Bio-Engineering.)<br>    p. 488 | 1-12 |
| A | WO 2018/225817 A1 (SUNTORY HOLDINGS LTD.) 13 December 2018 (2018-12-13)<br>    claims | 1-12 |
| A | JP 2003-210147 A (ASAHI SOFT DRINKS CO., LTD.) 29 July 2003 (2003-07-29)<br>    paragraphs [0045], [0046] | 1-12 |

Form PCT/ISA/210 (second sheet) (January 2015)

## INTERNATIONAL SEARCH REPORT
### Information on patent family members

International application No.

**PCT/JP2021/048994**

| Patent document cited in search report | | | Publication date (day/month/year) | Patent family member(s) | | | Publication date (day/month/year) |
|---|---|---|---|---|---|---|---|
| US | 6368651 | B1 | 09 April 2002 | WO | 2000/069283 | A1 | |
| | | | | AU | 5127800 | A | |
| JP | 2016-529893 | A | 29 September 2016 | US claims, paragraph [0043], examples | 2016/0198749 | A1 | |
| | | | | WO | 2015/015210 | A1 | |
| | | | | EP | 3032966 | A | |
| JP | 2001-346555 | A | 18 December 2001 | (Family: none) | | | |
| CN | 103689741 | A | 02 April 2014 | (Family: none) | | | |
| JP | 2003-265103 | A | 24 September 2003 | (Family: none) | | | |
| WO | 2018/225817 | A1 | 13 December 2018 | US claims | 2020/0205451 | A1 | |
| | | | | EP | 3636080 | A | |
| JP | 2003-210147 | A | 29 July 2003 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018225817 A
- WO 2020116624 A
- WO 2020116626 A
- WO 2020116627 A
- WO 2020116628 A
- WO 2020116633 A
- WO 2020116634 A
- WO 2020116637 A
- WO 2020116638 A
- WO 2020116639 A
- WO 2020116641 A
- JP 2020218723 A
- JP 2021144320 A

**Non-patent literature cited in the description**

- **ZHAO G. Q. ; ZHANG Y. ; HOON M. A. ; CHANDRASHEKAR J. ; ERLENBACH I. ; RYBA N. J. P. ; ZUKER1 C. S.** *Cell,* 2003, vol. 115, 255-266
- **LI X ; STASZEWSKI L ; XU H ; DURICK K ; ZOLLER M ; ADLER E.** *Proc Natl Acad Sci USA.,* 2002, vol. 99 (7), 4692-4696
- **FERNSTROM J. D. ; MUNGER S. D. ; SCLAFANI A. ; DE ARAUJO I. E. ; ROBERTS A. ; MOLINARY S.** *J. Nutr.,* 2012, vol. 142, 11345-11415
- **TOYOTA.** Construction of a Screening Test for Gustatory Function in Four Basic Tastes. *The journal of Japanese Society of Stomatognathic Function,* 2014, vol. 20, 115-129
- *Eur J Clin Nutr,* 2004, vol. 58, 629-636
- **YUKI YAMAUCHI et al.** WHOLE MOUTH GUSTATORY TEST (PART1) - BASIC CONSIDERATIONS AND PRINCIPAL COMPONENT ANALYSIS. *Journal of The Oto-Rhino-Laryngological Society of Japan,* 1995, vol. 98 (1), 119-129
- Comparisons of the taste sensitivity between three generations. **REIKO OHMORI.** The bulletin of the Faculty of Education. Utsunomiya University, 2013, vol. 63, 201-210